# EUROPÄISCHE PATENTSCHRIFT

(11) **EP 2 909 815 B1**
(45) Veröffentlichungstag und Bekanntmachung des Hinweises auf die Patenterteilung: **20.12.2017**
(21) Anmeldenummer: 13779746.0
(22) Anmeldetag: 17.10.2013
(51) Int. Cl.: H04W 4/12, H04L 29/08, G07B 15/02, G07B 15/06, G07C 5/00, G07C 5/08

(54) **VERFAHREN UND EINRICHTUNGEN ZUR VERKEHRSBEDINGTEN MAUTERHEBUNG**
METHOD AND DEVICES FOR TRAFFIC-DEPENDENT TOLL COLLECTION
PROCÉDÉ ET INSTALLATIONS DE SOULÈVEMENT DE PÉAGE CONDITIONNÉ PAR LE TRAFIC

(30) Priorität: 17.10.2012 EP 12075118
(43) Veröffentlichungstag der Anmeldung: 26.08.2015
(73) Patentinhaber: Toll Collect GmbH, 10785 Berlin (DE)
(72) Erfinder: LORENZEN, Dirk, 16798 Fürstenberg (DE)
(86) Internationale Anmeldenummer: PCT/EP2013/003162
(87) Internationale Veröffentlichungsnummer: WO 2014/060117

(56) Entgegenhaltungen:
- WO-A1-2011/129800
- DE-A1- 10 258 653
- DE-A1-102005 058 033
- DE-A1-102007 035 737
- DE-A1-102007 035 738

## Beschreibung

Diese Patentanmeldung beansprucht die Priorität der europäischen Patentanmeldung Nr.12 075 118.5 vom 17. Oktober 2012, zu der ein europäischer Recherchenbericht erstellt wurde, der als einschlägige Dokumente von besonderer Bedeutung nur die Offenlegungsschriften DE 10 2007 035 738 A1 und WO 2011 129 800 A1 nennt.
Diese Dokumente werden im Laufe der nachfolgenden Beschreibung gewürdigt.

Die Erfindung betrifft ein Verfahren sowie eine fahrzeugseitige und eine zentrale Einrichtungen eines Mautsystems zur Erhebung von verkehrsbedingten, insbesondere auf einen Streckenabschnitt bezogenen, Mautgebühren für Fahrzeuge, die am Verkehr beteiligt sind und insbesondere den besagten Streckenabschnitt befahren.

Dabei unterscheiden sich verkehrsbedingte Mautgebühren, die auch als verkehrsabhängige Mautgebühren bezeichnet werden können, von den üblichen nutzungsbedingten (nutzungsabhängigen) Mautgebühren insofern, als dass nutzungsbedingte Mautgebühren von jedem Verkehrsteilnehmer für die bloße Nutzung eines mautpflichtigen Infrastrukturobjektes (beispielsweise eine Straße) unabhängig von weiteren Verkehrsteilnehmen zu zahlen sind, wohingegen verkehrsbedingte Mautgebühren zuzüglich oder abzüglich der nutzungsbedingten Mautgebühr (falls diese vorgesehen ist) von einem Verkehrsteilnehmer in Abhängigkeit von der Anwesenheit wenigstens eines weiteren Verkehrsteilnehmers auf dem besagten mautpflichtigen Infrastrukturobjekt zu zahlen oder zu erstatten sind. Insofern bedeuten verkehrsbedingte Mautgebühren stets eine Veränderung der - soweit vorgesehenen - ohnehin für ein einzelnes Fahrzeug fälligen nutzungsbedingten Mautgebühr, wobei die verkehrsbedingte Mautgebühr bei Eintreten eines außerordentlichen Verkehrsereignisses, an dem mehrere Fahrzeuge beteiligt sind, fällig wird. In diesem Sinne wird der Begriff Verkehr als Ausdruck für die gleichzeitige Nutzung eines Infrastrukturobjektes durch mehrere Fahrzeuge verwendet.

Aus umwelttechnischer und logistischer Sicht besteht ein Bedarf, den Verkehrsfluss auf Streckenabschnitten eines Straßennetzes aufrecht zu erhalten und die Luftverschmutzung durch Abgase der Fahrzeuge unterhalb eines Grenzwertes zu halten. Eine Möglichkeit zur Beeinflussung des Fahrverhaltens und/ oder zur Kompensation volkswirtschaftlicher Nachteile durch eine erhöhte Verkehrsdichte beziehungsweise durch einen erniedrigten Verkehrsfluss besteht darin, auf von stockendem Verkehr und erhöhter Abgasbelastung bedrohten Streckenabschnitten eine verkehrsdichteabhängige Mautgebühr vorzusehen. Dazu müssen Parameter, die verkehrsdichte-/ verkehrsflussabhängig sind oder eine Verkehrsdichte beziehungsweise einen Verkehrsfluss repräsentieren, gemessen und ausgewertet werden.

Aus den Offenlegungsschriften WO 2002 071 338 A1, EP 1 482 451 A2, DE 196 34 340 A1 und WO 2009 149 099 A1 ist bekannt, solche Verkehrsdichteparameter kontinuierlich mittels straßenseitiger Vorrichtungen und/ oder einer zentralen Vorrichtung auf einem ersten Straßenabschnitt zu überwachen, und bei Überschreitung oder Unterschreitung eines Schwellwertes des Verkehrsdichteparameters eine geänderte Mautgebühr für den ersten Straßenabschnitt festzulegen und einem Fahrzeugführer auf einem dem ersten Abschnitt entgegen der Fahrtrichtung vorhergehenden Straßenabschnitt anzuzeigen.

Diese Anzeige kann straßenseitig an dem betreffenden vorhergehenden Straßenabschnitt erfolgen (WO 2009 149 099 A1), oder auf der OBU, nachdem über eine Verfolgung der Position von OBUs per Mobilfunk an die OBU in ein Fahrzeug auf dem betreffenden vorhergehenden Abschnitt übertragen wurde (WO 2002 071 338 A1, EP 1482 451 A2) oder über Rundfunk, ohne die Fahrzeuge zentralseitig identifizieren zu müssen (DE 196 34 340 A1).
Den Verfahren gemeinsam haftet der nachteilige Umstand an, dass Verkehrsdichte- oder Verkehrsflussparameter zum einen durch straßenseitige Vorrichtung und zum anderen kontinuierlich zentral erfasst werden müssen, was einen sehr hohen infrastrukturtechnischen Aufwand bedeutet. Ferner erscheint es rechtlich fragwürdig, erhöhte Mautgebühren von auf einem dem überlasteten Streckenabschnitt vorhergehenden Streckenabschnitt nachfolgenden Fahrzeugen zu verlangen, während die an der Verstopfung/ der Umweltbelastung auf dem betroffenen Streckenabschnitt beteiligten Fahrzeuge ihr nicht unterworfen sein sollen.
Noch problematischer erscheint der Umstand, von einem den betroffenen Streckenabschnitt befahrenden ersten Fahrzeug eine erhöhte Mautgebühr zu erheben, wenn der Verkehr zu diesem Zeitpunkt auf dem betroffenen Streckenabschnitt wieder zum Fließen gekommen ist, sprich: die eine Mauterhöhung auslösende Bedingung zum Nutzungszeitpunkt bereits wieder weggefallen ist. Besonders paradox wirkt in diesem Zusammenhang eine Situation, in der das erste Fahrzeug auf dem vorhergehenden Abschnitt von einem zweiten Fahrzeug überholt wird, welches bei Befahren des vorhergehenden Streckenabschnitts aufgrund zwischenzeitlich registrierter Stau-Auflösung im Gegensatz zu dem ersten Fahrzeug keine Mauterhöhungsnachricht mehr erhalten hat.
Dabei kann es auch nicht Aufgabe eines Mautbetreibers oder Mauterhebungsdienstleisters sein, Fahrzeuge auf vorhergehenden Streckenabschnitten über eine situationsbedingt auftretende erhöhte Mautgebühr aufzuklären, die auf einem folgenden Streckenabschnitt erhoben wird. Über die gemeinhin möglichen, situationsbedingt auftretenden, erhöhten Mautgebühren kann der Fahrzeugführer nämlich auch durch die allgemeinen Geschäftsbedingungen aufgeklärt werden, mit denen eine obere Grenze an möglichen Mautgebühren für einen Streckenabschnitt bekannt gegeben wird.
Der Hinweis auf verkehrsbedingt auftretende außerordentliche Verkehrssituationen in vorausliegenden Streckenabschnitten, die zu erhöhten Mautgebühren führen (können), kann stattdessen Verkehrsnachrichtendiensten vorbehalten bleiben.
Die Offenlegungsschrift WO 2011 129 800 A1, die keinen Bezug zu einem Mautsystem aufweist, schlägt vor, kontinuierlich Daten bezüglich des Fahrverhaltens des Fahrers eines Fahrzeugs (Fahrzeugkennung, aktuelle Fahrzeugposition, aktuelle Fahrzeuggeschwindigkeit) von diesem Fahrzeug zu empfangen und diese Daten zum einen auf einen Verstoß zu untersuchen und zum anderen zur Analyse hinsichtlich orts- oder zeitabhängiger Verkehrsbedingungen zu verwenden. Die DE 10 2007 035 737 zeigt ein Verfahren zur Überprüfung der Korrektheit einer Mautgebührenberechnung. Unabhängig davon ist es die Aufgabe der Erfindung, Verfahren und Einrichtungen zur Erhebung einer verkehrsbedingten. Mautgebühr zu schaffen, die die genannten Nachteile umgeht.
Insbesondere ist es Aufgabe der Erfindung, in einem Mautsystem zur Erhebung verkehrsbedingter Mautgebühren ohne eine straßenseitige Verkehrserfassungsinfrastruktur auszukommen, und ein Verfahren und Einrichtungen bereitzustellen, mit denen eine verkehrsdichtebedingt erhöhte Maut von denjenigen Fahrzeugen auf einem Streckenabschnitt erhoben wird, die an der erhöhten Verkehrsdichte und/ oder Luftverschmutzung auf dem betreffenden Streckenabschnitt beteiligt sind, wobei das Kommunikationsvolumen innerhalb eines an diesem Verfahren beteiligten Funknetzes niedrig zu halten ist.
Diese Aufgabe wird gelöst durch ein Verfahren nach Anspruch 1, eine Fahrzeugeinrichtung nach Anspruch 12 sowie eine zentrale Datenverarbeitungseinrichtung nach Anspruch 14.

Die unabhängigen Erzeugnisansprüche 12 und 14 stellen zwei Alternativen - eine mobile dezentrale Einrichtung und eine stationäre zentrale Einrichtung - zur Verwirklichung der einzigen erfinderischen Idee, die durch den Verfahrensanspruch 1 vergegenständlicht ist, dar.
Bevorzugte Ausführungsformen sind Gegenstand der abhängigen Ansprüche.

Die Erfindung wird hinsichtlich ihrer verschiedenen Aspekte nachfolgend näher erläutert, wobei Merkmale, Ausführungsformen und Vorteile eines Aspektes der Erfindung als übertragbar auf alle anderen Aspekte der Erfindung gelten, soweit eine solche Übertragung nicht zu einem Widerspruch führt.

Gemäß einem ersten Aspekt der Erfindung ist ein Verfahren zur Erhebung einer verkehrsbedingten Mautgebühr für wenigstens ein an einer mautbestimmenden Gruppe von mehreren Fahrzeugen beteiligtes Fahrzeug gekennzeichnet durch (a) das funktechnische Empfangen wenigstens einer ersten Nachricht, die infolge wenigstens einer von wenigstens einem ersten Fahrzeug getroffenen ersten Feststellung über das Vorliegen eines außerordentlichen Verkehrsereignisses von einem ersten Fahrzeug erzeugt und, Daten der ersten Feststellung umfassend, funktechnisch versendet wurde, (b) das Treffen einer zweiten Feststellung über das Vorliegen eines außerordentlichen Verkehrsereignisses von einem zweiten Fahrzeug und (c) das Erheben einer verkehrsbedingten Mautgebühr für das erste Fahrzeug und/ oder das zweite Fahrzeug, wenn ein Vergleich von Daten der ersten Feststellung aus der ersten Nachricht und Daten der zweiten Feststellung im Zuge einer datentechnischen Verarbeitung dieser Daten durch einen Prozessor eine Ähnlichkeit dieser Daten innerhalb eines vorgegebenen Rahmens ergibt, die bedingt, dass das erste Fahrzeug und das zweite Fahrzeug der mautbestimmenden Gruppe zugeordnet sind.
Dabei werden mit der zweiten Feststellung von dem zweiten Fahrzeug Daten der zweiten Feststellung erzeugt, die dem Datenvergleich mit Daten der ersten Feststellung zugrunde liegen.
Die Beteiligung eines ersten und eines zweiten Fahrzeugs an einer mautbestimmenden Gruppe von Fahrzeugen bedeutet, dass das erste und das zweite Fahrzeug von dieser mautbestimmenden Gruppe von Fahrzeugen umfasst sind. Dabei ergibt sich die mautbestimmende Gruppe der Fahrzeuge aufgrund der Datenähnlichkeit von Daten der ersten Feststellung und Daten der zweiten Feststellung, wobei diese Ähnlichkeit erfindungsgemäß durch eine technische Instanz, nämlich einen Prozessor, dem diese Daten zur Verfügung stehen, ermittelt wird. Die Erkenntnis der Datenähnlichkeit ist dabei bereits als erfindungsgemäße Maßnahme der Gruppenbildung von dem ersten Fahrzeug und dem zweiten Fahrzeug zu der mautbestimmenden Fahrzeuggruppe anzusehen, welche erfindungsgemäß keine weiteren Fahrzeuge aufweisen muss, jedoch - ebensowenig erfindungsgemäß ausgeschlossen - weitere Fahrzeuge aufweisen kann.

Im Prinzip basiert die erfindungsgemäße Erhebung einer verkehrsbedingten Mautgebühr auf dem Erkennen von Gemeinsamkeiten an von mehreren Fahrzeugen festgestellten außerordentlichen Verkehrsereignissen.
Erfindungsgemäß wird eine solche verkehrsbedingte Mautgebühr nicht erhoben, bevor die Ähnlichkeit der Daten der ersten Feststellung und der Daten der zweiten Feststellung geprüft wurde; anschließend wird sie auch nur dann erhoben, wenn die Ähnlichkeit der Daten festgestellt wurde. Sprich: die Feststellung der Datenähnlichkeit löst die Mauterhebung aus - oder anders gesagt: die Mauterhebung ist das Resultat der besagten Datenähnlichkeit. Insofern unterscheidet sich die erfindungsgemäße verkehrsbedingte Mauterhebung völlig von der bekannten nutzungsbedingten Mauterhebung, bei der im Kontrollfall die Nacherhebung der nutzungsbedingten Mautgebühr dann ausgelöst wird, wenn Daten des mautpflichtigen Fahrzeugs unrichtigerweise von denen einer Kontrollinstanz - beispielsweise ein Kontrollfahrzeug - abweichen, also unähnlich sind.

Das unterscheidet die Erfindung grundsätzlich von dem in der Offenlegungsschrift DE 10 2007 035 738 A1 beschriebenen Kontrollverfahren, in dem Positionen eines mautpflichtigen Fahrzeugs zusammen mit einer Kennung des mautpflichtigen Fahrzeugs von dem mautpflichtigen Fahrzeug an eine Zentrale übertragen werden (um aus diesen Positionen eine gegebenenfalls fällige nutzungsbedingte Mautgebühr bezüglich des mautpflichtigen Fahrzeugs unabhängig von den Daten anderer Fahrzeuge zu ermitteln), Positionen eines Kontrollfahrzeugs zusammen mit einer Kennung des mautpflichtigen Fahrzeugs an die Zentrale übertragen werden und in der Zentrale die Positionen des mautpflichtigen Fahrzeugs mit den Positionen des Kontrollfahrzeuges verglichen werden, um bei signifikanter Abweichung ein Fehlersignal auszugeben. Während im Falle des nutzungsbedingten Mautprinzips bezüglich jedes einzelnen Nutzers als solchen im Regelfall unabhängig von anderen Nutzern die Mauterhebung individuell durchführt wird und nur im Ausnahmefall eines Fehlers in Abhängigkeit von den Referenzdaten einer - beispielsweise verkehrsteilnehmenden - Kontrollinstanz ein Nacherhebungsverfahren in Bezug auf den säumigen Nutzer initiiert wird, wird im Falle des erfindungsgemäßen verkehrsbedingten Mautprinzips die Mauterhebung bezüglich mehrerer Nutzer als Verkehrsteilnehmer im Regelfall in Abhängigkeit von anderen Nutzern gemeinschaftlich durchgeführt. Prinzipiell bedingt die gemeinsame Teilnahme des ersten Fahrzeugs und des zweiten Fahrzeugs an einem bestimmten außerordentlichen Verkehrsereignis die verkehrsbedingte Mauterhebung sowohl für das erste Fahrzeug als auch für das zweite Fahrzeug.
Zusammengefasst wird im erfindungsgemäßen Verfahren die reguläre (verkehrsbedingte) Mauterhebung durch die vorhandene Datenähnlichkeit von Daten zweier Fahrzeuge gleichen Rangs bewirkt, in den bekannten Kontrollverfahren hingegen die irreguläre (nutzungsbedingte) Mauterhebung durch die mangelnde Datenähnlichkeit von Daten zweier Fahrzeuge unterschiedlichen Ranges.

Unter einem außerordentlichen Verkehrsereignis wird jedes Ereignis verstanden, das den ordentlichen Verkehrsfluss behindert oder einen behinderten Verkehrsfluss repräsentiert.
Zu den außerordentlichen Verkehrsereignissen zählen Ereignisse, die durch eine außerordentliche Verkehrssituation bei erhöhter Verkehrsdichte (sprich: erhöhter Anzahl von Fahrzeugen auf einem Streckenabschnitt) in Form von zähfließendem Verkehr, Stop-and-Go oder Stau hervorgerufen werden: zum Beispiel eine verringerte Fahrzeuggeschwindigkeit, ein Fahrzeughalt, ein verringerter Fahrzeugabstand, sowie eine erhöhte Feinstaubbelastung oder eine erhöhte Abgasbelastung in der Fahrzeugumgebung.
Ein Stau wird dabei als Stillstand mehrerer unmittelbar aufeinander folgender Fahrzeuge auf einer Fahrbahn verstanden, unter zähfließendem Verkehr die Bewegung mehrerer unmittelbar aufeinander folgender Fahrzeuge auf dem Abschnitt einer Fahrbahn mit einer Geschwindigkeit, die deutlich (beispielsweise mehr als 30%) unter der zulässigen Höchstgeschwindigkeit oder der vorgeschlagenen Richtgeschwindigkeit für den besagten Fahrbahnabschnitt liegt. Unter Stop-and-Go wird der - gegebenenfalls wiederholt auftretende - Wechsel zwischen (zäh-)fließendem Verkehr, Stau und zurück um (zäh-)fließenden Verkehr verstanden. Zähfließender Verkehr ist in der Regel zusätzlich dadurch gekennzeichnet, dass der Abstand zwischen zwei unmittelbar aufeinander folgenden, am zähfließenden Verkehr beteiligter Fahrzeuge, kleiner ist als das Doppelte des vorgeschriebenen Sicherheitsabstandes (siehe beispielsweise § 4 und Zeichen 273 der deutschen Straßenverkehrsordnung oder die "Faustformel Sicherheitsabstand gleich halber Tacho", sprich: Fahrzeuggeschwindigkeitswert in Einheiten von Kilometern pro Stunde geteilt durch zwei ergibt Sicherheitsabstandswert in Einheiten von Metern).
Während ein ordentliches Verkehrsereignis beispielsweise durch eine Fahrzeuggeschwindigkeit von über 60 km/ h auf der Autobahn oder einen Fahrzeugabstand von über 30 m repräsentiert ist und für die ordentliche Verkehrssituation eines fließenden Verkehrs spricht, deutet sich bei Vorliegen eines außerordentlichen Verkehrsereignisses einer Fahrzeuggeschwindigkeit von unter 50 km/ h oder eines Fahrzeugabstandes von unter 20 m eine außerordentliche Verkehrssituation stockenden oder zähfließenden Verkehrs an.

Durch die Zuordnung des ersten Fahrzeugs und des zweiten Fahrzeugs zu der mautbestimmenden Gruppe anhand des positiven Vergleichsergebnisses ist gewährleistet, dass das zweite Fahrzeug außerordentliche Verkehrsereignisse derselben außerordentlichen Verkehrssituation feststellt wie das erst Fahrzeug, in dem Sinne, dass die festgestellten außerordentlichen Verkehrsereignisse einen zeitlichen und räumlichen Zusammenhang aufweisen. Dies ist erfindungsgemäß wesentlich und vorteilhaft, um auszuschließen, dass für ein Fahrzeug eine verkehrsbedingte Maut erhoben wird für eine außerordentliche Verkehrssituation, an dem es nicht beteiligt ist.

Erfindungswesentlich sind ferner die Feststellungen über das Vorliegen eines außerordentlichen Verkehrsereignisses in den Fahrzeugen selbst. Damit kann vorteilhaft ein periodisches Versenden und/ oder Empfangen von Daten, die eine zentralseitige Feststellung über das Vorliegen eines außerordentlichen Verkehrsereignisses ermöglichen sollen, vermieden werden, so dass die Anzahl von versendeten Nachrichten und/ oder das kommunizierte Datenvolumen in einem Mautsystem, in dem das erfindungsgemäße Verfahren durchgeführt wird, deutlich gegenüber dem Stand der Technik reduziert werden, weil nur ereignisgebunden Daten versendet werden, wenn ein außerordentliches Verkehrsereignis von dem betreffenden Fahrzeug detektiert wird.

Bevorzugt sind die außerordentlichen Verkehrsereignisse vom selben Typ (verringerte Fahrzeuggeschwindigkeit, Fahrzeughalt, verringerter Fahrzeugabstand, erhöhte Feinstaubbelastung, erhöhte Abgasbelastung) oder sind derselben außerordentlichen Verkehrssituation zuzuordnen (erhöhte Verkehrsdichte, zähfließender Verkehr, Stau).
Damit wird eine homogene Erkennung der mauterheblichen Verkehrssituation möglich.

Prinzipiell wird mit der Vorgabe des Rahmens für jedes zweite Fahrzeug eine eigene, diesem zweiten Fahrzeug zugeordnete mautbestimmende Gruppe von Fahrzeugen gebildet, die wenigstens ein erstes Fahrzeug - in der Regel meist mehrere erste Fahrzeuge - und jeweils das besagte zweite Fahrzeug umfasst.
Insofern kann insbesondere vorgesehen sein, dass das erfindungsgemäße Verfahren das Erheben einer verkehrsbedingten Mautgebühr für das erste Fahrzeug und das zweite Fahrzeug umfasst. Damit wird ein Verfahren zur verkehrsbedingten Mauterhebung für mehrere an einer mautbestimmenden Gruppe von mehreren Fahrzeugen beteiligten Fahrzeugen geschaffen. Durch die Beteiligung an einer gemeinsamen außerordentlichen Verkehrssituation, die durch die Ähnlichkeit der Daten der ersten Feststellung und der zweiten Feststellung mittels des Prozessors feststellt wird, sind prinzipiell nämlich beide Fahrzeuge von der Erhebung der verkehrsbedingten Mautgebühr betroffen.
Dabei müssen eine erste Mautgebühr für das erste Fahrzeug und eine zweite Mautgebühr für das zweite Fahrzeug nicht notwendigerweise gleich hoch sein. Beispielsweise können Sie in Abhängigkeit vom Fahrzeugtyp oder in Abhängigkeit von der Anzahl oder Höhe von bezüglich des jeweiligen Fahrzeugs in einem vorhergehenden vorbestimmten Zeitrahmen erhoben verkehrsbedingten Mautgebühren unterschiedlich sein.

Ausführungsformen des erfindungsgemäßen Verfahrens sind dadurch gekennzeichnet, dass die datentechnische Verarbeitung durch Vergleich von zeitlichen Daten der ersten Feststellung und der zweiten Feststellung mit dem Ergebnis abschließt, dass die zeitlichen Daten innerhalb eines vorgegebenen Zeitrahmens liegen.

Damit kann ein zeitlicher kausaler Zusammenhang der ersten Feststellung und der zweiten Feststellung ermittelt werden, der eine erste Bedingung für die Zuordnung des ersten Fahrzeugs und des zweiten Fahrzeugs zu der mautbestimmenden Fahrzeuggruppe bilden kann.

Beispielsweise kann der Zeitrahmen eine Minute betragen, und alle Fahrzeuge, deren zeitliche Daten innerhalb einer Minute liegen, gehören der mautbestimmenden Gruppe an.
Es ist auch möglich, dass der Vergleich auch eine Übereinstimmung der zeitlichen Daten feststellt, wobei der vorgegebene Zeitrahmen auf einen einzigen Zeitwert beschränkt ist. Dies kann beispielsweise dadurch möglich werden, dass a) zeitliche Daten nur abgerundet auf ganze Minuten zur Verfügung gestellt und/ oder dem Vergleich unterworfen werden, oder ein Datensatz der Feststellungen mehrere hinsichtlich des Vergleiches gleichberechtigte zeitliche Daten enthält, die einen auf ganze Minuten abgerundeten, einen auf ganze Minuten aufgerundeten und gegebenenfalls weitere vorhergehende oder nachfolgende Minutenangaben aufweist.

Ausführungsformen des erfindungsgemäßen Verfahrens sind dadurch gekennzeichnet, dass die datentechnische Verarbeitung durch Vergleich von örtlichen und/ oder fahrtrichtungsbezogenen Daten der ersten Feststellung und der zweiten Feststellung mit dem Ergebnis abschließt, dass die örtlichen Daten innerhalb eines vorgegebenen räumlichen Gebietes liegen und/ oder die fahrtrichtungsbezogenen Daten innerhalb eines vorgegebenen Winkelbereichs liegen.
Damit kann ein räumlicher kausaler Zusammenhang der ersten Feststellung und der zweiten Feststellung ermittelt werden, der eine erste oder zweite Bedingung für die Zuordnung des ersten Fahrzeugs und des zweiten Fahrzeugs zu der mautbestimmenden Fahrzeuggruppe bilden kann.
Beispielsweise kann anhand der fahrtrichtungsbezogenen Daten ermittelt werden, ob das erste Fahrzeug und das zweite Fahrzeug dieselbe Fahrbahn benutzen und damit an derselben Verkehrssituation beteiligt sind, oder ob das erste Fahrzeug und das zweite Fahrzeug entgegengesetzte Fahrbahnen benutzen und damit an verschiedenen Verkehrssituationen beteiligt sind, die sie von einer Erhebung einer verkehrsbedingten Mautgebühr ausschließen.
Beispielsweise kann anhand der örtlichen Daten ermittelt werden, ob das erste Fahrzeug und das zweite Fahrzeug denselben oder einander unmittelbar benachbarte Streckenabschnitt benutzen und damit an derselben Verkehrssituation beteiligt sind, oder ob das erste Fahrzeug und das zweite Fahrzeug verschiedene oder einander nicht unmittelbar benachbarte Streckenabschnitte benutzen und damit an verschiedenen Verkehrssituationen beteiligt sind, die sie von einer Erhebung einer verkehrsbedingten Mautgebühr ausschließen.

Das erfindungsgemäße Verfahren kann ferner (d) das Treffen einer dritten Feststellung über das Vorliegen eines außerordentlichen Verkehrsereignisses von einem dritten Fahrzeug, (e) das funktechnische Empfangen einer zweiten Nachricht, die infolge von der von dem zweiten Fahrzeug getroffenen zweiten Feststellung erzeugt und, Daten der zweiten Feststellung umfassend, funktechnisch versendet wurde sowie (f) und das Erheben einer Mautgebühr für das erste, zweite und/ oder dritte Fahrzeug vorsehen, wenn ein Vergleich von Daten der ersten Feststellung aus der ersten Nachricht, Daten der zweiten Feststellung und Daten der dritten Feststellung im Zuge einer datentechnischen Verarbeitung dieser Daten durch einen Prozessor eine Ähnlichkeit dieser Daten innerhalb eines vorgegebenen Rahmens ergibt, die bedingt, dass das erste Fahrzeug, das zweite Fahrzeug und das dritte Fahrzeug der mautbestimmenden Gruppe zugeordnet sind.

Allgemein kann das erfindungsgemäße Verfahren für jedes ganze N > 0 (a) das Treffen von N+1 Feststellungen über das Vorliegen eines außerordentlichen Verkehrsereignisses von jeweils einem von N+1 Fahrzeugen, (b) das funktechnische Empfangen von wenigstens N Nachrichten, die infolge jeweils von einem von N Fahrzeugen getroffenen Feststellung über das Vorliegen eines außerordentlichen Verkehrsereignisses von dem jeweiligen Fahrzeug erzeugt und, Daten der jeweiligen Feststellung umfassend, funktechnisch versendet wurde und (c) das Erheben einer verkehrsbedingten Mautgebühr für wenigstens eines der N+1 Fahrzeuge, wenn ein Vergleich von Daten der N+1 Feststellungen im Zuge einer datentechnischen Verarbeitung dieser Daten durch einen Prozessor eine Ähnlichkeit dieser Daten innerhalb eines vorgegebenen Rahmens ergibt, die bedingt, dass die N+1 Fahrzeuge der mautbestimmenden Gruppe zugeordnet sind.
Prinzipiell ist die ganze Zahl N auf die maximal mögliche Anzahl von an einem Stau beteiligten Fahrzeugen beschränkt. Für einen Stau von 100 km auf einer vierspurigen Fahrbahn kann N einen Wert von 100.000 annehmen.
Es erscheint jedoch sinnvoll, eine fahrzeugbezogene kleinste mautbestimmende Gruppe vorzusehen. Erfindungsgemäß besteht die kleinste mautbestimmende Gruppe aus zwei Fahrzeugen. Auf einer einspurigen Fahrbahn kann diese Menge bereits ausreichen, ein außerordentliches Verkehrsereignis - beispielsweise einen Unfall anhand eines über ein vorbestimmtes Zeitintervall gegebenen Stillstandes - zu identifizieren. Sollte diese kleinste Menge an Fahrzeugen nicht ausreichen, um ein außerordentliches Verkehrsereignis (beispielsweise zähfließenden Verkehrs oder einen Unfall auf einer mehrspurigen Fahrbahn) zu identifizieren, so kann die Mindestanzahl der die mautbestimmende Gruppe bildenden Fahrzeug erhöht werden. In diesem Fall kann die mautbestimmende Gruppe 3 oder mehr, beispielsweise 10, Fahrzeuge erfordern.
Bezogen auf mehr als zwei an der mautbestimmenden Gruppe von Fahrzeugen beteiligte Fahrzeuge lässt sich auch folgende Ausführungsform beschreiben:
Bevorzugt werden mehrere erste Nachrichten empfangen, die infolge wenigstens jeweils einer von den mehreren ersten Fahrzeugen getroffenen ersten Feststellungen über das Vorliegen eines außerordentlichen Verkehrsereignisses von den ersten Fahrzeugen erzeugt, Daten der ersten Feststellung umfassend, und funktechnisch versendet wurden, wobei eine verkehrsbedingte Mautgebühr für eines oder mehrere der ersten Fahrzeuge und/ oder das zweite Fahrzeug erhoben wird, wenn ein Vergleich von Daten der ersten Feststellungen aus den ersten Nachrichten und der zweiten Feststellung im Zuge einer datentechnischen Verarbeitung dieser Daten durch einen Prozessor eine Ähnlichkeit dieser Daten innerhalb eines vorgegebenen Rahmens ergibt, die bedingt, dass die ersten Fahrzeuge und das zweite Fahrzeug der mautbestimmenden Gruppe zugeordnet werden.
Dabei ist es möglich, dass erste Fahrzeuge Nachrichten, die sie von ersten Fahrzeugen empfangen haben, durch ein Wiederaussenden weiterleiten. Damit kann eine kurze Reichweite eines erster Nachrichten schrittweise vergrößert werden, um die Nachrichten weiteren ersten Fahrzeugen und schließlich dem zweiten Fahrzeug zuzusenden. Dabei kann ein Zähler im Nachrichtendatensatz mit jedem erneuten Aussenden einer ersten Nachricht um eine Einheit erhöht werden und ein Kriterium für den Abbruch der Weiterleitung einer ersten Nachricht definiert werden, das ein Anwachsen des Zählers über einen maximalen Zählerstand hinaus versagt.

Ein durch den Vergleich von zeitlichen Daten der ersten Feststellungen und der zweiten Feststellung ermittelter Zusammenhang ist vorzugsweise zeitlicher kausaler Art in dem Sinne, dass sich die Feststellung des außerordentlichen Verkehrsereignisses durch das zweite Fahrzeug in die Feststellung außerordentlicher Verkehrsereignisse der ersten Fahrzeuge in der Weise einreiht, dass der Zeitpunkt der Feststellung eines außerordentlichen Verkehrsereignisses des zweiten Fahrzeugs innerhalb eines von dem zeitlichen Abstand zweier Zeitpunkte der Feststellung außerordentlicher Verkehrsereignisse durch zwei erste Fahrzeuge abhängigen zeitlichen Bereiches liegt.
Beispielsweise ist ein zeitlicher kausaler Zusammenhang eines von einem zweiten Fahrzeug festgestellten außerordentlichen Verkehrsereignisses mit dem von mehreren ersten Fahrzeugen festgestellten außerordentlichen Verkehrsereignisses dann gegeben, wenn der zweite zeitliche Abstand eines zweiten Zeitpunktes der Feststellung des von dem zweiten Fahrzeug festgestellten außerordentlichen Verkehrsereignisses zu einem ersten Zeitpunkt der Feststellung eines von einem ersten Fahrzeugen festgestellten außerordentlichen Verkehrsereignisses kleiner ist als der erste zeitliche Abstand zwischen zwei ersten Zeitpunkten zweier (nicht notwendigerweise unmittelbar aufeinander folgenden) Feststellungen von außerordentlichen Verkehrsereignissen zweier erster Fahrzeuge oder eines Bruchteils dieses ersten zeitlichen Abstandes. Es obliegt dabei dem Fachmann festzulegen, wie groß der erste zeitliche Abstand zwischen zwei ersten Zeitpunkten zweier Feststellungen von außerordentlichen Verkehrsereignissen zweier erster Fahrzeuge maximal sein darf, damit ein diesen zwei ersten Zeitpunkten zeitlich vorhergehender oder nachfolgender zweiter Zeitpunkt noch unter dieses zeitliche Kausalitätskriterium fällt.
Den maximalen ersten zeitlichen Abstand zwischen zwei ersten Fahrzeugen der mautbestimmenden Gruppe kann man als Erfassungszeitrahmen bezeichnen, der die Dauer eines Erfassungszeitraums zwischen einen Beginn und einem Ende der Erfassung von durch erste Fahrzeuge festgestellten außerordentlichen Verkehrsereignissen repräsentiert. Dieser Erfassungszeitrahmen definiert folglich den Zeitrahmen, innerhalb dessen Feststellungen außerordentlicher Verkehrsereignisse der mautbestimmenden Gruppe zugeordnet werden können. Innerhalb der Zeitdauer des Erfassungszeitrahmens oder eines Bruchteils davon stehen Feststellungen außerordentlicher Verkehrsereignisse zweiter Fahrzeuge vor, nach oder innerhalb des Erfassungsrahmens in einem zeitlichen Zusammenhang mit den Feststellungen außerordentlicher Verkehrsereignisse erster Fahrzeuge, wodurch ein solches zweites Fahrzeug der mautbestimmenden Gruppe von Fahrzeugen, deren gemeinsame Beteiligung an einer außerordentlichen Verkehrsituation erfindungsgemäß erkannt wurde, zugeordnet wird.
Die Anzahl von ersten Fahrzeugen und/ oder zweiten Fahrzeugen der mautbestimmenden Gruppe von Fahrzeugen kann man als Erfassungsmenge bezeichnen. Der Quotient aus Erfassungsmenge und Erfassungszeitrahmen ergibt eine Mautpflichtrate (in Einheiten Fahrzeuge pro Sekunde), sein Kehrwert ein Mautpflichtintervall. Beide repräsentieren eine bei Feststellungen außerordentlicher Verkehrsereignisse eine mautauslösende Verkehrsdichte.
Mit einem solchen Mautpflichtintervall von beispielsweise 10 Sekunden ließe sich innerhalb eines Erfassungszeitrahmens von einer Minute und einer Erfassungsmenge von sechs ersten Fahrzeugen und/ oder zweiten Fahrzeugen ein mautfreier Stau aufgrund eines Unfalls auf einem verkehrsarmen Streckenabschnitt von einem Stau aufgrund einer erhöhten Verkehrsdichte auf einem verkehrsreichen Streckenabschnitt unterscheiden mit der Folge, dass ein Stau aufgrund erhöhter Verkehrsdichte zur Erhebung eine verkehrsbedingten Maut führt, ein rein unfallbedingter Stau bei niedriger Verkehrsdichte jedoch nicht:
In einer ersten bevorzugten Ausführungsform liegt der zweite Zeitpunkt der Feststellung eines von dem zweiten Fahrzeug festgestellten außerordentlichen Verkehrsereignisses mautauslösend innerhalb einer Zeitdauer des Zweifachen eines festgelegten Mautpflichtintervalls, das einem Erfassungszeitraum von durch erste Fahrzeuge festgestellten außerordentlichen Verkehrsereignissen unmittelbar vorangeht oder nachfolgt.
In einer zweiten bevorzugten Ausführungsform liegt der zweite Zeitpunkt der Feststellung eines von dem zweiten Fahrzeug festgestellten außerordentlichen Verkehrsereignisses mautauslösend zwischen zwei ersten Zeitpunkten der Feststellungen außerordentlichen Verkehrsereignisses durch zwei zweite Fahrzeuge, die innerhalb eines Zweifachen eines festgelegten Mautpflichtintervalls aufeinander folgen.
In einer dritten, weniger bevorzugten Ausführungsform ist der kürzeste zeitliche Abstand zwischen dem Zeitpunkt der Feststellung des außerordentlichen Verkehrsereignisses durch ein erstes Fahrzeug und dem Zeitpunkt der Feststellung des außerordentlichen Verkehrsereignisses durch das zweite Fahrzeug mautauslösend nicht größer ist als der längste zeitliche Abstand zwischen zwei Zeitpunkten von unmittelbar zeitlich aufeinander folgenden Feststellungen des außerordentlichen Verkehrsereignisses durch zwei erste Fahrzeuge.
Allgemein kann man festhalten, dass eine auf das zweite Fahrzeug bezogene Mauterhebung bevorzugt dann erfolgt, wenn die Auswertung der ersten Zeitpunkte von ersten Feststellungen außerordentlicher Verkehrsereignisse der ersten Fahrzeuge und des zweiten Zeitpunktes von der zweiten Feststellung eines außerordentlichen Verkehrsereignisses des zweiten Fahrzeugs ergibt, dass die ersten Zeitpunkte gemeinsam mit dem zweiten Zeitpunkt in einem vorgebbaren zeitlichen Feststellungsintervall enthalten sind.
Dabei sind Staffelungen der Feststellungsintervalle nach ihrer Größe zur Erhebung mehrerer oder verschiedener, von der Schwere der außerordentlichen Verkehrssituation abhängiger, verkehrsbedingter Mautgebühren möglich.

Gleiches gilt analog für die örtlichen und/ oder fahrtrichtungsbezogenen Daten:
Ein durch den Vergleich von örtlichen Daten der ersten Feststellungen und der zweiten Feststellung ermittelter Zusammenhang ist vorzugsweise räumlicher kausaler Art in dem Sinne, dass sich die Feststellung des außerordentlichen Verkehrsereignisses durch das zweite Fahrzeug in die Feststellung außerordentlicher Verkehrsereignisse der ersten Fahrzeuge in der Weise einreiht, dass der Ort der Feststellung eines außerordentlichen Verkehrsereignisses des zweiten Fahrzeugs innerhalb eines von dem räumlichen Abstand zweier Orte der Feststellung außerordentlicher Verkehrsereignisse durch zwei erste Fahrzeuge abhängigen räumlichen Bereiches liegt.
Allgemein kann man festhalten, dass eine auf das zweite Fahrzeug bezogene Mauterhebung bevorzugt dann erfolgt, wenn die Auswertung der ersten Orte von ersten Feststellungen außerordentlichen Verkehrsereignisses der ersten Fahrzeuge und des zweiten Ortes von der zweiten Feststellung eines außerordentlichen Verkehrsereignisses des zweiten Fahrzeugs ergibt, dass die ersten Orte gemeinsam mit dem zweiten Ort in einem vorgebbaren räumlichen Gebiet enthalten sind. Dabei sind Staffelungen der Größe der räumlichen Gebiete zur Erhebung mehrerer oder verschiedener, von der Schwere der außerordentlichen Verkehrssituation abhängiger, verkehrsbedingter Mautgebühren möglich.

Dabei ist darauf hinzuweisen, dass Kausalität auch hergestellt werden kann, indem eine oder mehrere erste Nachrichten von einem oder mehreren ersten Fahrzeugen, die diesem Kausalitätsprinzip mit dem Ergebnis einer ausbleibenden Mauterhebung entgegenstehen würden, aus der datentechnischen Verarbeitung ausgeschlossen werden, um eine Mauterhebung zu begründen.

Zur Ermittlung der Größe des außerordentlichen Verkehrsereignisses kann die Anzahl von Fahrzeugen ermittelt werden, die an mehr als einer auf ein einzelnes Fahrzeug bezogenen mautbestimmenden Gruppe beteiligt sind. Bildet zum Beispiel (a) Fahrzeug 1 eine erste mautbestimmende Gruppe mit Fahrzeug 2 und Fahrzeug 3 und (b) Fahrzeug 2 eine zweite mautbestimmende Gruppe mit Fahrzeug 3 und Fahrzeug 4, so sind alle Fahrzeuge 1, 2, 3 und 4 über die erste und zweite mautbestimmende Gruppe durch ihre gemeinsamen Mitglieder 2 und 3 miteinander gekoppelt und bilden ein außerordentliches Verkehrsereignis mit 4 beteiligten Fahrzeugen. Sind im Allgemeinen jeweils N Fahrzeuge an der Bildung einer von insgesamt Z mautbestimmenden Gruppe beteiligt, so ist näherungsweise von insgesamt Z / N am außerordentlichen Verkehrsereignis beteiligten Fahrzeugen auszugehen.
Dabei kann die Erfindung weitergebildet sein, die Höhe der verkehrsbedingten Mautgebühr für das erste und/ oder zweite Fahrzeug in Abhängigkeit von der Anzahl aller am außerordentlichen Verkehrsereignis beteiligten Fahrzeuge zu ermitteln und zu erheben, wobei die Anzahl aller am außerordentlichen Verkehrsereignis beteiligten Fahrzeuge ermittelt wird, indem die Anzahl aller verschiedenen Fahrzeuge, die von der Gesamtheit aller von untereinander über Schnittmengen identischer Fahrzeuge miteinander verknüpften mautbestimmenden Gruppen umfasst sind, gezählt wird, wobei die Verknüpfung von jeweils einer ersten mit einer zweiten mautbestimmenden Gruppe festgestellt wird, indem wenigstens ein verknüpfendes Fahrzeug bestimmt wird, das von der ersten und der zweiten mautbestimmenden Gruppen umfasst ist und dessen Daten einer Feststellung über das Vorliegen eines außerordentlichen Verkehrsereignisses, die eine Zuordnung des verknüpfenden Fahrzeugs zu der ersten mautbestimmenden Gruppe bedingt haben, eine Ähnlichkeit mit den Daten einer Feststellung über das Vorliegen eines außerordentlichen Verkehrsereignisses, die eine Zuordnung zu der zweiten mautbestimmenden Gruppe bedingt haben, innerhalb eines vorgegebenen Rahmens aufweist.
Insbesondere kann vorgesehen sein, dass die Erhebung einer verkehrsbedingten Mautgebühr bezüglich des ersten und/ oder zweiten Fahrzeugs erst und nur dann erfolgt, wenn die Anzahl derart verknüpfter mautbestimmender Gruppen, von denen wenigstens eine das erste und das zweite Fahrzeug umfasst, einen Gruppenschwellwert (von beispielsweise 10 mautbestimmenden Gruppen) überschreitet oder die Anzahl der am außerordentlichen Verkehrsereignis beteiligten Fahrzeuge einen Fahrzeugschwellwert (von beispielsweise 100 Fahrzeugen) überschreitet.

Die Erfindung sieht vor, eine Verkehrssituation von einem ersten und einem zweiten Fahrzeug selbst ermitteln zu lassen und eine Nachricht von dem ersten Fahrzeug über das Vorliegen einer bestimmten Verkehrssituation erst beim Feststellen eines durch die Verkehrssituation bedingten Ereignisses - ereignisgesteuert - zu versenden. Vorteilhaft wird beispielsweise für die Fahrzeugeinrichtung eines zweiten Fahrzeugs, die ein solches außerordentliches Verkehrsereignis registriert hat, bei Empfang einer bestimmten Mindestanzahl dieser Nachrichten, deren auslösende Feststellungen von ersten Fahrzeugen im einem bezüglich des zweiten Fahrzeugs vorgegebenen Rahmen generiert wurden, eine Anpassung der Mautgebühr für das zweite Fahrzeug, das ein solches außerordentliches Verkehrsereignis ebenfalls festgestellt hat, vorgenommen.

Es wird vorteilhaft nur dasjenige Fahrzeug mit einer erhöhten Mautgebühr belegt, das an einem Verkehrssituation (einem Stau oder einer erhöhten Luftverschmutzung) beteiligt ist und seine Beteiligung daran auch detektiert.
Im Idealfall kann damit sogar der Verursacher einer außerordentlichen Verkehrssituation, beispielsweise eines Staus, ausfindig gemacht und zur Zahlung einer (erhöhten) Mautgebühr verpflichtet werden. Damit unterscheidet sich die Erfindung gänzlich von den eingangs erwähnten Verfahren des Standes der Technik, die sich darauf beschränken, einen an einer Verstopfung Unbeteiligten mit einer (erhöhten) Mautgebühr zu drohen, und diejenigen, die von Anfang an an der Verstopfung - möglicherweise sogar ursächlich - beteiligt waren, unbehelligt zu lassen.

Da eine einzelne Nachricht oder Feststellung aus einer großräumigen außerordentlichen Verkehrssituation, zu denen zähfließender Verkehr, ein Stau oder übermäßige Luftverschmutzung zählen, die in der Regel auf eine Vielzahl beteiligter Fahrzeuge zurückzuführen ist, nicht für die Entscheidung über das tatsächliche Vorliegen der besagten außerordentlichen Verkehrssituation ausreicht, kann erfindungsgemäß durch eine Entscheidung, die die Feststellungen eines die großräumige Verkehrssituation charakterisierenden außerordentlichen Verkehrsereignisses durch mehrere Fahrzeuge (wenigstens eines ersten und eines zweiten Fahrzeugs) berücksichtigt, vorteilhaft vermieden werden, dass ein einziges Fahrzeug für ein individuelles Fahrmanöver (zu dichtes Auffahren durch das knappe Einscheren eines überholenden Fahrzeugs, störungsbedingter Halt auf dem Seitenstreifen) ungerechtfertigterweise mit einer (erhöhten) Mautgebühr belastet wird. Erst das Vorliegen der Feststellungen mehrerer außerordentlicher Verkehrsereignisse begründet erfindungsgemäß die Erkennung einer außerordentlichen Verkehrssituation und die Beteiligung derjenigen Fahrzeuge an ihr, die die außerordentlichen Verkehrsereignisse festgestellt haben, mit der Konsequenz, dass für wenigstens eines der beteiligten Fahrzeuge eine verkehrsbedingte Maut erhoben wird.

Da die Feststellung über das Vorliegen eines außerordentlichen Verkehrsereignisses bei der Erfindung anders als bei dem aus dem Stand der Technik bekannten Lösungen zur Begründung einer verkehrsbedingten Mautgebühr nicht zentral, sondern dezentral erfolgt, ist das Kommunikationsvolumen erfindungsgemäß ereignisabhängig sporadisch und nicht ereignisunabhängig kontinuierlich. Anstatt obligatorisch periodisch Signale oder Nachrichten von Fahrzeugen oder straßenseitigen Einrichtungen zentralseitig zu empfangen, um diese hinsichtlich der Feststellung eines außerordentlichen Verkehrsereignisses oder mehrerer oder mehrerer außerordentlicher Verkehrsereignisse zentralseitig zu verarbeiten, erfolgt ein Versand einer Nachricht nur bei der Feststellung des außerordentlichen Verkehrsereignisses selbst. Damit kann das Kommunikationsvolumen aus dem Fahrzeug heraus, zumindest aber jenes, das von einer Zentrale verarbeitet werden muss, vorteilhaft drastisch reduziert werden auf die wesentlichen Nachrichten - nämlich die über das Festellen einer möglicherweise mauterheblichen außerordentlichen Verkehrssituation.
Dies wird erfindungsgemäß dadurch möglich, dass die Fahrzeuge in die Lage versetzt werden, die Verkehrssituation selbst sensorisch abzutasten und die Abtastergebnisse zur Feststellung eines außerordentlichen Verkehrsereignisses auszuwerten. Im Stand der Technik werden stattdessen kommunikationsintensive Lösungen vorgeschlagen, die auf der sensorischen Abtastung des Verkehrs durch eine übergeordnete Instanz und einer zentralen oder straßenseitigen Auswertung beruhen.
Eine Entscheidung darüber, ob das von einem ersten Fahrzeug oder mehreren ersten Fahrzeugen gemeldete außerordentliche Verkehrsereignis tatsächlich mauterheblich für ein zweites Fahrzeug ist, erfolgt durch eine Individualanalyse für jedes zweite Fahrzeug, das gegebenenfalls ebenfalls an der das außerordentliche Verkehrsereignis bedingenden Verkehrssituation beteiligt ist - beispielsweise in dem zweiten Fahrzeug selbst, in einer zentralen Datenverarbeitungseinrichtung oder in einem der ersten Fahrzeuge oder in einem dritten Fahrzeug. Die Feststellung der Mauterheblichkeit einer Verkehrssituation durch die datentechnische Verarbeitung von einander bedingenden Teilergebnissen von Auswertungen mehrerer, gegebenenfalls verschiedener, Instanzen, ist ebenso denkbar. Eine den Verkehrsteilnehmern gegenüber gerechte Mauterhebung ist damit vorteilhaft gewährleistet.

Bei der Erfindung kommt es nicht auf den geschäftsmethodischen Aspekt der Mauterhebung an sich an, sondern auf die technische Lösung, die zu einer Mauterhebung führt. In diesem Sinne ist es ein geschäftsmethodischer Akt, festzulegen, ob die erhobene Mautgebühr positiv, negativ oder gar null ist. Eine positive Mautgebühr entspricht der Zahlung einer Gebühr von dem Nutzer an den Mautbetreiber oder einen Mauterhebungsdienstleister; eine negative Mautgebühr entspricht der Zahlung einer Gebühr von dem Mautbetreiber oder dem Mauterhebungsdienstleister an den Nutzer. Eine positive verkehrsbedingte Mautgebühr kann dabei ein Aufschlag auf die Grundgebühr einer rein nutzungsbedingten Maut bedeuten; eine negative Mautgebühr kann eine (teilweise) Erstattung einer Grundgebühr bedeuten. Beide Arten von Mautgebühren haben - je nach infrastrukturellen Gegebenheiten - gegebenenfalls ihre Berechtigung: Ein bekanntermaßen häufig aufgrund erhöhten Verkehrsaufkommens unter Stau leidender, intakter Streckenabschnitt kann mit einer positiven verkehrsbedingten Maut belegt werden, wenn verstopfungsfreie Alternativrouten zur Verfügung stehen. Die über die Grundgebühr der Nutzung zusätzlich verkehrsbedingt eingehobene Maut kann zur Finanzierung einer Spurenerweiterung dieses Abschnittes verwendet werden. Ein Streckenabschnitt, der mit einer Baustelle mit einer Verengung von beispielsweise zwei auf eine Fahrspur belegt ist, wird auch bei niedrigem Verkehrsaufkommen Stau oder zähfließenden Verkehr auslösen. Gibt es für diesen Streckenabschnitt keine gleichwertigen, verstopfungsfreien Alternativrouten, so können Autofahrer für ihren Zeitverlust im Stau mit einer Ermäßigung der Maut entschädigt werden.
Als Beispiel für den geschäftsmethodischen Fall der Erhebung keiner Mautgebühr mag das Prinzip gelten, von allen Nutzern bei Befahren des Streckenabschnitts grundsätzlich zunächst eine Maximalmaut als Summe von nutzungsbedingter Grundgebühr und verkehrsbedingter Zusatzmaut im Vorgriff auf eine mögliche (zusatz-)mautauslösende Verkehrssituation auf diesem Abschnitt zu erheben. Kann keine Beteiligung des zweiten Fahrzeugs an einer solchen mautauslösenden Verkehrssituation bis zu einem Verlassen des Streckenabschnittes nicht ausgemacht werden (beispielsweise, weil im Zuge des gesamten Streckenabschnittes stets eine ordentliche Verkehrssituation vorlag), so wird anschließend automatisch die ex ante zuviel erhobene Zusatzmaut zurückerstattet oder gutgeschrieben. Kann allerdings eine Beteiligung des zweiten Fahrzeugs an einer solchen, die Zusatzmaut auslösenden mauterheblichen außerordentlichen Verkehrssituation auf diesem Streckenabschnitte im erfindungsgemäßen Sinne ausgemacht werden, so erweist sich die Erhebung der Zusatzmaut ex post als berechtigt. Über diese Feststellung wird der Fahrer durch die Erhebung einer Nullmaut als Bestätigung für die korrekte Erhebung der Maximalmaut erfindungsgemäß benachrichtigt.
Auch ohne das Konstrukt der Nullmaut bleibt die Erhebung der verkehrsbedingten Mautgebühr für ein zweites Fahrzeug bereits bei Befahren des Streckenabschnitts im Rahmen der Erfindung, weil es nur eine Frage der Geschäftsmethodik ist, ob die Zusatzmaut nach der Erkennung der außerordentlichen Verkehrssituation oder schon vor der Erkennung der außerordentlichen Verkehrssituation erhoben wird. Erfindungswesentlich ist der technische Prozess, der dazu führt, dass eine verkehrsbedingte Mautgebühr für ein erstes und/ oder zweites Fahrzeug endgültig wirksam erhoben wird.

Es kann die Beteiligung eines ersten Fahrzeugs an einer mauterheblichen Verkehrssituation in dem zweiten Fahrzeug festgestellt werden. Das ist vorteilhaft, wenn das erste Fahrzeug aus technischen Gründen nicht empfangen, sondern nur senden kann.
Es kann die Beteiligung eines zweiten Fahrzeugs an einer mauterheblichen Verkehrssituation in dem zweiten Fahrzeug selbst festgestellt werden. Das ist vorteilhaft, wenn das zweite Fahrzeug aus technischen Gründen nicht senden, sondern nur empfangen kann.
Es kann auch die Beteiligung eines ersten und eines zweiten Fahrzeugs an einer mauterheblichen Verkehrssituation sowohl in dem zweiten Fahrzeug als auch in dem ersten Fahrzeug festgestellt werden. Das ist vorteilhaft, wenn eines der ersten und/ oder zweiten Fahrzeuge aus technischen Gründen nicht senden, sondern nur empfangen kann oder nicht empfangen, sondern nur senden kann. Anweisungen zur Erhebung einer Maut für das erste Fahrzeug und das zweite Fahrzeug können sowohl von dem ersten Fahrzeug als auch von dem zweiten Fahrzeug an die zentrale Datenverarbeitungseinrichtung eines Mautsystems gesendet werden, die diese Anweisungen in der Weise verarbeitet, dass trotz eventueller doppelt vorliegender Mauterhebungsanweisungen nur einmal eine Maut für das erste und/ oder das zweite Fahrzeug erhoben wird.

Bevorzugte Ausführungsformen der Erfindung sehen vor, dass in dem Mautsystem streckenabschnittsbezogen Mautgebühren für Fahrzeuge erhoben werden, die den betreffenden Streckenabschnitt befahren, und das Erheben der verkehrsbedingten Mautgebühr auf denjenigen Streckenabschnitt bezogenen ist, auf dem durch das zweite Fahrzeug das außerordentliche Verkehrsereignis festgestellt wurde. Damit kann eine räumliche Beschränkung der verkehrsbedingten Mautgebühr vorgenommen werden.
Insbesondere dann, wenn das Erheben der verkehrsbedingten Mautgebühr auf denjenigen Streckenabschnitt bezogen ist, auf dem sowohl durch erste Fahrzeuge als auch durch das zweite Fahrzeug das außerordentliche Verkehrsereignis festgestellt wurde, kann der gewünschten räumlichen Kausalität zwischen ersten Fahrzeugen und zweiten Fahrzeugen entsprochen werden.
Weiterbildungen dieser Ausführungsformen sehen vor, dass das Erheben der verkehrsbedingten Mautgebühr auf denjenigen Streckenabschnitt bezogenen ist, auf dem durch das zweite Fahrzeug und die ersten Fahrzeuge das außerordentliche Verkehrsereignis festgestellt wurde, und die ersten Nachrichten jeweils eine Kennung desjenigen Streckenabschnitts umfassen, auf dem durch die ersten Fahrzeuge jeweils das außerordentliche Verkehrsereignis festgestellt wurde. Damit lassen sich die Nachrichten, die von den ersten Fahrzeugen empfangen wurden, streckenabschnittsbezogen verarbeiten und auf den Streckenabschnitt beziehen, auf dem auch das zweite Fahrzeug ein außerordentliches Verkehrsereignis festgestellt hat.

Es ist möglich, verkehrsbedingte Mautgebühren nach der Stärke des außerordentlichen Verkehrsereignisses (mehrere Geschwindigkeitsgrenzen von 10 km/h, 30 km/h und 50 km/h; mehrere Abstandsgrenzen von 20 m, 10 m und 5 m; Stillstandsdauern im Stau von 10 sec, 1 min, 10 min 1 h; mehrere Feinstaubkonzentrationswerte von 25 µg/ m³, 50 µg/ m³ und 100 µg/ m³), und/ oder anhand der Anzahl ihrer Feststellungen (Länge des Staus, Anzahl der am zähfließenden Verkehr/ der Umweltverschmutzung beteiligten Fahrzeuge) nach der Größe der außerordentlichen Verkehrssituation zu staffeln.

So können zur Bestimmung der Stärke des außerordentlichen Verkehrsereignisses erste und zweite Grenzwerte für Messwerte zur Feststellung mehrerer außerordentlicher Verkehrsereignisse unterschiedlicher Stärke vorgesehen sein, wobei die Über- oder Unterschreitung des ersten Grenzwertes zu einer ersten verkehrsbedingten Maut führen kann und die Über- oder Unterschreitung eines zweiten Grenzwertes zu einer zweiten verkehrsbedingten Maut, die alternativ oder kumulativ zur ersten verkehrsbedingten Maut erhoben werden kann.
Ferner kann vorgesehen sein, dass der Empfang von einer Nachricht oder mehrerer Nachrichten der Über- oder Unterschreitung eines zweiten Grenzwertes von einem dritten Fahrzeug oder von einer Gruppe dritter Fahrzeuge den ersten Nachrichten hinzugezählt oder von ihnen abgezogen wird, so dass die Erhebung der ersten und/ oder zweiten verkehrsbedingten Maut unter Berücksichtigung sowohl der ersten Nachrichten als auch der Nachrichten des dritten Fahrzeugs oder der dritten Fahrzeuge erfolgt oder ausbleibt.
Beispielsweise kann die Feststellung der Unterschreitung einer Geschwindigkeit von 50 km/ h durch ein erstes Fahrzeug durch die Feststellung der Überschreitung einer Geschwindigkeit von 50 km/h durch ein drittes Fahrzeug aufgehoben werden.
Dazu sehen Ausführungsformen der Erfindung sehen vor, dass das erste Fahrzeug oder mehrere erste Fahrzeuge und das zweite Fahrzeug jeweils eine Fahrzeugeinrichtung mit einer Sensoreinrichtung aufweisen, wobei die Sensoreinrichtung jeweils wenigstens einen Messwert einer für ein außerordentliches Verkehrsereignis repräsentativen Messgröße erfasst und die Fahrzeugeinrichtung den erfassten Messwert mit einem Grenzwert für diese Messgröße vergleicht, um das außerordentliche Verkehrsereignis einer Über- oder Unterschreitung dieses Grenzwertes durch den Messwert festzustellen und Daten dieser Feststellung zu erzeugen.
Mit einer solchen Fahrzeugeinrichtung werden sowohl erste als auch zweite Fahrzeuge in die Lage versetzt, in einfacher Weise ein Verkehrsereignis dahingehend bewerten ob es ordentlich oder außerordentlich ist, um in Abhängigkeit von dem Bewertungsergebnis gegebenenfalls ein außerordentliches Verkehrsereignis (Bremsmanöver, niedriger Abstand, Halt, Luftverschmutzung) festzustellen. Merkmale der Sensoreinrichtung und der Verarbeitung der Messgrößen durch die Fahrzeugeinrichtung werden im Zusammenhang mit der Beschreibung des zweiten Aspektes der Erfindung - der erfindungsgemäßen Fahrzeugeinrichtung - näher erläutert.
Vorzugsweise sieht dazu das erfindungsgemäße Verfahren vor, dass das erste Fahrzeug und das zweite Fahrzeug jeweils wenigstens eine mit der in dem jeweiligen anderen Fahrzeug funktions- oder baugleiche Sensoreinrichtung (Abstandssensor, Geschwindigkeitssensor, Beschleunigungssensor, Partikelsensor und/ oder Schadstoffsensor) aufweisen, die jeweils vergleichbare Daten ein- und derselben für wenigstens eine vorgegebene Verkehrssituation repräsentativen Messgröße (Abstand, Geschwindigkeit, Beschleunigung, Partikelkonzentration, Schadstoffkonzentration) erfasst. Vorzugsweise sieht das erfindungsgemäße Verfahren vor, dass die erste Feststellung von dem ersten Fahrzeug infolge eines Vergleiches wenigstens eines von wenigstens einer ersten Sensoreinrichtung des ersten Fahrzeugs erfassten Messwertes wenigstens einer für wenigstens eine erste vorgegebene Verkehrssituation repräsentativen ersten Messgröße mit einem Grenzwert für die erste Messgröße im Falle des Ereignisses eines Unter- oder Überschreitens des Grenzwertes durch den Messwert getroffen wird und dabei Daten der ersten Feststellung von dem ersten Fahrzeug erzeugt werden sowie die zweite Feststellung von dem zweiten Fahrzeug infolge eines Vergleiches wenigstens eines von wenigstens einer ersten Sensoreinrichtung des zweiten Fahrzeugs erfassten Messwertes der ersten Messgröße mit einem Grenzwert für die erste Messgröße im Falle des Ereignisses eines Unter- oder Überschreitens des Grenzwertes durch den Messwert getroffen wird und dabei Daten der zweiten Feststellung von dem zweiten Fahrzeug erzeugt werden.
Insbesondere umfassen dabei Daten der ersten Feststellung erste Ereignisdaten, die eine Grenzwertüber- oder -unterschreitung der gemessenen ersten Messgröße repräsentieren, und umfassen Daten der zweiten Feststellung zweite Ereignisdaten, die eine Grenzwertüberschreitung der gemessenen ersten Messgröße repräsentieren.
Insbesondere umfassen Daten der ersten Feststellung ergänzend zu den ersten Ereignisdaten erste Zeit- und Ortsdaten und Daten der zweiten Feststellung ergänzend zu den zweiten Ereignisdaten zweite Zeit- und Ortsdaten.
Weiterbildungen des erfindungsgemäßen Verfahrens können vorsehen, dass die erste Feststellung von dem ersten Fahrzeug infolge eines ersten Vergleiches des von einer ersten Sensoreinrichtung des ersten Fahrzeugs erfassten Messwertes einer ersten für wenigstens eine erste vorgegebene Verkehrssituation repräsentativen Messgröße mit einem ersten Grenzwert für die erste Messgröße und infolge eines zweiten Vergleiches des von einer zweiten Sensoreinrichtung des ersten Fahrzeugs erfassten Messwertes einer zweiten für wenigstens eine zweite vorgegebene Verkehrssituation repräsentativen Messgröße mit einem zweiten Grenzwert für die zweite Messgröße im Falle des Ereignisses eines Unter- oder Überschreitens des ersten Grenzwertes durch den ersten Messwert und eines Unter- oder Überschreitens des zweiten Grenzwertes durch den zweiten Messwert getroffen wird und dabei Daten der ersten Feststellung von dem zweiten Fahrzeug erzeugt werden sowie die zweite Feststellung von dem zweiten Fahrzeug infolge eines ersten Vergleiches des von einer ersten Sensoreinrichtung des zweiten Fahrzeugs erfassten Messwertes der ersten Messgröße mit einem ersten Grenzwert für die erste Messgröße und infolge eines zweiten Vergleiches des von einer zweiten Sensoreinrichtung des zweiten Fahrzeugs erfassten Messwertes der zweiten Messgröße mit einem zweiten Grenzwert für die zweite Messgröße im Falle des Ereignisses eines Unter- oder Überschreitens des ersten Grenzwertes durch den ersten Messwert und eines Unter- oder Überschreitens des zweiten Grenzwertes durch den zweiten Messwert getroffen wird und dabei Daten der zweiten Feststellung von dem zweiten Fahrzeug erzeugt werden.
Insbesondere umfassen dabei Daten der ersten Feststellung erste Ereignisdaten, die eine Grenzwertüber- oder -unterschreitung der gemessenen ersten Messgröße und eine Grenzwertüber- oder -unterschreitung der gemessenen zweiten Messgröße repräsentieren, und umfassen Daten der zweiten Feststellung zweite Ereignisdaten, die eine Grenzwertüberschreitung der gemessenen ersten Messgröße und eine Grenzwertüber- oder -unterschreitung der gemessenen zweiten Messgröße repräsentieren.

Vorzugsweise ist die erste Sensoreinrichtung jeweils eine Geschwindigkeitsmesseinrichtung und die erste Messgröße die Fahrzeuggeschwindigkeit und die zweite Sensoreinrichtung jeweils eine Abstandsmesseinrichtung zur Messung des Abstandes des jeweiligen Fahrzeugs zu einem vorausfahrenden und/ oder nachfolgenden Fahrzeug und die zweite Messgröße der Abstand des jeweiligen Fahrzeugs zu einem vorausfahrenden und/ oder nachfolgenden Fahrzeug. Ausführungsformen sehen zumindest für das erste Fahrzeug vor, dass das erfindungsgemäße Verfahren dadurch gekennzeichnet ist, dass die Position des ersten Fahrzeug wiederholt bestimmt wird und einerseits anhand einer oder mehrerer bestimmter Positionen erkannt wird, dass das erste Fahrzeug einen Streckenabschnitt befährt, der einer verkehrsbedingten Maut unterworfen ist, und im Zuge dieser Erkennung ein Berichtsmodus des ersten Fahrzeugs aktiviert wird, in dem das erste Fahrzeug befähigt ist, die erste Feststellung zu treffen und Daten der ersten Feststellung funktechnisch zu versenden, sowie andererseits anhand einer oder mehrerer bestimmter Positionen erkannt wird, dass das erste Fahrzeug einen Streckenabschnitt befährt, der keiner verkehrsbedingten Maut unterworfen ist, und im Zuge dieser Erkennung der Berichtsmodus des ersten Fahrzeugs deaktiviert wird, wodurch dem ersten Fahrzeug zumindest die Fähigkeit genommen wird, Daten der ersten Feststellung zu versenden. Vorzugsweise ist im Falle des deaktivierten Berichtsmodus auch die Fähigkeit des ersten Fahrzeugs aufgehoben, die erste Feststellung zu treffen.
In äquivalenter Weise kann alternativ oder kumulativ einerseits das Verlassen eines Streckenabschnittes erkannt werden, der keiner verkehrsbedingten Maut unterworfen ist, mit der Konsequenz, dass der Berichtsmodus aktiviert wird und andererseits das Verlassen eines Streckenabschnitts erkannt werden, der einer verkehrsbedingten Maut unterworfen ist, mit der Konsequenz, dass der Berichtsmodus deaktiviert wird.
Damit kann vermieden werden, dass in Gebieten Feststellungen getroffen oder gar Daten derselben versandt werden, die überhaupt nicht mit einer verkehrsbedingten Maut belegt sind. Diese Gebiete können Rast- und sonstige Parkplätze sein sowie Innenstadtbereiche, die mit Lichtsignalanlagen (Ampeln) bestückt sind. In diesen Gebieten ist ein Halt nicht nur verkehrsbedingt möglich, sondern auch nutzungsbedingt vorgesehen.
Es kann vorgesehen sein, dass das erfindungsgemäße Verfahren das funktechnische Empfangen wenigstens einer zweiten Nachricht, die infolge der von dem zweiten Fahrzeug getroffenen zweiten Feststellung über das Vorliegen eines außerordentlichen Verkehrsereignisses von dem zweiten Fahrzeug erzeugt und, Daten der ersten Feststellung umfassend, funktechnisch versendet wurde, umfasst.
In diesem Fall können Ausführungsformen des erfindungsgemäßen Verfahrens auch für das zweite Fahrzeug vorsehen, dass die Position des zweiten Fahrzeug wiederholt bestimmt wird und einerseits anhand einer oder mehrerer bestimmter Positionen erkannt wird, dass das zweite Fahrzeug einen Streckenabschnitt befährt, der einer verkehrsbedingten Maut unterworfen ist, und im Zuge dieser Erkennung ein Berichtsmodus des zweiten Fahrzeugs aktiviert wird, in dem das zweite Fahrzeug befähigt ist, die zweite Feststellung zu treffen und Daten der zweiten Feststellung funktechnisch zu versenden, sowie andererseits anhand einer oder mehrerer bestimmter Positionen erkannt wird, dass das zweite Fahrzeug einen Streckenabschnitt befährt, der keiner verkehrsbedingten Maut unterworfen ist, und im Zuge dieser Erkennung der Berichtsmodus des zweiten Fahrzeugs deaktiviert wird, wodurch dem zweiten Fahrzeug zumindest die Fähigkeit genommen wird, Daten der zweiten Feststellung zu versenden. Vorzugsweise ist im Falle des deaktivierten Berichtsmodus auch die Fähigkeit des zweiten Fahrzeugs abgestellt, die zweite Feststellung zu treffen.

Zur Erkennung der Größe der außerordentlichen Verkehrssituation sehen Ausführungsformen der Erfindung vor, dass die datentechnische Verarbeitung umfasst: a) eine Sammlung von mehreren ersten Nachrichten mit zeitlichen Daten erster Feststellungen von mehreren ersten Fahrzeugen, b) die Zählung von ersten Nachrichten, deren zeitliche Daten innerhalb eines vorgegebenen Zeitrahmens liegen, c) die Bestimmung eines Parameters, der von der Anzahl der gezählten ersten Nachrichten abhängt sowie d) die Erkennung einer mauterheblichen Verkehrssituation anhand des Vergleiches des Parameters mit einem vorgegebenen Schwellwert, wenn der Vergleich ergibt, dass der Parameter den vorgegeben Schwellwert über- oder unterschreitet, wobei das Erheben der verkehrsbedingten Mautgebühr nur bei Erkennung der mauterheblichen Verkehrssituation, die eine vorgegebene Mindestgröße der außerordentlichen Verkehrssituation überschreitet, erfolgt. Dabei kann auch die zweite Feststellung des zweiten Fahrzeugs in Sammlung, die Zählung, die Parameterbestimmung und die Erkennung der mauterheblichen Verkehrssituation mit einfließen.
Damit wird ein nachvollziehbares Verfahren zur Beurteilung der Größe der außerordentlichen Verkehrssituation geschaffen, von dem erste Nachrichten von den ersten Fahrzeugen versendet wurden. Spontane, singulär empfangene erste Nachrichten können kleine, lokale außerordentliche Verkehrssituationen betreffen, die sich schnell wieder auflösen und keine Kette von weiteren ersten Nachrichten hervorrufen. Derartige, unwesentliche Ereignisse sollten nicht zu einer Mauterhebung führen. Größere, sich innerhalb des besagten Zeitrahmes aufbauende außerordentliche Verkehrssituationen, die zu einer Akkumulation einer Vielzahl von ersten Nachrichten innerhalb des besagten Zeitrahmens führen, sollten hingegen zu einer Mauterhebung für die Fahrzeuge führen, für die ihre Beteiligung an dieser außerordentliche Verkehrssituationen ebenfalls festgestellt wurde oder die ihre Beteiligung daran festgestellt haben.
Im einfachsten Falle ist der Parameter linear abhängig von der Anzahl der innerhalb des vorgegebenen Zeitrahmens empfangenen ersten Nachrichten. Nichtlineare Abhängigkeiten sind ebenfalls möglich.
Es ist auch möglich, mehrere Parameter, mehrere Zeitrahmen und/ oder mehrere Schwellwerte vorzusehen, um je nach Parameter, Zeitrahmen und/ oder Schwellwert eine andere oder weitere Mautgebühr zu erheben, die unterschiedlichen Verkehrsdichten, Staulängen und/ oder Stauzeiten Rechnung trägt.
Beispielsweise kann die Anzahl erster Feststellungen erster Fahrzeuge, die einem außerordentlichen Verkehrsereignis entsprechen, verrechnet werden mit der Anzahl dritter Feststellungen dritter Fahrzeuge, die einem ordentlichen Verkehrsereignis entsprechen. Die Länge eines Staus reduziert sich nämlich, wenn am Stauanfang angeordnete dritte Fahrzeuge wieder Fahrt aufnehmen.

Der Empfang der ersten Nachricht oder mehrerer erster Nachrichten und/ oder ihre Verarbeitung können dezentral in dem zweiten Fahrzeug oder zentral in einer zentralen Datenverarbeitungseinrichtung erfolgen. Im ersten Fall wird zur Nachrichtenübertragung von Fahrzeug zu Fahrzeug kurzreichweitige Car-to-Car-Kommunikation, zum Beispiel DSRC (dedicated short-range communication), eingesetzt, im zweiten Fall wird zur Nachrichtenübertragung von Fahrzeug zu Zentrale beispielsweise langreichweitige Mobilfunk-Kommunikation eingesetzt. Möglich, jedoch weniger bevorzugt, ist auch eine DSRC-Kommunikation mit straßenseitigen Einrichtungen, die zumindest zeitweise in datentechnischer Verbindung mit einer zentralen Datenverarbeitungseinrichtung stehen. Entsprechende Kommunikationseinrichtungen und Prozessoren sind dazu in den ersten und zweiten Fahrzeugen sowie gegebenenfalls in einer Zentrale vorzusehen.
Die folgenden Ausführungsformen tragen diesen unterschiedlichen Ausprägungen Rechnung.

Bezüglich des dezentralen Empfangs und der dezentralen Verarbeitung sehen Ausführungsformen der Erfindung vor, dass die datentechnische Verarbeitung der ersten Nachricht und der zweiten Feststellung von einem Prozessor durchgeführt wird, der von einer Fahrzeugeinrichtung des zweiten Fahrzeugs umfasst und mit einer funktechnischen Empfangseinrichtung des zweiten Fahrzeugs zum Empfang der ersten Nachricht datentechnisch gekoppelt ist.
Damit wird eine einfache Möglichkeit geschaffen, die ersten Nachrichten an dem Ort zu empfangen und zu verarbeiten, an dem sie ihre mögliche mauterhebende Wirkung entfalten können. Die begrenzte Reichweite einer kurzreichweitigen Car-to-Car-Kommunikation stellt dabei vorteilhaft teilweise den benötigten kausalen Zusammenhang von erster Feststellung und zweiter Feststellung her.
Dabei führt das bloße Empfangen von ersten Nachrichten erfindungsgemäß noch nicht zu einer Mauterhebung. Diese bleibt abhängig von der zweiten Feststellung eines außerordentlichen Verkehrsereignisses des zweiten Fahrzeugs, weil es ja sein kann, dass das zweite Fahrzeug nur erste Nachrichten über ein außerordentliches Verkehrsereignis empfängt, das auf der Gegenfahrbahn oder einer Parallelstraße vorliegt und an dem das zweite Fahrzeug nicht beteiligt ist.
Zur Vermeidung einer verkehrsbedingten Mauterhebung, die auf einem außerordentlichen Verkehrsereignis der Gegenfahrbahn oder einer Parallelstraße beruht, für eine zweites Fahrzeug, das ein singuläres, einzig auf das zweite Fahrzeug bezogenes, außerordentliches Verkehrsereignis feststellt, ist erfindungsgemäß vorgesehen, wenigstens Daten der ersten Feststellung mit Daten der zweiten Feststellung auf Ähnlichkeit zu untersuchen. Dabei müssen diese Daten geeignet sein, die nötige Unterscheidung von mautbestimmenden Fahrzeuggruppen auf entgegengesetzten Fahrbahnen oder verschiedenen Parallelstraßen zu treffen. Dies können wiederum Identifikationsdaten von Streckenabschnitten dieser Fahrbahnen oder Parallelstraßen sein, die aufgrund des Fahrverlaufes der Fahrzeuge anderenorts ermittelt wurden und/ oder Winkeldaten der Fahrtrichtung.

Folgt aus der dezentralen datentechnischen Verarbeitung der ersten Nachrichten in dem zweiten Fahrzeug, welches ebenfalls das außerordentliches Verkehrsereignis festgestellt hat, die Erhebung einer Mautgebühr, so kann diese Erhebung dezentral im zweiten Fahrzeug oder zentral in einer zentralen Datenverarbeitungseinrichtung durchgeführt werden. Im ersten Fall kann die Erhebung durch diejenige Fahrzeugeinrichtung des zweiten Fahrzeugs erfolgen, die die ersten Nachrichten empfängt und verarbeitet.
Beispielsweise kann eine durch das Ergebnis datentechnischen Verarbeitung der Daten ersten Feststellung und der zweiten Feststellung bedingte Erhebung einer verkehrsbedingten Mautgebühr für das zweite Fahrzeug durch Abzug eines Mautgebühren-Betrages von einem elektronischen Mautguthaben eines von der Fahrzeugeinrichtung des zweiten Fahrzeugs umfassten Mautguthaben-Datenspeichers oder durch Hinzufügen eines Mautgebühren-Betrages zu einer elektronischen Mautschuld eines von der Fahrzeugeinrichtung des zweiten Fahrzeugs umfassten Mautschulden-Datenspeichers erfolgen.
Der zweite Fall betrifft Ausführungsformen der Erfindung, nach denen ein durch das Ergebnis der datentechnischen Verarbeitung von Daten der ersten Feststellung und der zweiten Feststellung bedingtes Senden einer Anweisung zur Erhebung einer verkehrsbedingten Mautgebühr von der Fahrzeugeinrichtung des zweiten Fahrzeugs über eine Mobilfunk-Verbindung zwischen der Fahrzeugeinrichtung des zweiten Fahrzeugs und einer zentralen Datenverarbeitungseinrichtung des Mautsystems an die zentralen Datenverarbeitungseinrichtung zur Erhebung der angewiesenen, auf das erste und/ oder zweite Fahrzeug bezogenen, verkehrsbedingten Mautgebühr durch die zentralen Datenverarbeitungseinrichtung erfolgt.

Bezüglich des zentralen Empfangs und der zentralen Verarbeitung sehen Ausführungsformen der Erfindung vor, dass die datentechnische Verarbeitung von einem Prozessor durchgeführt wird, der von einer zentralen Datenverarbeitungseinrichtung des Mautsystems umfasst oder durch eine solche gebildet wird und datentechnisch mit wenigstens einer ersten funktechnischen Empfangseinrichtung zum Empfang der ersten Nachricht sowie einer zweiten Nachricht gekoppelt ist, die infolge wenigstens der von dem zweiten Fahrzeug getroffenen zweiten Feststellung von dem zweiten Fahrzeug, Daten der zweiten Feststellung umfassend, erzeugt und funktechnisch versendet wurde.

Vorzugsweise wird dabei der benötigte räumliche kausale Zusammenhang von in einem begrenzten Zeitrahmen empfangenen ersten Nachrichten hergestellt, indem die ersten Nachrichten und die zweite Nachricht jeweils die Kennungen von Streckenabschnitten umfassen auf denen das jeweilige Fahrzeug das außerordentliches Verkehrsereignis festgestellt hat. Kennungen gleicher Streckenabschnitte und einander unmittelbar benachbarter Streckenabschnitte, sofern diese hinsichtlich der zeitlichen Rangfolge der Feststellung ihrer außerordentlichen Verkehrsereignisse einer Ausdehnung der zugrunde liegenden außerordentlichen Verkehrssituation von einem zweiten Streckenabschnitt auf einen, dem zweiten Streckenabschnitt vorhergehenden ersten Streckenabschnitt entsprechen, weisen dabei auf einen räumlichen kausalen Zusammenhang der Nachrichten über die Feststellung eines außerordentlichen Verkehrsereignisses hin.
Vorzugsweise erfolgt der Versand der Nachrichten über ein Mobilunknetz zwischen der Fahrzeugen und der zentralen Datenverarbeitungseinrichtung.
Als vorteilhaft gegenüber dem Stand der Technik ist bei diesem Verfahren herauszustellen, dass das Mobilfunknetz nicht durch die periodische Übertragung von Nachrichten zur zentralseitigen Feststellung eines außerordentlichen Verkehrsereignisses belastet wird, sondern in einem demgegenüber wesentlich reduzierten Umfang nur durch die ereignisbedingten Nachrichten, zu denen das außerordentliche Verkehrsereignis dezentral festgestellt wurde.
Das heißt: das Mobilfunknetz (allgemeiner ein jedes Kommunikationsnetzwerk, in dem eine Verbindung mit der Zentrale besteht), wird nicht dauernd belastet, sondern erfindungsgemäß nur dann, wenn es tatsächlich einen Grund dafür gibt.

Vorteilhafte Weiterbildungen dieser Ausführungsformen sehen vor, dass die erste Nachricht und die zweite Nachricht jeweils über eine Mobilfunk-Verbindung an die zentrale Datenverarbeitungseinrichtung gesendet werden, eine durch das Ergebnis der datentechnischen Verarbeitung der ersten Nachrichten bedingte Anweisung zur Erhebung einer verkehrsbedingten Mautgebühr von der zentralen Datenverarbeitungseinrichtung über eine Mobilfunk-Verbindung zwischen der zentralen Datenverarbeitungseinrichtung und dem zweiten Fahrzeug an das zweite Fahrzeug gesendet wird, und die angewiesene verkehrsbedingte Mautgebühr durch eine Fahrzeugeinrichtung des zweiten Fahrzeugs erhoben wird.
Damit kann die Mauterhebung, insbesondere die Erhebung einer verkehrsbedingten Zusatzmaut zusätzlich zu einer verkehrsbedingungslosen Grundgebühr, die bereits auf der Fahrzeugeinrichtung des zweiten Fahrzeugs unabhängig von der Kommunikation mit einer zentralen Datenverarbeitungseinrichtung erhoben wurde, auf die Fahrzeugeinrichtung des zweiten Fahrzeugs beschränkt werden. Ein im Zusammenhang mit dieser verkehrsbedingten Mauterhebung erzeugtes Signal informiert den Fahrer des zweiten Fahrzeugs dementsprechend zeitnah. Ein Gebührenabzug von einem mit der Fahrzeugeinrichtung des zweiten Fahrzeugs mitgeführten - gegebenenfalls anonym - vorausbezahlten (pre-paid) Guthaben wird damit auch für die verkehrsbedingt erhobene Maut möglich.

Besonders vorteilhaft ist es, wenn während des Zeitraums, der zwischen dem Senden der zweiten Nachricht von dem zweiten Fahrzeug an die zentrale Datenverarbeitungseinrichtung und dem Senden der Mauterhebungsanweisung oder einer Nachricht darüber, dass das Senden einer Mauterhebungsanweisung unterbleibt, von der zentralen Datenverarbeitungseinrichtung an das zweite Fahrzeug liegt, die Mobilfunk-Verbindung zwischen dem zweiten Fahrzeug und der zentralen Datenverarbeitungseinrichtung ununterbrochen aufrecht erhalten bleibt.
Damit wird es möglich, die Identität des zweiten Fahrzeugs gegenüber der zentralen Datenverarbeitungseinrichtung zu verschlüsseln und geheim zu halten, um möglichen Datenschutzanforderungen zu genügen.

Gemäß einem zweiten Aspekt der Erfindung wird eine Fahrzeugeinrichtung zur Erhebung einer verkehrsbedingten Mautgebühr für wenigstens ein an einer mautbestimmenden Gruppe mehrerer Fahrzeuge beteiligtes Fahrzeug vorgeschlagen, wobei die Fahrzeugeinrichtung eine funktechnische Empfangseinrichtung aufweist, von einem zweiten Fahrzeug umfasst ist und ausgebildet ist, a) selbsttätig eine Feststellung über das Vorliegen eines außerordentlichen Verkehrsereignisses zu treffen, b) wenigstens eine erste Nachricht von wenigstens einem ersten Fahrzeug über die funktechnische Empfangseinrichtung zu empfangen, c) Daten der ersten Nachricht und der Feststellung im Zuge einer datentechnischen Verarbeitung dieser Daten miteinander zu vergleichen, d) bei Ermittlung einer Ähnlichkeit der Daten innerhalb eines vorgegeben Rahmens eine Zuordnung des ersten Fahrzeugs und des zweiten Fahrzeugs zur mautbestimmenden Gruppe zu erkennen und e) infolgedessen i) eine auf das zweite Fahrzeug bezogene verkehrsbedingte Mautgebühr zu erheben und/ oder ii) eine Anweisung zur Erhebung einer auf das erste Fahrzeug und/ oder das zweite Fahrzeug bezogenen verkehrsbedingten Mautgebühr über eine funktechnische Sendeeinrichtung an eine zentrale Datenverarbeitungseinrichtung zu senden. Insbesondere ist die Fahrzeugeinrichtung ausgebildet, die Daten der Feststellung infolge des Treffens der Feststellung zu erzeugen.

Dieser Aspekt der Erfindung kommt in der Variante i) allein vorteilhaft vollständig ohne eine zentrale Einrichtung aus, die an der Verarbeitung der ersten Nachrichten und/ oder zur Mautbestimmung für das zweite Fahrzeug beteiligt sein könnte. In einem EETS-Szenario (EETS = European Electronic Toll Service) gemäß der Richtlinie 2004/52/EC vom 29. April 2004 über die Interoperabilität von elektronischen Straßenmautsystemen könnte ein Mautdienstleister ein Computerprogramm zur Verarbeitung der ersten Nachrichten für eine jede zur Mauterhebung geeignete On-board Unit (OBU), die über Mittel zur Car-to-Car-Kommunikation verfügt, bereitstellen (beispielsweise durch Herunterladen über das Mobilfunknetz, falls die OBU über Mittel zur Mobilfunk-Kommunikation verfügt), um für jeden Mautbetreiber oder einen anderen Mautdienstleister die Erhebung verkehrsbedingter Mautgebühren durchzuführen.
In der Variante ii) wird es möglich, eine Mautgebührenerhebung für ein anderes (das erste) Fahrzeug als das eigene (das zweite Fahrzeug) oder das eigene, zweite Fahrzeug zu bewirken, indem eine entsprechende Erhebungsaufforderung, beispielsweise über ein Mobilfunknetz an eine zentrale Datenverarbeitungseinrichtung gesendet wird.
Auch eine Mischform ist denkbar, in der eine Erhebung einer auf das zweite Fahrzeug bezogenen verkehrsbedingten Maut dezentral in der Fahrzeugeinrichtung des zweiten Fahrzeugs erfolgt und eine Anweisung zur Erhebung einer auf das erste Fahrzeug bezogenen verkehrsbedingten Mautgebühr an die zentrale Datenverarbeitungseinrichtung erfolgt. Verfährt eine von einem ersten Fahrzeug umfasste Fahrzeugeinrichtung in gleicher Weise, indem es eine auf das erste Fahrzeug bezogene verkehrsbedingte Mautgebühr erhebt und eine Anweisung zur Erhebung einer auf das zweite Fahrzeug bezogene verkehrsbedingten Mautgebühr an die zentrale Datenverarbeitungseinrichtung versendet, so kann vorteilhaft eine wirksame zentrale Kontrolle auf dezentral erhobene verkehrsbedingte Mautgebühren erfolgen.

Ausführungsformen der erfindungsgemäßen Fahrzeugeinrichtung sehen vor, dass die Fahrzeugeinrichtung eine funktechnische Sendeeinrichtung umfasst - insbesondere eine Kommunikationseinrichtung, die die funktechnische Empfangseinrichtung und eine solche funktechnische Sendeeinrichtung vereinigt umfasst -, mit der es eine zweite Nachricht mit Daten der Feststellung aussendet, die von anderen Fahrzeugen - beispielsweise auch ersten Fahrzeugen - empfangen werden und seitens der anderen Fahrzeuge zur Ermittlung einer auf sie bezogenen verkehrsbedingten Mautgebühr herangezogen wird.
Insbesondere sind Daten der Feststellung auf die Über- oder Unterschreitung des Grenzwertes bezogen. Vorzugsweise enthält ein Datensatz der zweiten Nachricht ein binäres Flag, dass eine Überschreitung mit "1" gekennzeichnet und eine Unterschreitung mit "0" (oder umgekehrt). Bei Vorliegen mehrerer Grenzwerte enthält die zweite Nachricht zusätzlich vorzugsweise ein Datenelement, das einen bestimmten Grenzwert repräsentiert oder identifizierbar macht. Eine solche Datenstruktur ist auch für die ersten Nachrichten vorsehbar.

Ausführungsformen der erfindungsgemäßen Fahrzeugeinrichtung sehen vor, dass die Fahrzeugeinrichtung eine Sensoreinrichtung umfasst, die wenigstens einen Messwert wenigstens einer eine vorgegebene Verkehrssituation repräsentierenden Messgröße erfasst und die Fahrzeugeinrichtung dazu ausgebildet ist, den Messwert der erfassten Messgröße mit einem Grenzwert für diese Messgröße zu vergleichen, um die Feststellung über das Vorliegen eines außerordentlichen Verkehrsereignisses anhand einer Über- oder Unterschreitung dieses Grenzwertes durch den Messwert zu treffen und Daten dieser Feststellung zu erzeugen.
Mit einer solchen Sensoreinrichtung wird es möglich, dass die Fahrzeugeinrichtung das zweite Fahrzeug und/ oder seine Umgebung daraufhin überprüft, ob ein außerordentliches Verkehrsereignis vorliegt. Dies ist erfindungsgemäß zunächst nur ein auf das zweite Fahrzeug bezogenes singuläres außerordentliches Verkehrsereignis, das ohne wenigstens eine erste Nachricht von einem ersten Fahrzeug noch nicht repräsentativ für eine mauterhebliche Verkehrssituation sein muss. Erst mehrere Feststellungen über ein außerordentliches Verkehrsereignis führen erfindungsgemäß zu einer, mehrere Fahrzeuge übergreifenden, außerordentlichen Verkehrssituation, die eine Mautpflicht nach sich ziehen kann.
Die Sensoreinrichtung kann dazu dienen, Messgrößen für die Bewegung des zweiten Fahrzeugs bezogen auf sich selbst (Geschwindigkeit, Beschleunigung bei Bremsmanövern, Stillstandsdauer), Messgrößen die Position des zweiten Fahrzeugs bezogen auf andere Fahrzeuge - beispielsweise das erste Fahrzeug - (Abstand) oder Messgrößen für den Umgebungszustand des zweiten Fahrzeugs (Schadstoffkonzentration) zu erfassen und durch ein Vergleich eines entsprechenden Messwertes für wenigstens eine dieser Messgrößen mit einem Grenzwert festzustellen, ob ein auf das zweite Fahrzeug bezogenes außerordentliches Verkehrsereignis (verringerte Geschwindigkeit, starkes Bremsmanöver, längerer Halt, geringer Abstand zu einem vorausfahrenden oder nachfolgenden Fahrzeug, erhöhte Schadstoffkonzentration) vorliegt.

Insofern sehen diesbezüglich Ausführungsformen der Erfindung vor, dass die Sensoreinrichtung wenigstens eine oder mehrere der folgenden Messeinrichtungen umfasst oder durch wenigstens eine der folgenden Messeinrichtungen gebildet wird: wenigstens eine Geschwindigkeitsmesseinrichtung, wenigstens eine Abstandsmesseinrichtung, wenigstens eine Stillstandsdauermesseinrichtung, wenigstens eine Schadstoffkonzentrationsmesseinrichtung.
So sehen Ausführungsformen der Erfindung vor, dass die Sensor-/ Messeinrichtung die Geschwindigkeit des Fahrzeugs misst und die Fahrzeugeinrichtung dazu ausgebildet ist, bei Unterschreitung einer Mindestgeschwindigkeit das außerordentliche Verkehrsereignis einer möglichen, die Geschwindigkeit des Fahrzeugs beeinflussenden, außerordentlichen Verkehrssituation festzustellen und/ oder bei Überschreitung einer Richtgeschwindigkeit das außerordentliche Verkehrsereignis einer möglichen Auflösung der außerordentlichen Verkehrssituation festzustellen.
Zur Geschwindigkeitsmessung kann als Sensoreinrichtung ein Tachometer verwendet werden, das von einem Inkrementalgeber Impulse eines Fahrzeugreifens empfängt, deren Frequenz proportional zur Fahrzeuggeschwindigkeit ist. Alternativ der optional kann zur Geschwindigkeitsmessung als Sensoreinrichtung ein GNSS-Empfänger verwendet werden, der aus den Satellitensignalen eines Globalen Navigations-Satelliten-Systems (GNSS), die er empfängt, die Geschwindigkeit des Fahrzeugs berechnet.
Alternativ oder optional zu einer die Geschwindigkeit messenden Sensor-/ Messeinrichtung sehen Ausführungsformen der Erfindung vor, dass die Sensor-/ Messeinrichtung einen Abstand des Fahrzeuges zu einem vorausfahrenden und/ oder nachfolgenden Fahrzeug misst und die Fahrzeugeinrichtung dazu ausgebildet ist, bei Unterschreitung eines Mindestabstandes das erste Grenzwertsignal und/ oder bei Überschreitung eines Standardabstandes das zweite Grenzwertsignal des außerordentlichen Verkehrsereignisses einer möglichen, den Abstand zu dem vorausfahrenden und/ oder nachfolgenden Fahrzeug beeinflussenden, außerordentlichen Verkehrssituation festzustellen.
Zur Abstandsmessung kann als Sensor-/ Messeinrichtung ein Radar-Messgerät verwendet werden, das über eine Laufzeitmessung der ausgesendeten und am beabstandeten Objekt reflektierten Welle (Licht, Mikrowelle, Ultraschall) den Abstand zum Objekt misst. Alternativ der optional kann zur Abstandsmessung als Sensoreinrichtung die passive Autofokusmessung einer Kamera verwendet werden, die im Kontrast- und/ oder Phasenvergleichsverfahren arbeitet.
Alternativ oder optional dazu sehen Ausführungsformen der Erfindung vor, dass die Sensor-/ Messeinrichtung eine Beschleunigung des Fahrzeugs misst, und die Fahrzeugeinrichtung dazu ausgebildet ist, bei Überschreitung des Betrages eines negativen eines Mindestbeschleunigungswertes eines Bremsmanövers das außerordentliche Verkehrsereignis einer möglichen, das Bremsverhalten Abstand zu dem vorausfahrenden und/ oder nachfolgenden Fahrzeug beeinflussenden, außerordentlichen Verkehrssituation festzustellen.
Zur Beschleunigungsmessung kann ein Beschleunigungssensor vom Typ eines Airbag-Sensors verwendet werden. Alternativ oder optional dazu sehen Ausführungsformen der Erfindung vor, dass die Sensor-/ Messeinrichtung eine Haltedauer des Fahrzeugs misst und die Fahrzeugeinrichtung dazu ausgebildet ist, bei Überschreitung einer Mindesthaltedauer das außerordentliche Verkehrsereignis einer möglichen, das Fortkommen blockierenden, außerordentlichen Verkehrssituation festzustellen.
Zur Haltedauermessung kann ein Geschwindigkeitssensor (siehe oben) oder ein Abstandssensor (siehe oben) in Verbindung mit einer Uhr verwendet werden.
Dazu kann der Prozessor der erfindungsgemäßen Fahrzeugeinrichtung ausgebildet sein, eine erste erfasste Messgröße mit einem ersten Grenzwert für diese erste Messgröße zu vergleichen, um die Feststellung über das Vorliegen eines außerordentlichen Verkehrsereignisses anhand einer Unterschreitung dieses ersten Grenzwertes zu treffen und Daten einer ersten Feststellung zu erzeugen sowie eine zweite erfasste Messgröße mit einem zweiten Grenzwert für diese zweite Messgröße zu vergleichen, um die Feststellung über das Vorliegen eines außerordentlichen Verkehrsereignisses anhand einer Überschreitung dieses zweiten Grenzwertes zu treffen und Daten einer zweiten Feststellung zu erzeugen, wobei der zweite Grenzwert größer ist als der erste Grenzwert.
Im Falle der Geschwindigkeitsmessung kann der erste Grenzwert 30 km/h betragen und der zweite Grenzwert 60 km/ h. Eine Unterschreitung von 30 km/h entspricht einem Halt oder zähfließendem Verkehr; eine Überschreitung von 60 km/ h entspricht der Wiederaufnahme flüssigen Verkehrs.
Im Falle der Abstandsmessung kann der erste Grenzwert 20 m betragen und der zweite Grenzwert 40 m. Eine Unterschreitung von 20 m entspricht einem Halt oder zähfließendem Verkehr; eine Überschreitung von 40 m entspricht der Wiederaufnahme flüssigen Verkehrs.

Alternativ oder optional dazu sehen Ausführungsformen der Erfindung vor, dass die Sensor-/ Messeinrichtung die Konzentration wenigstens eines Schadstoffes in der Umgebungsluft des Fahrzeugs misst und die Fahrzeugeinrichtung dazu ausgebildet ist, bei Überschreitung einer Höchstkonzentration an diesem Schadstoff das erste Grenzwertsignal und/ oder bei Unterschreitung einer Richtkonzentration an diesem Schadstoff das zweite Grenzwertsignal eines außerordentlichen Verkehrsereignisses einer die Schadstoffkonzentration der Umgebungsluft negativ oder positiv beeinflussenden außerordentlichen Verkehrssituation festzustellen.
Derartige Schadstoffe können sein: Kohlendioxid, Kohlenmonoxid, Ozon, Stickstoffoxide (insbesondere NO₂), Schwefeloxide (insbesondere SO₂) und Feinstaub.

Geschwindigkeits-, Abstands-, Beschleunigungs-, Haltedauer- und/ oder Schadstoffkonzentrationsmesseinrichtungen können von ein- und derselben Sensoreinrichtung oder von verschiedenen, baulich voneinander getrennten Sensoreinrichtungen umfasst sein, die jeweils mit einem Prozessor der Fahrzeugeinrichtung in datentechnischer Verbindung stehen. Sind mehrere verschiedenen oder gleichartige Messeinrichtungen in der Fahrzeugeinrichtung vorgesehen, so genügt es vorzugsweise, dass eine der Messgrößen der Messeinrichtungen einen auf sie bezogenen Grenzwert über- oder unterschreitet, damit die Fahrzeugeinrichtung das außerordentliche Verkehrsereignis feststellen kann. Um die Feststellung des außerordentlichen Verkehrsereignisses weniger fehleranfällig auszuführen, kann jedoch stattdessen auch vorgesehen sein, die Feststellung des außerordentlichen Verkehrsereignisses davon abhängig zu machen, ob mehrere Messgrößen verschiedener und/ oder gleichartiger Messeinrichtungen einen auf sie bezogenen Grenzwert über- oder unterschreiten.

Ausführungsformen der Erfindung sehen vor, dass die Fahrzeugeinrichtung eine oder mehrere der besagten Messeinrichtungen zur Messung von zwei in zeitlichen Abstand aufeinanderfolgenden ersten und zweiten Messgrößen umfasst und die Fahrzeugeinrichtung dazu ausgebildet ist, wenigstens die erste Messgrößen mit dem auf sie bezogenen Grenzwert zu vergleichen um im Falle dessen, dass die erste Messgrößen einen ersten Grenzwert über- oder unterschreitet, ein der Feststellung eines ersten außerordentlichen Verkehrsereignisses entsprechendes erstes Signal an die zentrale Datenverarbeitungseinrichtung zu senden, und um im Falle dessen, dass die zweite Messgröße einen zweiten Grenzwert über- oder unterschreitet, ein der Feststellung eines zweiten außerordentlichen Verkehrsereignisses entsprechendes zweites Signal an die zentrale Datenverarbeitungseinrichtung zu senden.
Beispielsweise kann die Überschreitung des ersten Grenzwertes einem eine erhöhte Verkehrsbelastung repräsentierenden ersten außerordentlichen Verkehrsereignis entsprechen und die Unterschreitung des zweiten Grenzwertes einem eine erniedrigte Verkehrsbelastung repräsentierenden zweiten außerordentlichen Verkehrsereignis entsprechen. Erste und zweite Signale können in der zentralen Datenverarbeitungseinrichtung verarbeitet werden, um in Abhängigkeit von dem Ergebnis der Verarbeitung eine Anweisung zur Erhebung oder Nichterhebung einer verkehrsbedingten Mautgebühr zu erzeugen.

Es kann vorgesehen sein, dass die Fahrzeugeinrichtung eine funktechnische Sendeeinrichtung umfasst (beispielsweise indem die funktechnische Empfangseinrichtung als funktechnische Sendeempfangseinrichtung ausgebildet ist) und ausgebildet ist, Daten der Feststellung zu erzeugen und diese Daten im Umfang einer zweiten Nachricht mittels der funktechnischen Sendeeinrichtung zu versenden.
Dabei ist es unerheblich, ob die Feststellung, die Datenerzeugung oder der Nachrichtenversand vor dem Empfang erfolgt. Vorzugsweise ist die erfindungsgemäße Fahrzeugeinrichtung ausgebildet, den Vergleich von Daten der ersten Nachricht sowohl mit Daten einer Feststellung durchführen zu können, die vor dem Empfang der Daten der ersten Nachricht erzeugt wurden, als auch mit Daten einer Feststellung durchführen zu können, die nach dem Empfang der Daten der ersten Nachricht erzeugt wurden.
Ausführungsformen der erfindungsgemäßen Fahrzeugeinrichtung gemäß umfasst die erfindungsgemäße Fahrzeugeinrichtung eine Positionsbestimmungseinrichtung, die dazu ausgebildet ist, wiederholt - beispielsweise anhand von durch einen GNSS-Empfänger empfangenen Daten von Satelliten eines Globalen Satellitennavigationssystems (GNSS) - Positionen der Fahrzeug zu bestimmen, wobei die Fahrzeugeinrichtung ausgebildet ist, anhand einer oder mehrerer bestimmter Positionen das Befahren eines Streckenabschnittes zu erkennen, der einer verkehrsbedingten Maut unterworfen ist, und im Zuge dieser Erkennung einen Berichtsmodus der Fahrzeugeinrichtung zu aktivieren, in dem die Fahrzeugeinrichtung befähigt ist, die Feststellung zu treffen und die erste Nachricht zu empfangen, sowie andererseits anhand einer oder mehrerer bestimmter Positionen das Befahren eines Streckenabschnitts zu erkennen, der keiner verkehrsbedingten Maut unterworfen ist, und im Zuge dieser Erkennung den Berichtsmodus der Fahrzeugeinrichtung zu deaktivieren, wodurch zumindest die Fähigkeit der Fahrzeugeinrichtung, Nachrichten vom Typ der ersten Nachricht zu empfangen, unterdrückt wird.
Vorzugsweise bewirkt die Aktivierung des Berichtsmodus zusätzlich die Befähigung der Fahrzeugeinrichtung zum Versenden einer zweiten Nachricht mit Daten der Feststellung und die Deaktivierung des Berichtsmodus zusätzlich die Unterdrückung der Fähigkeit der Fahrzeugeinrichtung, eine zweite Nachricht mit Daten der Feststellung zu versenden.

Gemäß einem dritten Aspekt der Erfindung ist eine zentrale Datenverarbeitungseinrichtung zur Erhebung einer verkehrsbedingten Mautgebühr für wenigstens ein an einer mautbestimmenden Gruppe mehrerer Fahrzeuge beteiligtes Fahrzeug, ausgebildet, a) wenigstens eine verkehrsbedingt ausgelöste, funktechnisch versendete, erste Nachricht von wenigstens einem ersten Fahrzeug zu empfangen, b) wenigstens eine verkehrsbedingt ausgelöste, funktechnisch versendete, zweite Nachricht von wenigstens einem zweiten Fahrzeug zu empfangen, und c) die erste Nachricht und die zweite Nachricht zu verarbeiten, um eine Anweisung zur Erhebung einer verkehrsbedingten Mautgebühr in Bezug auf das zweite Fahrzeug zu erzeugen, wenn ein im Zuge der datentechnischen Verarbeitung erfolgter Vergleich von Daten der ersten Nachricht und der zweiten Nachricht eine Ähnlichkeit von Daten der ersten Nachricht mit Daten der zweiten Nachricht innerhalb eines vorgegebenen Rahmens ergibt, wodurch das erste Fahrzeug und das zweite Fahrzeug der mautbestimmenden Gruppe von Fahrzeugen zugeordnet sind.

Dieser Aspekt der Erfindung benötigt zwar eine zentrale Einrichtung, kommt aber vorteilhaft ohne zusätzliche Mittel zur Car-to-Car-Kommunikation in den Fahrzeugeinrichtungen aus. Damit können auch Fahrzeuggeräte (OBUs) zur erfindungsgemäßen Erhebung einer verkehrsbedingten Maut verwendet werden, die nur über eine Mobilfunk-Kommunikationseinrichtung, nicht jedoch über eine Car-to-Car-Kommunikationseinrichtung verfügen.
In einem EETS-Szenario (EETS = European Electronic Toll Service) gemäß der Richtlinie 2004/52/EC vom 29. April 2004 über die Interoperabilität von elektronischen Straßenmautsystemen könnte ein über die besagte zentrale Datenverarbeitungseinrichtung verfügender Mautdienstleister ein Computerprogramm zur Verarbeitung der Sensormesswerte, zur Versendung von Nachrichten über die Feststellung eines außerordentlichen Verkehrsereignisses und zur Entgegennahme einer Mauterhebungsanweisung von einer zentralen Datenverarbeitungseinrichtung für eine jede zur Mauterhebung geeignete On-board Unit (OBU), die über Mittel zur Mobilfunk-Kommunikation verfügt, beispielsweise durch Herunterladen über das Mobilfunknetz, bereitstellen, um für jeden Mautbetreiber oder einen anderen Mautdienstleister die Erhebung verkehrsbedingter Mautgebühren durchzuführen.

Damit wird eine zentrale Datenverarbeitungseinrichtung geschaffen, die in der Lage ist, einem zweiten Fahrzeug eine verkehrsbedingte Maut dafür aufzuerlegen, dass das zweite Fahrzeug an einer mautpflichtigen Verkehrssituation beteiligt ist, wobei die mautpflichtige Verkehrssituation durch die zentrale Datenverarbeitungseinrichtung anhand der ersten Nachrichten von an der mautpflichtigen Verkehrssituation beteiligten ersten Fahrzeugen erkannt wird und eine Beteiligung des zweiten Fahrzeugs an der mautpflichtigen Verkehrssituation anhand der zweiten Nachricht des zweiten Fahrzeugs erkannt wird.
Alternativ oder optional zur Versendung einer Anweisung zur Erhebung der verkehrsbedingten Mautgebühr an das zweite Fahrzeug kann vorgesehen sein, dass die zentrale Datenverarbeitungseinrichtung die verkehrsbedingte Mautgebühr einem zentral gespeicherten Datensatz von Mautgebühren des zweiten Fahrzeugs hinzufügt. Dazu muss allerdings die Identität des zweiten Fahrzeugs oder einer vom zweiten Fahrzeug mitgeführten Fahrzeugeinrichtung, die die zweite Nachricht sendet, zusammen mit der zweiten Nachricht übermittelt werden.
Auf die Bekanntgabe der Identität des zweiten Fahrzeugs kann vorteilhaft für den Datenschutz dann verzichtet werden, wenn die Datenverarbeitungseinrichtung dazu ausgebildet ist, nach dem Empfang der zweiten Nachricht die Mobilfunk-Verbindung mit dem zweiten Fahrzeug aufrecht zu erhalten und solange nicht zu beenden, bis die Datenverarbeitungseinrichtung die besagte Anweisung oder eine Nachricht darüber, dass keine solche Anweisung erfolgt, an das zweite Fahrzeug gesendet hat. Diesbezüglich sehen Ausführungsformen der erfindungsgemäßen zentralen Datenverarbeitungseinrichtung vor, dass die Datenverarbeitungseinrichtung ausgebildet ist, a) die erste Nachricht des ersten Fahrzeugs über eine Mobilfunk-Verbindung zwischen dem ersten Fahrzeug und der zentralen Datenverarbeitungseinrichtung zu empfangen, b) die zweite Nachricht des zweiten Fahrzeugs über eine Mobilfunk-Verbindung zwischen dem zweiten Fahrzeug und der zentralen Datenverarbeitungseinrichtung zu empfangen, und c) nach dem Empfang der zweiten Nachricht die Mobilfunk-Verbindung mit dem zweiten Fahrzeug aufrecht zu erhalten und solange nicht zu beenden, bis die Datenverarbeitungseinrichtung die besagte Anweisung oder eine Nachricht darüber, dass keine solche Anweisung erfolgt, an das zweite Fahrzeug gesendet hat.

Ein erfindungsgemäßes Mautsystem besteht schließlich darin, mehrere auf verschiedene Fahrzeuge verteilte, erfindungsgemäße Fahrzeugeinrichtungen und/ oder wenigstens eine erfindungsgemäße zentrale Datenverarbeitungseinrichtung zu umfassen und/ oder zur Durchführung eines erfindungsgemäßen Verfahrens ausgebildet zu sein.

Nachfolgend wird die Erfindung anhand von drei Ausführungsbeispielen näher erläutert. Dazu zeigen
- Fig. 1: mit Fig. 1a eine Kolonne von Fahrzeugen eines ersten und zweiten Ausführungsbeispieles, die auf einer Straße fahren, und mit Fig 1b eine aus dieser Kolonne gebildete erfindungsgemäße mautbestimmende Gruppe von Fahrzeugen des ersten und des zweiten Ausführungsbeispieles,
- Fig. 2: eine erfindungsgemäße Fahrzeugeinrichtung des ersten und des zweiten Ausführungsbeispieles,
- Fig. 3: das Ablaufdiagramm für den Ablauf des erfindungsgemäßen Verfahrens des ersten Ausführungsbeispieles auf der erfindungsgemäßen Fahrzeugeinrichtung,
- Fig. 4: das Ablaufdiagramm für den Ablauf eines erfindungsgemäßen Verfahrens des zweiten Ausführungsbeispieles auf der erfindungsgemäßen Fahrzeugeinrichtung,
- Fig. 5: mit Fig. 5a eine Kolonne von Fahrzeugen eines dritten Ausführungsbeispieles, die auf einer Straße fahren und mit Fig. 5b eine aus dieser Kolonne zusammen mit weiteren Fahrzeugen gebildete erfindungsgemäße mautbestimmende Gruppe von Fahrzeugen des dritten Ausführungsbeispieles,
- Fig. 6: eine erfindungsgemäße Fahrzeugeinrichtung des dritten Ausführungsbeispieles,
- Fig. 7: ein erfindungsgemäßes Mautsystem des dritten Ausführungsbeispieles
- Fig. 8: das Ablaufdiagramm eines erfindungsgemäßen Verfahrens des dritten Ausführungsbeispieles
- Fig. 9a: eine erste graphische Darstellung von im Verlaufe eines Zeitrahmens empfangenen erfindungsgemäßen Nachrichten des dritten Ausführungsbeispieles,
- Fig. 9b: eine zweite graphische Darstellung der im Verlaufe des Zeitrahmens empfangenen erfindungsgemäßen Nachrichten des dritten Ausführungsbeispieles,
- Fig. 9c: eine erste graphische Darstellung für einen ersten im Verlaufe des Zeitrahmens gebildeten Mautparameter und
- Fig. 9d: eine zweite graphische Darstellung für einen zweiten im Verlaufe des Zeitrahmens gebildeten Mautparameter.

### ERSTES AUSFÜHRUNGSBEISPIEL: DEZENTRALE MAUTERKENNUNG FÜR ANDERES FAHRZEUG

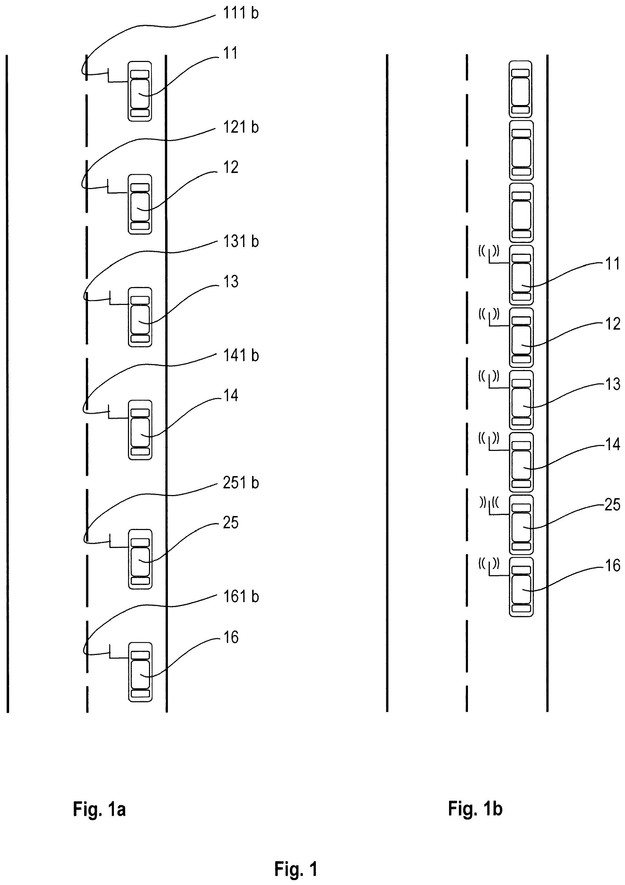

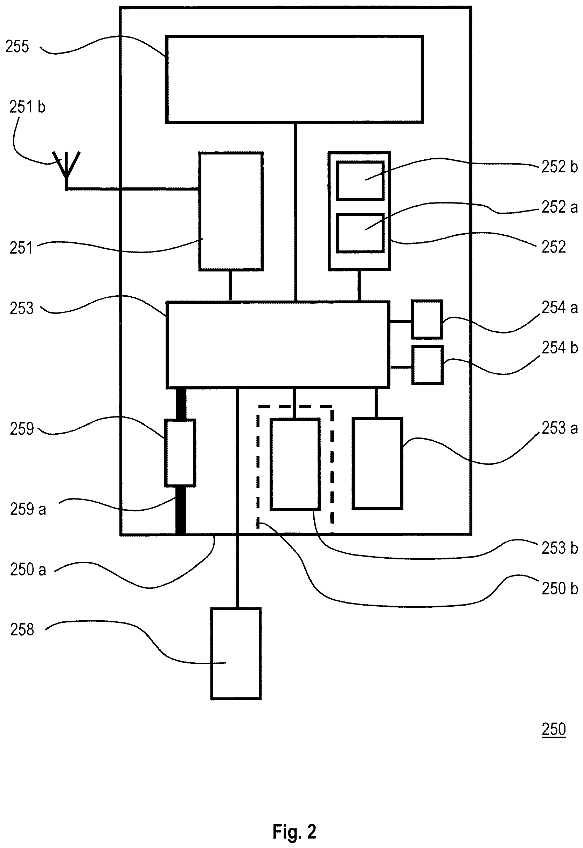

Mit dem ersten Ausführungsbeispiel wird anhand der Figuren 1, 2 und 3 die erfindungsgemäße Erhebung einer verkehrsbedingten Mautgebühr anhand einer auf ein erstes Fahrzeug bezogenen dezentralen Mauterkennung auf einer Fahrzeugeinrichtung 250 eines zweiten Fahrzeugs 25 vorgestellt.
Mehrere erste Fahrzeuge 11, 12, 13, 14 und 16 sind mit jeweils den jeweiligen Fahrzeugen 11, 12, 13, 14 und 16 zugeordneten Fahrzeugeinrichtungen ausgestattet, die jeweils eine kurzreichweitige Fahrzeug-zu-Fahrzeug-Kommunikationseinrichtung (Car2car-Kommunikationseirichtung) aufweisen, von denen die Sende- und Empfangsantennen 111 b (Fahrzeug 11), 121 b (Fahrzeug 12), 131 b (Fahrzeug 13) 141 b (Fahrzeug 14) und 161 b (Fahrzeug 16) schematisch und unmaßstäblich in Fig. 1a dargestellt sind.
Ein zweites Fahrzeug 25 ist mit einer Fahrzeugeinrichtung 250 ausgestattet, die in Fig. 2 dargestellt ist und eine Fahrzeugzu-Fahrzeug-Kommunikationseinrichtung 251 mit einer Sende- und Empfangsantenne 251 b umfasst (Fig. 1a, Fig. 2).
Die Fahrzeugeinrichtung 250 umfasst gemäß Fig. 2 innerhalb ihres Gehäuses 250 a obendrein einen mit der Car2car-Kommunikationseinrichtung 251 datentechnisch gekoppelten Prozessor 253, der in datentechnischen Kommunikationsverbindungen mit einem Abstandssensor 252, einer Uhr 254 a, einem Kompass 254 b, einem Programm- und Betriebsdatenspeicher 253 a und einer Anzeigevorrichtung 255 zur Wiedergabe von Daten in Textform und/ oder graphischer Form. Diese Komponenten werden, ebenso wie der Prozessor, über eine Batterie 259 mit elektrischer Energie versorgt, die ihrerseits über einen Anschluss 259 a elektrisch wieder aufgeladen werden kann.

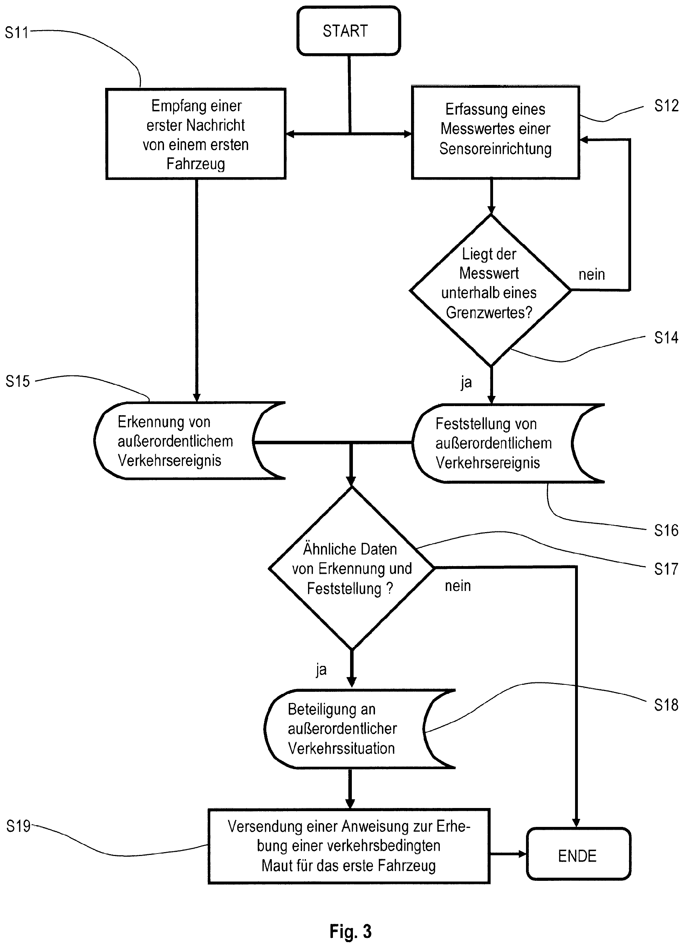

Der in Fig. 3 dargestellte Mautgebühren-Datenspeicher 253 b, der in Form einer Speicherkarte von einer Aufnahmeausnehmung 250 b des Gehäuses 250 a entnehmbar aufgenommen ist, ist nicht Gegenstand dieses ersten Ausführungsbeispieles, weil dieses erste Ausführungsbeispiel eine zentrale Mauterhebung für ein anderes (erstes) Fahrzeug als für das mit der vorliegend beschriebenen Fahrzeugeinrichtung ausgestattete zweite Fahrzeug vorsieht. Der in Fig. 3 dargestellte Mautgebühren-Datenspeicher 253 b, der in Form einer Speicherkarte von einer Aufnahmeausnehmung 250 b des Gehäuses 250 a entnehmbar aufgenommen ist, ist stattdessen Gegenstand des zweiten Ausführungsbeispieles (siehe dort).

Ferner ist ein außerhalb des Gehäuses 250 a angeordneter Tachograph 258 Teil der Fahrzeugeinrichtung 250. Er übermittelt periodisch im Sekundentakt Geschwindigkeitssignale an den Prozessor 253, während der Abstandssensor 252 periodisch im Sekundentakt Abstandssignale an den Prozessor 253, die den Abstand des zweiten Fahrzeugs 25 zu dem vorausfahrenden ersten Fahrzeug 14 repräsentieren, sofern das erste Fahrzeug 14 im Abstrahlungsbereich des Ultraschallsenders 252 a des Abstandssensors 252 liegt und den vom Ultraschallsender 252 a des Abstandssensors 252 ausgesandten Ultraschall in den Empfangsbereich des Ultraschallempfängers 252 b des Abstandssensors 252 zurückreflektiert; andernfalls übermittelt der Abstandssensor an den Prozessor ein Signal, das das Fehlen eines vorausfahrenden Fahrzeugs im Erfassungsbereich des Abstandssensors repräsentiert.
Anhand der Fig. 3 wird der Ablauf der Mauterhebung in diesem Ausführungsbeispiel auf der Fahrzeugeinrichtung 250 veranschaulicht.
Der Prozessor 253 ist mit dem Laden eines entsprechenden Computerprogramms aus dem Programm- und Betriebsdatenspeicher 253 a in seinen Arbeitsspeicher (nicht dargestellt) konfiguriert, Messwerte der Fahrzeuggeschwindigkeit von dem Tachometer 258 zu empfangen (S12 in Fig. 3) und diese Messwerte mit einem Grenzwert der Fahrzeuggeschwindigkeit zu vergleichen (S14 in Fig. 3), der 50 km/h beträgt, um bei einer Unterschreitung dieses Grenzwertes durch einen der Messwerte selbsttätig das Vorliegen eines außerordentlichen Verkehrsereignisses für das zweite Fahrzeug 25 festzustellen (S16 in Fig. 3) und dazu einen ersten Datensatz zu erzeugen, der Datenelemente A, B, C und D umfasst, von denen A die Verkehrsereignisbegründung der Grenzgeschwindigkeitsunterschreitung repräsentiert, B eine von der Uhr 254 a empfangene Uhrzeit der Feststellung repräsentiert, C eine von dem Kompäss 254 b empfangene Winkelausrichtung des zweiten Fahrzeugs 25 bezüglich einer Referenzrichtung repräsentiert und D eine Information darüber, dass diese Feststellung von dem zweiten Fahrzeug getroffen wurde, und diesen ersten Datensatz im Programm- und Betriebsdatenspeicher 253 a abzulegen.
Der Prozessor 253 ist außerdem konfiguriert, Messwerte eines Abstands zu einem vorausfahrenden Fahrzeug von dem Abstandssensor 252 zu empfangen (S12 in Fig. 3) und diese Messwerte mit einem Grenzwert des Abstandes zu vergleichen (S14 in Fig. 3), der 20 m beträgt, um bei einer Unterschreitung dieses Grenzwertes durch einen der Messwerte selbsttätig das Vorliegen eines außerordentlichen Verkehrsereignisses für das zweite Fahrzeug 25 festzustellen (S16 in Fig. 3) und dazu einen zweiten Datensatz zu erzeugen, der Datenelemente A, B, C und D umfasst, von denen A die Verkehrsereignisbegründung der Abstandsunterschreitung repräsentiert sowie B, C und D die zuvor genannten Informationen, und diesen zweiten Datensatz im Programm- und Betriebsdatenspeicher abzulegen.
Alternativ oder optional können der erste und/ oder der zweite Datensatz auch in dem Arbeitsspeicher abgelegt werden. Ferner ist der Prozessor 253 konfiguriert, die Car2car-Kommunikationseinrichtung 251 anzuweisen, den ersten oder den zweiten Datensatz im Rundfunkmodus einmalig oder gegebenenfalls periodisch alle 5 Sekunden mehrfach (unter Hinzufügung eines die Nummer der Versandwiederholung repräsentierenden Datenelementes E) innerhalb eines vorgegebenen Zeitrahmens von einer Minute zu versenden. Dazu ist der Prozessor konfiguriert, den ersten und/ oder den zweiten Datensatz an die Car2car-Kommunikationseinrichtung 251 zu übertragen.

Die nicht dargestellten Fahrzeugeinrichtungen der ersten Fahrzeuge 11, 12, 13, 14 und 16 sind zumindest funktionsgleich mit der Fahrzeugeinrichtung 250 des zweiten Fahrzeugs 25; vorzugsweise sind sie baugleich. Ihre Prozessoren sind ausgebildet, in gleicher oder analoger Weise Daten zu empfangen, zu verarbeiten, zu speichern und über die Car2car-Kommunikationseinrichtungen zu versenden wie der Prozessor 253 der Fahrzeugeinrichtung 250 des zweiten Fahrzeugs 25.
Der Prozessor 253 ist darüber hinaus ausgebildet, von der Car2car-Kommunikationseinrichtung 251 empfangene erste Nachrichten von einem oder mehreren der ersten Fahrzeuge 11, 12, 13, 14 und 16 entgegenzunehmen (S11 in Fig. 3), wodurch der Prozessor 253 die Beteiligung der ersten Fahrzeuge an einem außerordentlichen Verkehrsereignis und dieses als solches erkennt (S15 in Fig. 3), und im Programm- und Datenspeicher 253 a abzulegen. Diese Nachrichten umfassen einen oder mehrere Datensätze vom Typ des von der Fahrzeugeinrichtung 250 selbsttätig erzeugten ersten oder zweiten Datensatzes. Die empfangenen Datensätze sind hinsichtlich ihrer Herkunft von einem der ersten Fahrzeuge 11, 12,13,14 oder 16 anhand der Datenelemente D unterscheidbar.
Die selbsttätige Erzeugung von ersten und/ oder zweiten Datensätzen des zweiten Fahrzeugs 25 und der Empfang von ersten Nachrichten mit analogen Datensätzen von Fahrzeugen der ersten Fahrzeuge 11, 12, 13, 14 und 16 wird dann möglich, wenn diese ersten Fahrzeuge 11, 12, 13, 14 und 16 in einem Umkreis, der der Reichweite der Car2car-Kommunikation entspricht, jeweils ihre Beteiligung an einem außerordentlichen Verkehrsereignis wie dem in Fig. 1b dargestellten Stau festgestellt haben. Daraufhin versenden alle diese Fahrzeuge mittels ihrer Sende- und Empfangsantennen 111 b, 121 b, 131 b, 141 b, 251 b und 161 b jeweils eine Nachricht über ihre Feststellung mit den besagten Datenelementen. Soweit im Umkreis der Reichweite der Car2car-Kommunikation angeordnet, empfangen diese Fahrzeuge die Nachrichten der jeweils anderen Fahrzeuge mittels ihrer Sende- und Empfangsantennen 111 b, 121 b, 131 b, 141 b, 251 b und 161 b. Jedes Fahrzeug wird dabei bezüglich der anderen Fahrzeuge, zu denen es sendet, zu einem ersten Fahrzeug und bezüglich der Fahrzeuge, von denen es empfängt, zu einem zweiten Fahrzeug.
In Fig. 1b ist dabei aus Anschaulichkeitsgründen für die ersten Fahrzeuge 11, 12, 13, 14 und 16 nur der Sendemodus und für das zweite Fahrzeug 25 nur der Empfangsmodus dargestellt.

In diesem Fall bedingt die begrenzte Reichweite der Car2car-Kommunikation, dass die Fahrzeugeinrichtung 250 des zweiten Fahrzeugs 25 nur Nachrichten der ersten Fahrzeuge 13, 14 und 16 empfängt.

Der Prozessor 253 ist dazu ausgebildet, ausgelöst durch die selbsttätige Erzeugung eines auf das zweite Fahrzeug 25 bezogenen ereignisabhängigen ersten oder zweiten Datensatzes, ausgelöst durch den Empfang einer ersten Nachricht von einem der ersten Fahrzeuge 13, 14 und 16 und/ oder periodisch in regelmäßigen Zeitabständen von 10 Sekunden die im Programm- und Betriebsdatenspeicher 253 abgelegten Datensätze des zweiten Fahrzeugs 25 mit einem oder mehreren Datensätzen einer oder mehrerer erster Nachrichten von einem oder mehreren ersten Fahrzeugen 13, 14 und 16 zu vergleichen (S17 in Fig. 3).
Dabei ist der Prozessor 253 insbesondere dazu ausgebildet, zu ermitteln, ob die Zeitangaben der Datenelemente B der Datensätze einander derart ähnlich sind, dass ihre zeitlichen Abstände untereinander kleiner sind als 30 Sekunden. Alternativ oder optional ist der Prozessor 253 dazu ausgebildet, zu ermitteln, ob die Zeitangaben der Datenelemente B der Datensätze einander derart ähnlich sind, dass ihre zeitlichen Werte innerhalb eines Zeitrahmens von einer Minute liegen. Damit ist der Prozessor 253 dazu ausgebildet, aufgrund der Ähnlichkeit ihrer Datenelemente B einen zeitlichen Zusammenhang der ereignisausgelösten Datensätze zu erkennen und die betreffenden Fahrzeuge einer mautbestimmenden Gruppe von Fahrzeugen zuzuordnen, die an der außerordentlichen Verkehrssituation beteiligt sind (S18 in Fig. 3), und ihre Datensätze mit einem entsprechenden Datenelement zu versehen, das diese mautbestimmende Gruppe repräsentiert. Im vorliegenden Fall betragen die zeitlichen Werte der Datenelemente B 11:37:22 Uhr (Fahrzeug 13), 11:37:38 Uhr (Fahrzeug 14), 11:38:02 Uhr (Fahrzeug 25) und 11:39:16 Uhr (Fahrzeug 16). Damit ordnet der Prozessor 253 die Fahrzeuge 13,14 und 25 einer mautbestimmenden Gruppe zu.
Ferner ist der Prozessor 253 dazu ausgebildet, Datensätze deren Zeitwerte länger als das Doppelte des vorgegebenen Zeitrahmens von dem jüngst eingegangenen Datensatz zurückliegen, das heißt: länger als 2 Minuten zurückliegen, zu löschen. Das gilt sowohl für die Datensätze der ersten Nachrichten als auch für den eigens bezüglich des zweiten Fahrzeugs erzeugten Datensatz.

Optional ist der Prozessor 253 dazu ausgebildet, zu ermitteln, ob die Winkelangaben der Datenelemente C der Datensätze einander derart ähnlich sind, dass ihre Winkelabstände untereinander kleiner sind als 30 Grad. Alternativ oder optional ist der Prozessor 253 dazu ausgebildet, zu ermitteln, ob die Winkelangaben der Datenelemente C der Datensätze einander derart ähnlich sind, dass ihre Winkelwerte innerhalb eines Winkelrahmens von 60 Grad liegen.
Im vorliegenden Fall betragen die Winkel 345° (Fahrzeug 13), 347° (Fahrzeug 14), 342° (Fahrzeug 25) und 344° (Fahrzeug 16) bezüglich nördlicher Richtung (0°).
Damit ist der Prozessor 253 dazu ausgebildet, aufgrund der Ähnlichkeit ihrer Datenelemente C zusätzlich zum zuvor erkannten zeitlichen Zusammenhang einen räumlichen Zusammenhang der ereignisausgelösten Datensätze zu erkennen und die betreffenden Fahrzeuge 13, 14 und 25 einer mautbestimmenden Gruppe zuzuordnen und ihre Datensätze mit einem entsprechenden Datenelement zu versehen, das diese mautbestimmende Gruppe repräsentiert.

Dies kann nötig sein, um zu vermeiden, dass Fahrzeuge Ereignissen auf der Gegenfahrbahn zugeordnet werden, an denen sie nicht beteiligt sind (S18 in Fig. 3).
Bedingt durch das positive Ergebnis der Prüfungen auf zeitlichen und räumlichen Zusammenhang der von den ersten Fahrzeugen 13 und 14 und dem zweiten Fahrzeug 25 festgestellten außerordentlichen Verkehrsereignisse führt der Prozessor eine Speicherung der mit dem Datenelement der Mauterkennung versehenen Datensätze der ersten Fahrzeugen 13 und 14 und des zweiten Fahrzeugs 25 in dem Programm- und Betriebsdatenspeicher 253 a durch, die nunmehr als Mautdatensätze dieser Fahrzeuge gelten.

Dem Zweck des ersten Ausführungsbeispieles folgend, ist der Prozessor 253 ausgebildet, für diejenigen ersten Fahrzeuge, deren Zuordnung zu einer mautbestimmenden Gruppe der Prozessor 253 ausgeführt hat, eine Mauterhebung zu initiieren, indem der Prozessor 253 mittels der Car2car-Kommunikationseinrichtung, die als Car2infrastructure-Kommunikationseinrichtung zur DSRC (dedicated short-range communication) ausgebildet ist, Anweisungen zur Erhebung von auf die ersten Fahrzeuge 13 und 14 bezogenen verkehrsbedingten Mautgebühren über eine straßenseitige Empfangseinrichtung an eine zentrale Datenverarbeitungseinrichtung sendet (nicht dargestellt), sobald das zweite Fahrzeug 25 eine solche passiert und detektiert (S19 in Fig. 3).
Alternativ dazu umfasst die Fahrzeugeinrichtung 250 eine Mobilfunk-Kommunikationseinrichtung (nicht darstellt), zu deren Verwendung der Prozessor 253 ausgebildet ist, um Anweisungen zur Erhebung von auf die ersten Fahrzeuge 13 und 14 bezogenen verkehrsbedingten Mautgebühren über ein Mobilfunknetz an eine zentrale Datenverarbeitungseinrichtung zu senden (nicht dargestellt).
Aufgrund der mit übermittelten Datenelemente D ist die zentrale Datenverarbeitungseinrichtung in der Lage, die mautpflichtigen Fahrzeuge 13 und 14 zu bestimmen und Nutzerkonten zuzuordnen, auf denen verkehrsbedingte Mautgebühren gebucht werden. Die zentrale Datenverarbeitungseinrichtung kann dazu ausgebildet sein, verkehrsbedingte Mautgebühren nur dann für ein erstes Fahrzeug zu erheben, wenn sie mehrere gleichlautende Anweisungen zur Erhebung einer auf das erste Fahrzeug 13 oder 14 bezogenen verkehrsbedingten Maut von mehreren verschiedenen zweiten Fahrzeugen 25 und beispielsweise 12 (zweites Fahrzeug bezogen auf Nachrichten, die Fahrzeug 12 von Fahrzeug 13 und/ oder 14 empfängt) empfängt. Die damit einhergehende Datenredundanz erhöht die Wahrscheinlichkeit einer korrekten Erhebung einer verkehrsbedingten Mautgebühr.
Dies schließt die Möglichkeit ein, dass die Fahrzeugeinrichtung 250 auch eine Anweisung zur Erhebung einer verkehrsbedingten Maut auf das zweite Fahrzeug 25 (sprich das eigene Fahrzeug) an die Zentrale versendet, die nur dann zentralseitig zu einer Mauterhebung bezüglich des zweiten Fahrzeugs umgesetzt wird, wenn wenigstens ein erstes Fahrzeug 13, 14 oder 16 die Beteiligung des zweiten Fahrzeugs an dem Stau festgestellt hat und eine ebensolche Anweisung, bezogen auf das zweite Fahrzeug 25, an die Zentrale gesendet hat - und umgekehrt.
Mit der zentralseitigen Buchung der verkehrsbedingten Mautgebühr auf ein mit dem ersten Fahrzeug verknüpftes Nutzerkonto gilt die erfindungsgemäße Mauterhebung als erfolgt.
Der Prozessor 253 der Fahrzeugeinrichtung 250 ist dazu ausgebildet, nach dem Empfang einer Empfangsbestätigung über den Erhalt der Anweisungen von der straßenseitigen Einrichtung und/ oder der zentralen Datenverarbeitungseinrichtung die in dem Programm- und Betriebsdatenspeicher 253 a gespeicherten Mautdatensätze zu löschen.
Unabhängig davon ist der Prozessor 253 der Fahrzeugeinrichtung 250 ist dazu ausgebildet, die in dem Programm- und Betriebsdatenspeicher 253 a gespeicherten Mautdatensätze nach Ablauf einer vorgegebenen Speicherzeit seit ihrer Erzeugung oder dem Versenden der Mauterhebungsanweisung, beispielsweise nach fünf Minuten, zu löschen. Damit kann einer Datenschutzanforderung entsprochen werden.

### ZWEITES AUSFÜHRUNGSBEISPIEL: DEZENTRALE MAUTERKENNUNG FÜR EIGENES FAHRZEUG

Mit dem zweiten Ausführungsbeispiel wird anhand der Figuren 1, 2 und 4 die erfindungsgemäße Erhebung einer auf ein zweites Fahrzeug 25 bezogenen verkehrsbedingten Mautgebühr anhand einer auf das zweite Fahrzeug 25 bezogenen dezentralen Mauterkennung auf einer Fahrzeugeinrichtung 250 des zweiten Fahrzeugs 25 vorgestellt.

In Ergänzung zu den unter der Beschreibung des ersten Ausführungsbeispieles vorgestellten Komponenten der Fahrzeugeinrichtung 250 weist die Fahrzeugeinrichtung 250 außerdem einen Mautgebühren-Datenspeicher 253 b auf, der in Form einer Speicherkarte von einer Aufnahmeausnehmung 250 b des Gehäuses 250 a entnehmbar aufgenommen ist.

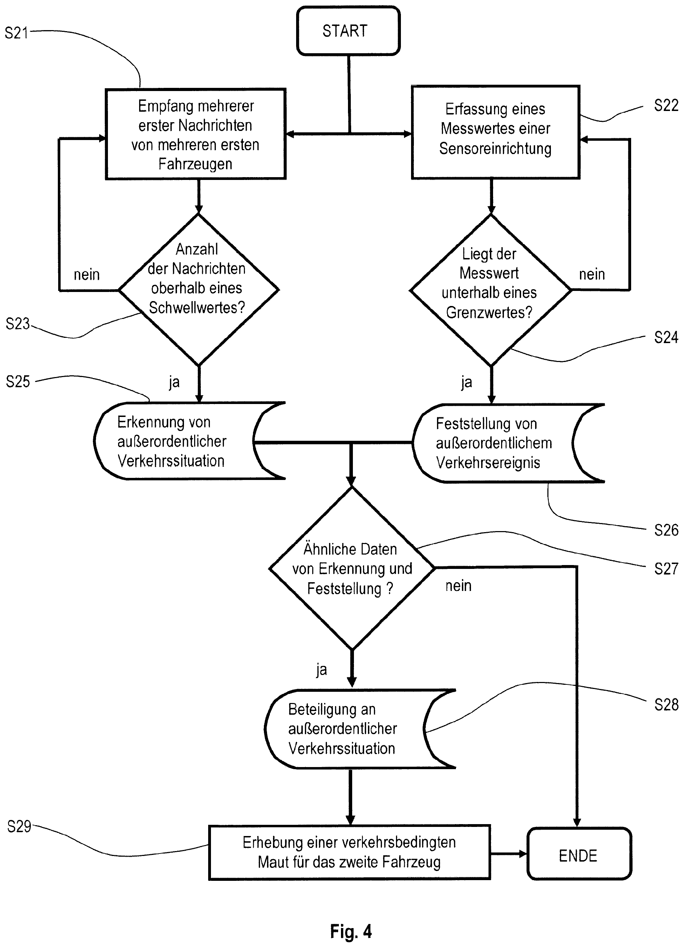

Der Prozessor 253 der Fahrzeugeinrichtung 250 des zweiten Fahrzeugs ist bis zum Schritt S28 in Fig. 4, in der die Definition der mautbestimmenden Fahrzeuggruppe erfolgt, mit denselben Merkmalen ausgestattet und zur Ausführung derselben Verfahrensschritte ausgebildet wie in dem ersten Ausführungsbeispiel. Zusätzlich dazu ist der Prozessor 253 ausgebildet, die im Verfahrensschritt S21 empfangenen ersten Nachrichten der ersten Fahrzeuge 13, 14 und 16 über einen vorgegebenen Zeitrahmen von 2 Minuten zu zählen, der sich mit jeder zuletzt empfangenen Nachricht rückwirkend erstreckt. Es gelte, dass die Empfangszeit jeweils eine Sekunde später liegt als die im ersten Ausführungsbeispiel beschriebenen zeitlichen Werte der Datenelemente B. Mit der zuletzt empfangenen ersten Nachricht des Fahrzeugs 16 umfasst der vorgegebenen Zeitrahmen die ersten Nachrichten der Fahrzeuge 13,14 und 16. Der Prozessor 253 ist ausgebildet, die Anzahl der gezählten empfangenen ersten Nachrichten (in diesem Falle: drei) mit einem Schwellwert für die Anzahl der empfangenen Nachrichten, der zwei beträgt, zu vergleichen (S23), um bei einer Überschreitung dieses Schwellwertes eine außerordentliche Verkehrssituation zu erkennen (S25). Diese anzahlbedingte Erkennung bildet bei dem zweiten Ausführungsbeispiel die Voraussetzung dafür, dass der Prozessor 253 überhaupt in die Phase der vergleichenden Datenelementanalyse mit dem Datensatz der Feststellung des zweiten Fahrzeugs 25 über ein, das zweite Fahrzeug 25 betreffendes, außerordentliches Verkehrsereignis eintritt: Ohne eine Mindestanzahl von ersten Nachrichten (S25) gelangt der Prozessor 253 ebenso wenig zu diesem Analyseschritt S27 wie ohne die Feststellung S26 des zweiten Fahrzeugs 25. Damit wird unnötigem Rechenaufwand des Prozessors 253 vorgebeugt. Die folgende Vergleichsanalyse entspricht derjenigen des ersten Ausführungsbeispieles und endet demgemäß mit der Bestimmung der Gruppe an Fahrzeugen 13, 14 und 25, die an der außerordentlichen Verkehrssituation des Staus beteiligt sind (S28).

Für die Durchführung des folgenden Verfahrensschrittes S29 ist der Prozessor im Unterschied zum ersten Ausführungsbeispiel dazu ausgebildet, auf den Mautdatenspeicher 253 b des zweiten Fahrzeugs 25 zuzugreifen, um von dem dort abgespeicherten Mautgebührenguthaben, der im Wege einer Vorausbezahlungsprozedur zugunsten des Fahrzeugnutzers, -eigentümers oder -halters des zweiten Fahrzeugs 25 auf dem Mautdatenspeicher 253 b registriert wurde, eine der außerordentlichen Verkehrssituation entsprechende verkehrsbedingten Mautgebühr abzuziehen und damit das verfügbare Mautgebührenguthaben entsprechend zu verringern.

Damit wird erfindungsgemäß eine auf das zweite Fahrzeug 25 bezogene verkehrsbedingte Mautgebühr erhoben, nachdem dezentral die situationsbezogene Mautpflicht des zweiten Fahrzeugs 25 von der dem fahrzeugeigenen Fahrzeugeinrichtung 250 des zweiten Fahrzeugs 25 erkannt wurde.

### DRITTES AUSFÜHRUNGSBEISPIEL: ZENTRALE MAUTERKENNUNG

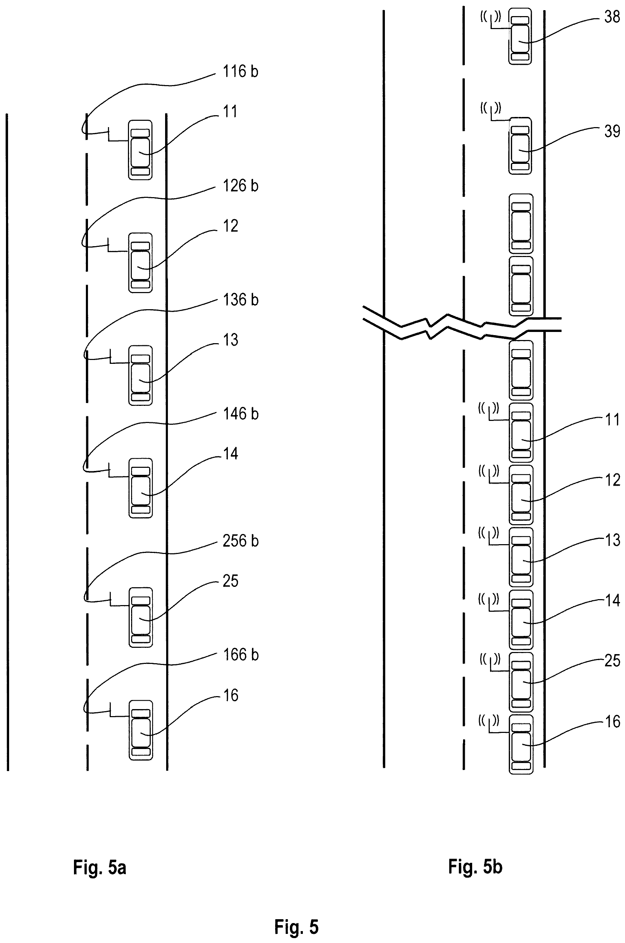

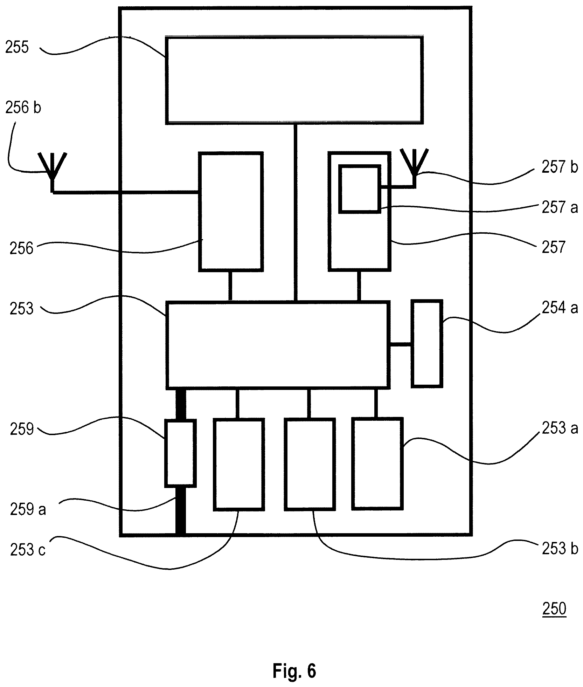

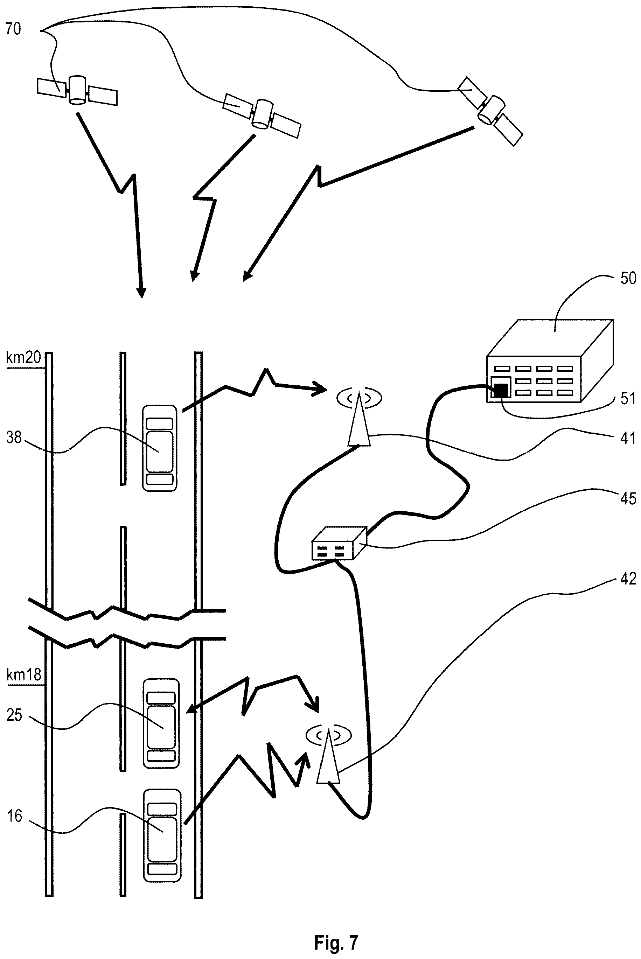

Mit dem dritten Ausführungsbeispiel wird anhand der Figuren 5, 6, 7 und 8 sowie 9a, 9b, 9c und 9d die erfindungsgemäße Erhebung einer auf ein zweites Fahrzeug 25 bezogenen verkehrsbedingten Mautgebühr anhand einer auf das zweite
Fahrzeug 25 bezogenen zentralen Mauterkennung auf einer zentralen Datenverarbeitungseinrichtung 51 einer Mautzentrale 50 im Rahmen eines erfindungsgemäßen Mautsystems vorgestellt.
Zur Datenverarbeitung weist die zentrale Datenverarbeitungseinrichtung 51 wenigstens einen nicht dargestellten zentralen Prozessor auf, zur Datenspeicherung wenigstens einen nicht dargestellten zentralen Datenspeicher. Alternativ bildet die zentrale Datenverarbeitungseinrichtung 51 selbst den zentralen Prozessor und ein zentraler Datenspeicher (nicht dargestellt) ist an diesen zentralen Prozessor angeschlossen.
Anders als in den beiden vorhergehenden Ausführungsbeispielen werden nicht nur erste Nachrichten erster Fahrzeuge über das Entstehen eines mauterheblichen Verkehrsereignisses in die auf das zweite Fahrzeug, das eine zweite Nachricht an die Zentrale gesendet hat, bezogene mautbestimmende Entscheidung einbezogen, sondern auch dritte Nachrichten dritter Fahrzeuge über die Auflösung des mauterheblichen Verkehrsereignisses.
Mehrere erste Fahrzeuge 11, 12, 13, 14 und 16 sind mit jeweils den jeweiligen Fahrzeugen 11, 12, 13, 14 und 16 zugeordneten Fahrzeugeinrichtungen ausgestattet, die jeweils eine langreichweitige Fahrzeug-zu-Zentrale-Kommunikationseinrichtung in Form einer Mobilfunk-Kommunikationseinrichtung aufweisen, von denen die Sende- und Empfangsantennen 116 b (Fahrzeug 11), 126 b (Fahrzeug 12), 136 b (Fahrzeug 13) 146 b (Fahrzeug 14) und 166 b (Fahrzeug 16) schematisch und unmaßstäblich in Fig. 5a dargestellt sind.
Ein zweites Fahrzeug 25 ist mit einer Fahrzeugeinrichtung 250 ausgestattet, die in Fig. 6 dargestellt ist und eine Fahrzeugzu-Zentrale-Kommunikationseinrichtung in Form einer Mobilfunk-Kommunikationseinrichtung 256 mit einer Sende- und Empfangsantenne 256 b umfasst (Fig. 5a, Fig. 6).
Die Fahrzeugeinrichtung 250 umfasst gemäß Fig. 6 innerhalb ihres Gehäuses 250 a obendrein einen mit der Mobilfunk-Kommunikationseinrichtung 256 datentechnisch gekoppelten Prozessor 253, der in datentechnischen Kommunikationsverbindungen mit einem GNSS-Positionsbestimmungseinrichtung 257 (GNSS = Globales Navigationssatellitensystem), einer Uhr 254 a, einem Programm- und Betriebsdatenspeicher 253 a, einem Mautdatenspeicher 253 b, einem Kartendatenspeicher 253 c, der eine geographische Datenbank mit zu Ortskoordinaten zugeordneten Mautobjekten umfasst, und einer Anzeigevorrichtung 255 zur Wiedergabe von Daten in Textform und/ oder graphischer Form. Diese Komponenten werden, ebenso wie der Prozessor, über eine Batterie 259 mit elektrischer Energie versorgt, die ihrerseits über einen Anschluss 259 a elektrisch wieder aufgeladen werden kann.
Die GNSS-Positionsbestimmungseinrichtung 257 empfängt mittels ihres GNSS-Empfängers 257 über eine GNSS-Empfangsantenne 257 b Signale von Positionsbestimmungssatelliten 70 (Fig. 7) und verarbeitet diese periodisch im Sekundentakt zu einer aktuellen Positionsinformation des Fahrzeugs 25 in Form von Positionsdaten sowie zu einer ersten Geschwindigkeitsinformation des Fahrzeugs 25 aus der Doppler-Frequenzverschiebung der GNSS-Signale und einer zweiten Geschwindigkeitsinformation des Fahrzeugs 25 aus der Differenz der zuletzt erhaltenen Positionsdaten und der zuvorletzt erhaltenen Positionsdaten bezüglich des Zeitintervalls zwischen beiden.
Der Prozessor 253 ist mit dem Laden eines entsprechenden Computerprogramms aus dem Programm- und Betriebsdatenspeicher 253 a in seinen Arbeitsspeicher (nicht dargestellt) konfiguriert, regelmäßig Positionsdaten von der GNSS-Positionsbestimmungseinrichtung 257 zu empfangen und diese Positionsdaten nach vorgegebenen Regeln mit den Ortskoordinaten der in der geographischen Datenbank hinterlegten Mautobjekte zu vergleichen, um im Falle einer hinreichenden Übereinstimmung der Positionsdaten mit den Ortskoordinaten die Nutzung des betreffenden Mautobjektes - in diesem Fall den Streckenabschnitt einer Richtungsfahrbahn eines mautpflichtigen Autobahnabschnittes - zu erkennen, als Datenelement C zu registrieren, und eine an die Nutzung dieses Streckenabschnitts gekoppelte Basis-Mautgebühr in dem Mautdatenspeicher 253 b abzuspeichern.

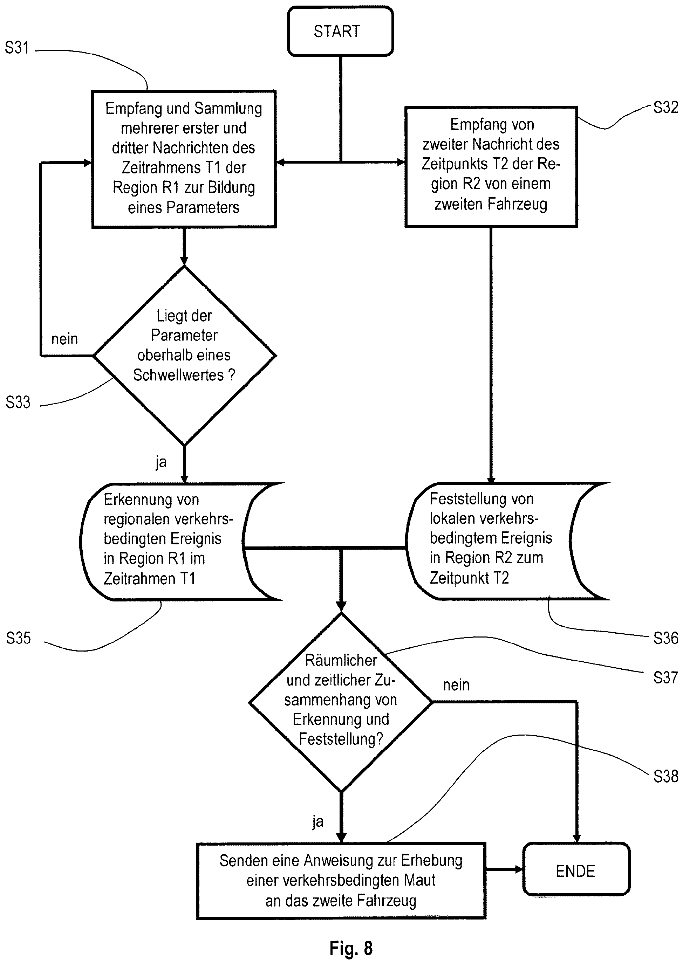

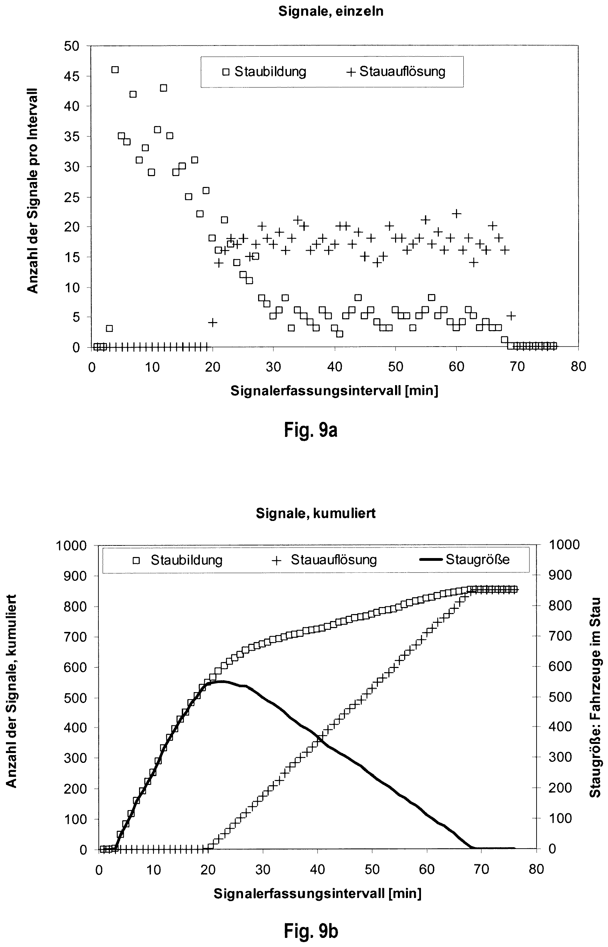

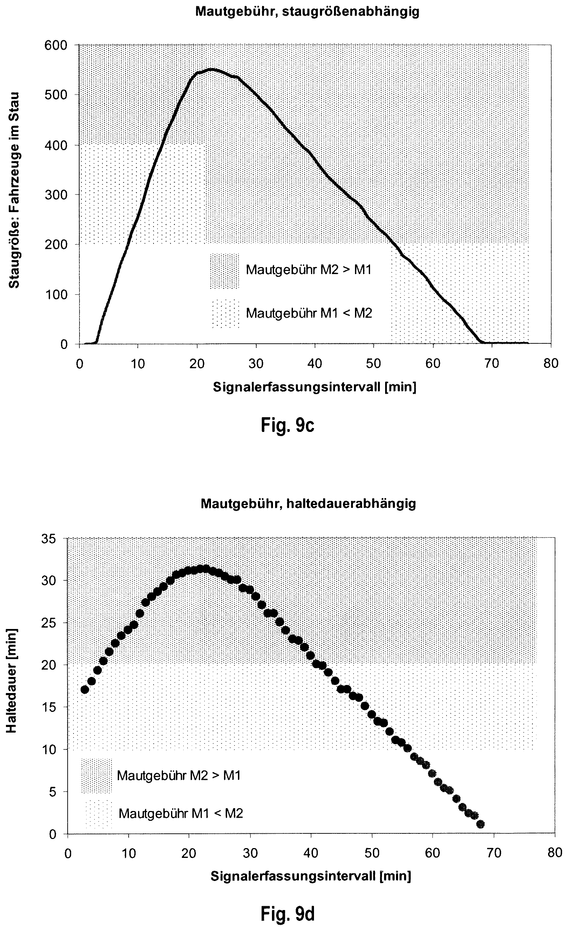

Der Prozessor 253 ist außerdem konfiguriert, Messwerte der Fahrzeuggeschwindigkeit von der GNSS-Positionsbestimmungseinrichtung 257 zu empfangen und diese Messwerte in unverarbeiteter Form oder in mathematisch prozessierter Form (beispielsweise einen gewichteten Mittelwert der ersten und der zweiten Geschwindigkeitsinformation) mit einem Grenzwert der Fahrzeuggeschwindigkeit zu vergleichen, der 30 km/h beträgt, um bei einer Unterschreitung dieses Grenzwertes durch einen der Messwerte selbsttätig das Vorliegen eines außerordentlichen Verkehrsereignisses für das zweite Fahrzeug 25 festzustellen und dazu einen Datensatz zu erzeugen, der Datenelemente A, B und C umfasst, von denen A die Verkehrsereignisbegründung der Grenzgeschwindigkeitsunterschreitung repräsentiert, B eine von der Uhr 254 a empfangene Uhrzeit der Feststellung repräsentiert und C den registrierten Streckenabschnitt, und diesen ersten Datensatz im Programm- und Betriebsdatenspeicher 253 a abzulegen.
Ferner ist der Prozessor 253 ist konfiguriert, den verkehrsereignisabhängigen Datensatz ABC mittels der Mobilfunk-Kommunikationseinrichtung 256 an die zentrale Datenverarbeitungseinrichtung 51 einer Mautzentrale 50 zu senden, ohne die Identität des Fahrzeugs 25 oder seiner Fahrzeugeinrichtung gegenüber der zentralen Datenverarbeitungseinrichtung preiszugeben. Dazu tritt die Mobilfunk-Kommunikationseinrichtung 256 des Fahrzeugs 25 mit der Mobilstation 42 eines Mobilfunknetzwerkes in drahtlose Kommunikationsverbindung, deren Vermittlungsstelle 45 eine Anonymisierung oder Pseudonymisierung der Identität der Mobilfunk-Kommunikationseinrichtung 256 gegenüber der zentralen Datenverarbeitungseinrichtung 51 bewirkt (Fig. 7).
Die nicht dargestellten Fahrzeugeinrichtungen der ersten Fahrzeuge 11, 12, 13, 14 und 16 sowie der dritten Fahrzeuge 38 und 39 sind zumindest funktionsgleich mit der Fahrzeugeinrichtung 250 des zweiten Fahrzeugs 25; vorzugsweise sind sie baugleich. Ihre Prozessoren sind ausgebildet, in gleicher oder analoger Weise Daten zu empfangen, zu verarbeiten, zu speichern und Datensätze des Typs ABC über ihre Mobilfunk-Kommunikationseinrichtungen an die zentrale Datenverarbeitungseinrichtung 51 zu versenden wie der Prozessor 253 der Fahrzeugeinrichtung 250 des zweiten Fahrzeugs 25. Jedes erste Fahrzeug 11, 12, 13, 14 und 16 senden nur einmalig eine erste Nachricht und das zweite Fahrzeug 25 einmalig eine zweite Nachricht, die jeweils einen Datensatz ABC umfassen, bei Anschluss an das Stauende über ihre Beteiligung an der Staubildung an die zentrale Datenverarbeitungseinrichtung 51 (Fig. 5b, Fig. 7). Das mehrmalige Senden derselben Nachricht unterbleibt zum einen wegen der in der zentralen Natur des Mautsystems liegenden Singularität des Empfängers und zum anderen wegen der aus Datenschutzgründen unterbleibenden Bekanntgabe des Senders, die ein zentrales Ausreduzieren redundanter Nachrichten, die sich auf eine Quelle beschränken, verbietet.
Darüber hinaus ist der Prozessor 253 ausgebildet, anhand der von der GNSS-Positionsbestimmungseinrichtung übermittelten Geschwindigkeitsinformation ein Überschreiten einer Richtgeschwindigkeit von 60 km/h, und damit das Herauslösen aus dem Stauverbund, als außerordentliches Verkehrsereignis festzustellen, sofern er zuvor einer Unterschreitung der Grenzgeschwindigkeit von 30 km/ h (siehe oben) festgestellt hat, und einen dazugehörigen Datensatz ABC, der im Datenelement A die Stauauflösung repräsentiert, zu speichern und über die Mobilfunk-Kommunikationseinrichtung 256 als dritte Nachricht an die zentrale Datenverarbeitungseinrichtung zu senden. Dieses Verhalten trifft auf die dritten Fahrzeuge 38 und 39 zu, die im weiteren Verlauf der Straße an der Stauauflösung beteiligt sind (Fig. 5b, Fig. 7).
Die zentrale Datenverarbeitungseinrichtung ist dazu ausgebildet, alle ersten und dritten Nachrichten sowie die zweite Nachricht (Schritte S31 und S32 in Fig. 8) zu empfangen und durch Speicherung in einem Datenspeicher zu sammeln, wobei nochmals darauf hingewiesen wird, dass die ersten Nachrichten und die zweite Nachricht anderer Natur, nämlich mauterhebungsbelastend, sind als die dritten Nachrichten, die mauterhebungsentlastend wirken, wie nachfolgend näher ausgeführt.
Die Sammlung der Nachrichten beginnt mit dem Empfang einer ersten Nachricht vom Typ A = Staubildung des dritten Fahrzeugs 38 vom Streckenabschnitt C = R1. Ihr Zeitwert B definiert den Beginn des Zeitrahmens T1 innerhalb dessen weitere erste Nachrichten der Fahrzeuge des dritten Fahrzeugs 39 und schließlich erster Fahrzeuge 11, 12, 13, 14 und 16 empfangen werden. Die Anzahl von empfangenen Signalen dieser Art pro einminütigem Zeitintervall ist in Fig. 9 a graphisch mit dem quadratischen Staubildungssymbol dargestellt.
In diesen Zeitrahmen fallen außerdem dritte Nachrichten der dritten Fahrzeuge 38 und 39 vom Typ A = Stauauflösung, die in Fig. 9 a für alle Fahrzeuge zeitintervallweise graphisch mit dem Kreuzsymbol der Stauauflösung dargestellt sind.
Eine kumulierte Darstellung der Staubildungssignale und der Stauauflösungssignale ist in Fig. 9b zusammen mit der Staugröße als Differenzen der kumulierten Anzahl von Staubildungssignalen und Stauauflösungssignalen anhand der durchgehenden Linie dargestellt. Der Zeitrahmen T1 wird solange dynamisch fortgeschrieben, solange die Staugröße als erster gebildeter Parameter nicht unter einen Wert von 1 % ihres Maximums gesunken ist. Die maximale Staugröße beträgt 551 Fahrzeuge, was auf einer zweispurigen Fahrbahn eine maximale Staulänge von knapp 2 Kilometern ausmacht. Die zentrale Datenverarbeitungseinrichtung ist ausgebildet, anhand der empfangenen ersten und dritten Nachrichten den besagten Parameter der Staugröße zu bilden und mit einem Schwellwert für eine Staugröße in Höhe von 200 Signalen (sprich: Fahrzeugen) zu vergleichen, um eine Staubildung als regionales verkehrsbedingtes Ereignis auf dem Streckenabschnitt R1 zu erkennen (S35).
In den Zeitrahmen T1 fällt auch der Empfang der zweiten Nachricht in Schritt S32 vom Streckenabschnitt C = R2 mit dem Zeitwert B = T2, mit dem die zentrale Datenverarbeitungseinrichtung ein lokales verkehrsbedingtes Ereignis auf dem Streckenabschnitt R2 feststellt.
Durch Vergleich mit der Region R1 und dem Zeitrahmen T1 der ersten und dritten Nachrichten stellt die zentrale Datenverarbeitungseinrichtung entweder fest, dass das zweite Fahrzeug 25 an dem mautpflichtigen Stauereignis der ersten und dritten Fahrzeuge beteiligt ist - beispielsweise indem die zentrale Datenverarbeitungseinrichtung feststellt, dass die Region R2 mit der Region R1 identisch ist und der Zeitpunkt T2 in den Zeitrahmen T1 fällt. Dies ist äquivalent dazu, dass das zweite Fahrzeug als erstes Fahrzeug im linken Strang des Ablaufdiagramms erkannt wird und der rechte Strang des Ablaufdiagramms obsolet wird.
In einem anderen Fall stellt die zentrale Datenverarbeitungseinrichtung 51 fest, dass R2 einen Streckenabschnitt repräsentiert, der dem Streckenabschnitt R1 entgegen der Fahrtrichtung vorangeht. Damit besteht ein räumlicher Zusammenhang zwischen den beiden Streckenabschnitten R1 und R2, weil es ja sein kann, dass sich der Stau entgegen der Fahrtrichtung vom ersten Streckenabschnitten R1 hin auf den zweiten Streckenabschnitt R2 ausdehnt. In diesem Fall ist die zentrale Datenverarbeitungseinrichtung 51 ausgebildet, weitere erste Nachrichten zu erfassen und anhand der übermittelten Streckenabschnitte festzustellen, dass erste Nachrichten mit Streckenabschnitten R1 abnehmen und schließlich ausbleiben und stattdessen erste Nachrichten mit Streckenabschnitten R2 zunehmen und schließlich allein vorherrschen.

Fehlt der räumliche Zusammenhang des übermittelten Streckenabschnittes R2 mit den Streckenabschnitten R1 beispielsweise, weil der Streckenabschnitt R2 durch ein oder mehrere weitere Streckenabschnitte R3, R4 von dem ersten Streckenabschnitt R1 beabstandet ist, so liegt kein räumlicher Zusammenhang der zweiten Nachricht mit den ersten und dritten Nachrichten vor, so dass eine Mauterhebung für das zweite Fahrzeug zumindest in Bezug auf eine mautbestimmende Gruppe von Fahrzeugen, die von ersten und dritten Fahrzeugen begründet wird, ausbleibt. Stattdessen kann es sein, dass das zweite Fahrzeug einer anderen mautbestimmenden Gruppe von Fahrzeugen angehört, was durch die zentrale Datenverarbeitungseinrichtung 51 in einem anderen, nicht dargestellten, Strang des Ablaufdiagramms von Fig. 8 alternativ geprüft werden könnte.

Die Ermittlung des Vorliegens des nötigen räumlichen und zeitlichen Zusammenhangs der Erkennung von S35 und der Feststellung von S36 durch Vergleich von S37 führt im Ergebnis dessen zum Senden einer Anweisung zur Erhebung einer verkehrsbedingten Maut von der zentralen Datenverarbeitungseinrichtung 51 an das zweite Fahrzeug 25.
Alternativ dazu führt die Ermittlung des Fehlens des nötigen räumlichen und zeitlichen Zusammenhangs der Erkennung von S35 und der Feststellung von S36 durch Vergleich von S37 im Ergebnis zum Senden einer Nachricht darüber, dass eine Anweisung zur Erhebung einer verkehrsbedingten Maut unterbleibt, von der zentralen Datenverarbeitungseinrichtung 51 an das zweite Fahrzeug 25.
In beiden Fällen sind sowohl der Prozessor 253 der Fahrzeugeinrichtung 250 als auch die zentrale Datenverarbeitungsanlage 51 dazu ausgebildet, die Mobilfunk-Kommunikationsverbindung zwischen der Fahrzeugeinrichtung 250 und der zentralen Datenverarbeitungseinrichtung 51, die seitens der Fahrzeugeinrichtung 250 eingerichtet wurde, solange aufrecht zu erhalten und nicht zu beenden, bis die entsprechende Nachricht (Anweisung zur Erhebung einer verkehrsbedingten Maut oder Nachricht über das Ausbleiben einer solchen Anweisung) von der zentralen Datenverarbeitungseinrichtung 51 an die Fahrzeugeinrichtung 250 des zweiten Fahrzeugs 25 gesendet wurde.

Während sich die Staubildungsnachrichten erhöhend auf die Staugröße auswirken, wirken sich die Stauauflösungsnachrichten erniedrigend auf die Staugröße und auch erniedrigend auf die Dauer, die Fahrzeuge im Mittel im Stau stehen. Das ist für Bedeutung für Mautgebühren, die abhängig sind von der Staulänge zum Zeitpunkt des Zeitwertes T2 der zweiten Nachricht oder abhängig von der Dauer, die ein Fahrzeug im Stau gestanden hat.
In einer ersten Variante des dritten Ausführungsbeispiels sind staugrößen- und stauentwicklungsabhängige Mautgebühren vorgesehen, die je nach Stauphase (Bildung, Auflösung) und Staugröße (mehr als 200 beteiligte Fahrzeuge, mehr als 400 beteiligte Fahrzeug) variieren. Dazu wertet die zentrale Datenverarbeitungseinrichtung Staubildungsnachrichten erster und zweiter Fahrzeuge 11, 12, 13 14, 16 und 25 gemeinsam mit den Stauauflösungsnachrichten dritter Fahrzeuge 38 und 39 aus. Gemäß Fig. 9c erhält ein zweites Fahrzeug, das in der Staubildungsphase zu einer Gruppe von weniger als 201 Fahrzeugen im Stau gehört keine Anweisung zur Erhebung einer Mautgebühr. Ein zweites Fahrzeug, das in der Staubildungsphase zu einer mautbestimmenden Gruppe von mehr als 200 jedoch weniger als 401 Fahrzeugen gehört, erhält eine Anweisung zur Erhebung einer Mautgebühr M1 in Höhe von 2 EUR. Ein zweites Fahrzeug, das in der Staubildungsphase zu einer mautbestimmenden Gruppe von mehr als 400 jedoch weniger als 601 Fahrzeugen gehört, erhält eine Anweisung zur Erhebung einer Mautgebühr M2 in Höhe von 3 EUR. Ein zweites Fahrzeug, das in der Stauauflösungsphase zu einer mautbestimmenden Gruppe von mehr als 200 jedoch weniger als 601 Fahrzeugen gehört, erhält eine Anweisung zur Erhebung einer Mautgebühr M2 in Höhe von 3 EUR. Ein zweites Fahrzeug, das in der Stauauflösungsphase zu einer mautbestimmenden Gruppe von weniger als 201 Fahrzeugen gehört, erhält eine Anweisung zur Erhebung einer Mautgebühr M1 in Höhe von 2 EUR.
Mit einer solchen Differenzierung der Mautgebühren wird eine Bestrafung derjenigen Autofahrer vermieden, die keine Schuld an der Staubildung tragen, weil ihnen die Information über den Stau nicht zu einem Zeitpunkt vorliegen konnte, zu dem sie die stautragende Straße noch hätten verlassen können.

In einer zweiten Variante des dritten Ausführungsbeispiels sind individuelle staudauerabhängige Mautgebühren vorgesehen, die abhängig sind von der Dauer, die das zweite Fahrzeug im Stau gestanden hat. Dazu wertet die zentrale Datenverarbeitungseinrichtung Stauauflösungsnachrichten dritter und zweiter Fahrzeuge 38, 39 und 25 aus, die einen ersten Zeitpunkt der Beteiligung des jeweiligen Fahrzeugs an der Staubildung (erste Feststellung einer Grenzgeschwindigkeitsunterschreitung) und einen zweiten Zeitpunkt der Beteiligung des jeweiligen Fahrzeugs an der Stauauflösung (zweite Feststellung einer Richtgeschwindigkeitsüberschreitung) umfassen, wobei die dritten Fahrzeuge 38 und 39 in diesem Fall als erste Fahrzeuge gelten, die gemeinsam mit dem zweiten Fahrzeug die bezüglich des zweiten Fahrzeugs gültige mautbestimmende Fahrzeuggruppe bilden. Gemäß Fig. 9d erhält ein zweites Fahrzeug, dessen Stauhaltedauer geringer ist als 10 Minuten, keine Anweisung zur Erhebung einer Mautgebühr. Ein zweites Fahrzeug, dessen Stauhaltedauer nicht geringer ist als 10 Minuten aber geringer ist als 20 Minuten, erhält eine Anweisung zur Erhebung einer Mautgebühr M1 in Höhe von 1,50 EUR. Ein zweites Fahrzeug, dessen Stauhaltedauer nicht geringer ist als 20 Minuten aber geringer ist als 30 Minuten, erhält eine Anweisung zur Erhebung einer Mautgebühr M2 in Höhe von 2,50 EUR.
Mit einer solchen Differenzierung der Mautgebühren wird eine Bestrafung derjenigen Autofahrer vermieden, die keine Schuld an der hohen Verkehrsdichte tragen, die eine Staubildung begünstigt hat, sondern die Straße erst nach Kenntnisnahme einer verringerten Verkehrsdichte befahren, selbst wenn auf ihr noch ein (sich auflösender) Stau angezeigt wird.

In alternativen oder optionalen Varianten des dritten Ausführungsbeispieles kann vorgesehen sein, die Verkehrsdichte als Mautbemessungsgrundlage heranzuziehen, wodurch die Mautgebühr abhängig wird von der Anzahl der Staubildungsnachrichten die pro Zeitintervall von einer Minute gemäß Fig. 9a von der zentralen Datenverarbeitungseinrichtung 51 erfasst werden. Über eine hohe, staugefährdete Verkehrsdichte kann sich der Führer eines mautpflichtigen Fahrzeuges auch vor Befahren einer Straße oder vor seiner Entscheidung die Straße nicht zu verlassen nämlich informieren. Außerdem kann damit ein stauunabhängiges Halteverhalten von Fahrzeugen an Rastplätzen und Tankstellen mautfrei von einem mautpflichtigen Stau, der eine höhere Fahrzeugnachrichtenfrequenz aufweist, unterschieden werden.
Unabhängig davon kann ein stauunabhängiges Halteverhalten von Fahrzeugen an Rastplätzen und Tankstellen bereits in den Fahrzeugeinrichtungen 250 erkannt werden, indem ein solcher typischer Halteort durch Vergleich der Positionsdaten des Fahrzeugs zum Feststellungszeitpunkt mit Ortsdaten des Halteorts, die in der geographischen Datenbank 253 c hinterlegt sind, von dem Prozessor 253 identifiziert wird mit der Konsequenz, dass die Feststellung annulliert und/ oder das Versenden einer ereignisbedingten Nachricht unterbunden wird.

Ausgebildet zur Entgegennahme einer Anweisung zur Erhebung einer Mautgebühr mittels der Mobilfunk-Kommunikationseinrichtung 256 über das Mobilfunknetz ist der Prozessor 253 der Fahrzeugeinrichtung 250 des zweiten Fahrzeugs 25 ferner ausgebildet, die Anweisung zur Erhebung der Mautgebühr umzusetzen, in dem er die verkehrsbedingte Zusatz-Mautgebühr in dem Mautdatenspeicher 253 b abspeichert, womit die verkehrsbedingte Maut erhoben wird. Ferner ist der Prozessor ausgebildet, regelmäßig und/ oder ereignisbedingt angefallene Mautgebühren, die in dem Mautdatenspeicher 253 b abgespeichert sind, über eine Mobilfunknetz mittels der Mobilfunk-Kommunikationseinrichtung 256 der Fahrzeugeinrichtung 250 an eine zentrale Datenverarbeitungseinrichtung eines Mautbetreibers oder eines Mauterhebungsdienstleisters zu übertragen.

In einer alternativen Ausführung des dritten Ausführungsbeispieles kann auf das Versenden einer Anweisung zur Erhebung einer verkehrsbedingten Maut von der zentralen Datenverarbeitungseinrichtung 51 an das zweite Fahrzeug 25 verzichtet werden, wenn stattdessen die Fahrzeugeinrichtung 250 die Identität des zweiten Fahrzeugs übermittelt und die zentrale Datenverarbeitungseinrichtung 51 ausgebildet ist, die generierte Anweisung zur Erhebung der verkehrsbedingten Maut bezogen auf das zweite Fahrzeug 25 selbst umzusetzen, indem sie die entsprechende Mautgebühr zu einem Gebührenkonto des zweiten Fahrzeugs in einer Gebührendatenbank hinzufügt und damit - ebenso erfindungsgemäß - die verkehrsbedingte Maut für das zweite Fahrzeug 25 erhebt.

Anstelle eines Staus kann in analoger Weise auch zähfließender Verkehr bemautet werden. Anstatt mehrerer erste Fahrzeuge an einer mautbestimmenden Gruppe zu beteiligen kann auch ein einziges erstes Fahrzeug genügen, wobei die mautbestimmende Gruppe aus nicht mehr als einem ersten und einem zweiten Fahrzeug besteht.

### VIERTES AUSFÜHRUNGSBEISPIEL - GEMEINSAMKEITEN DER FAHRZEUGEINRICHTUNGEN DER VORHERGEHENDEN AUSFÜHRUNGSBEISPIELE

Den Fahrzeugeinrichtungen 250 des ersten, zweiten und dritten Ausführungsbeispiels gemeinsam ist ihre Eigenschaft, einen Streckenabschnitt im Zuge einer Befahrung zu erkennen und die Funktion der Fahrzeugeinrichtung in Abhängigkeit von der Eigenschaft des Streckenabschnittes hinsichtlich einer Pflicht zur Zahlung einer allfälligen verkehrsbedingten Mautgebühr (verkehrsbedingte Mautpflicht) oder einer Freiheit von der Zahlung einer verkehrsbedingten Mautgebühr (verkehrsbedingte Mautfreiheit) einzustellen. Sofern das Abfahren von einem mit einer verkehrsbedingten Mautpflicht belegten Streckenabschnitt das Auffahren auf einen mautfreien Streckenabschnitt bedeutet, ist die Fahrzeugeinrichtung 250 ausgebildet, die erkannte Nichtnutzung (beispielsweise das Verlassen) eines mit einer verkehrsbedingten Mautpflicht belegten Streckenabschnitts als Befahren eines mautfreien Streckenabschnittes zu interpretieren.
Dazu empfängt der Prozessor 253 Positionsdaten von der GNSS-Positionsbestimmungseinrichtung 257 und vergleicht die empfangenen Positionsdaten mit den geographischen Koordinaten von Auffahrt-Geo-Objekten aus der geographischen Datenbank 253 c, die das Befahren eines Streckenabschnitts repräsentieren, der einer verkehrsbedingen Mautpflicht unterworfen ist. Im Falle einer Übereinstimmung der Positionsdaten mit den geographischen Koordinaten eines solchen Auffahrt-Geo-Objekts eines bestimmten Streckenabschnitts, der einer verkehrsbedingen Mautpflicht unterworfen ist, versetzt der Prozessor 253 die Fahrzeugeinrichtung 250, aus einem im nächsten Absatz spezifizierten Ruhemodus in einen Berichtsmodus, in dem der Prozessor 253 die von den Sensoreinrichtungen 252, 257 und/ oder 258 empfangenen Messwerte mit Schwellwerten vergleichen, Feststellungen treffen, Daten dieser Feststellung erzeugen und im Umfang einer Nachricht mittels der Car2Car-Kommunikationseinrichtung 251 im Falle des ersten und zweiten Ausführungsbeispiels oder mittels der Mobilfunk-Kommunikationseinrichtung im Falle des dritten Ausführungsbeispiels versenden kann sowie im Falle des ersten und zweiten Ausführungsbeispiels Nachrichten von funktionsgleich arbeitenden Fahrzeugeinrichtungen mittels der Car2Car-Kommunikationseinrichtung 251 empfangen kann.
Ergibt der Vergleich der empfangenen Positionsdaten mit den geographischen Koordinaten von Abfahrt-Geo-Objekten aus der geographischen Datenbank 253 c, die das Verlassen eines Streckenabschnitts repräsentieren, der einer verkehrsbedingen Mautpflicht unterworfen ist eine Übereinstimmung der Positionsdaten mit den geographischen Koordinaten eines solchen Abfahrt-Geo-Objekts eines bestimmten Streckenabschnitts, der einer verkehrsbedingen Mautpflicht unterworfen ist, so versetzt der Prozessor 253 die Fahrzeugeinrichtung 250, aus dem im vorhergehenden Absatz beschriebenen Berichtsmodus in einen Ruhemodus, in dem der Prozessor zwar Messwerte von den Sensoreinrichtungen 252, 257 und/ oder 258 zu Fehlerermittlungszwecken empfängt, diese jedoch nicht mit Schwellwerten vergleicht und insofern keine Feststellungen treffen kann und auch keine Daten von Feststellungen im erfindungsgemäßen Sinne versenden und/ oder empfangen kann, wobei insbesondere die Car2Car-Kommunikationseinrichtung 251 zur Verwendung im erfindungsgemäßen Sinne deaktiviert ist.

Weder die Bezugszeichen der Ausführungsbeispiele noch die Ausführungsbeispiele selbst schränken den Schutzumfang der Patentansprüche, deren Bezugzeichen nur zur Veranschaulichung der Erfindung anhand der beigefügten Zeichnungen dienen, in irgendeiner Weise ein.

### BEZUGSZEICHENLISTE

- 11: erstes Fahrzeug
- 12: erstes Fahrzeug
- 13: erstes Fahrzeug
- 14: erstes Fahrzeug
- 16: erstes Fahrzeug
- 25: zweites Fahrzeug
- 38: drittes Fahrzeug
- 39: drittes Fahrzeug
- 116 b: Sende- und Empfangsantenne von Car2car-Kommunikationseinrichtung des ersten Fahrzeugs 11
- 126 b: Sende- und Empfangsantenne von Car2car-Kommunikationseinrichtung des ersten Fahrzeugs 12
- 136 b: Sende- und Empfangsantenne von Car2car-Kommunikationseinrichtung des ersten Fahrzeugs 13
- 146 b: Sende- und Empfangsantenne von Car2car-Kommunikationseinrichtung des ersten Fahrzeugs 14
- 166 b: Sende- und Empfangsantenne von Car2car-Kommunikationseinrichtung des ersten Fahrzeugs 16
- 250: Fahrzeugeinrichtung des zweiten Fahrzeugs 25
- 250 a: Gehäuse der Fahrzeugeinrichtung 250
- 250 b: Ausnehmung/ Durchbruch im Gehäuse 250 a
- 251: Car2car-Kommunikationseinrichtung der Fahrzeugeinrichtung 250
- 251 b: Sende- und Empfangsantenne von Car2car-Kommunikationseinrichtung 251
- 252: Abstandssensor
- 252 a: Ultraschallsender
- 252 b: Ultraschallempfänger
- 253: Prozessor
- 253 a: Programm- und Betriebsdatenspeicher
- 253 b: Mautdatenspeicher
- 253 c: Kartendatenspeicher/ geographische Datenbank
- 254 a: Uhr
- 254 b: Kompass
- 255: Anzeigevorrichtung
- 256: Mobilfunk-Kommunikationseinrichtung
- 256 b: Sende- und Empfangsantenne der Mobilfunk-Kommunikationseinrichtung 256
- 257: GNSS-Positionsbestimmungseinrichtung
- 257 a: GNSS-Empfänger
- 257 b: GNSS-Empfangsantenne
- 258: Tachometer
- 259: Batterie
- 259 a: Stromversorgungsanschluss
- 41: Basisstation eines Mobilfunknetzes
- 42: Basisstation eines Mobilfunknetzes
- 45: Vermittlungsstelle eine Mobilfunknetzes
- 50: Zentrale eines Mautbetreibers/ eines Mauterhebungsdienstleisters
- 51: Zentrale Datenverarbeitungseinrichtung
- 70: Satelliten eines GNSS

## Patentansprüche

1. Verfahren zur Erhebung einer verkehrsbedingten Mautgebühr für wenigstens ein an einer mautbestimmenden Gruppe von mehreren Fahrzeugen beteiligtes Fahrzeug,
**gekennzeichnet durch**
- das funktechnische Empfangen wenigstens einer ersten Nachricht, die infolge wenigstens einer von wenigstens einem ersten Fahrzeug (11, 12, 13, 14, 16) getroffenen ersten Feststellung über das Vorliegen eines außerordentlichen Verkehrsereignisses von einem ersten Fahrzeug (11, 12, 13, 14, 16) erzeugt und, Daten der ersten Feststellung umfassend, funktechnisch versendet wurde,
- das Treffen einer zweiten Feststellung über das Vorliegen eines außerordentlichen Verkehrsereignisses von einem zweiten Fahrzeug (25) und
- das Erheben einer verkehrsbedingten Mautgebühr für das erste Fahrzeug (11, 12, 13, 14, 16) und/oder das zweite Fahrzeug (25),
wenn ein Vergleich von Daten der ersten Feststellung aus der ersten Nachricht und Daten der zweiten Feststellung im Zuge einer datentechnischen Verarbeitung dieser Daten durch einen Prozessor (253, 51) eine Ähnlichkeit dieser Daten innerhalb eines vorgegebenen Rahmens ergibt, die bedingt, dass das erste Fahrzeug (11, 12, 13, 14, 16) und das zweite Fahrzeug (25) der mautbestimmenden Gruppe zugeordnet sind.

2. Verfahren nach Anspruch 1 **dadurch gekennzeichnet, dass**
die datentechnische Verarbeitung durch Vergleich von zeitlichen Daten der ersten Feststellung und der zweiten Feststellung mit dem Ergebnis abschließt, dass die zeitlichen Daten innerhalb eines vorgegebenen Zeitrahmens liegen.

3. Verfahren nach einem der vorhergehenden Ansprüche **dadurch gekennzeichnet, dass**
die datentechnische Verarbeitung durch Vergleich von örtlichen und/ oder fahrtrichtungsbezogenen Daten der ersten Feststellung und der zweiten Feststellung mit dem Ergebnis abschließt, dass die örtlichen Daten innerhalb eines vorgegebenen räumlichen Gebietes liegen und/ oder die fahrtrichtungsbezogenen Daten innerhalb eines vorgegebenen Winkelbereichs liegen.

4. Verfahren nach einem der vorhergehenden Ansprüche **dadurch gekennzeichnet, dass**
dass das erste Fahrzeug (11, 12, 13, 14, 16) und das zweite Fahrzeug (25) jeweils eine Fahrzeugeinrichtung (250) mit einer Sensoreinrichtung (252, 257, 258) aufweisen, wobei die Sensoreinrichtung (252, 257, 258) jeweils wenigstens einen Messwert einer für ein außerordentliches Verkehrsereignis repräsentativen Messgröße erfasst und die Fahrzeugeinrichtung (250) den erfassten Messwert mit einem Grenzwert für diese Messgröße vergleicht, um das außerordentliche Verkehrsereignis einer Über- oder Unterschreitung dieses Grenzwertes durch den Messwert festzustellen und Daten dieser Feststellung zu erzeugen.

5. Verfahren nach einem der vorhergehenden Ansprüche **dadurch gekennzeichnet, dass**
die datentechnische Verarbeitung der ersten Nachricht und der zweiten Feststellung von einem Prozessor (253) durchgeführt wird, der von einer Fahrzeugeinrichtung (250) des zweiten Fahrzeugs (25) umfasst und mit einer funktechnischen Empfangseinrichtung (251) des zweiten Fahrzeugs (25) zum Empfang der ersten Nachricht datentechnisch gekoppelt ist.

6. Verfahren nach Anspruch 5 **gekennzeichnet durch**
eine durch das Ergebnis datentechnischen Verarbeitung der Daten ersten Feststellung und der zweiten Feststellung bedingte Erhebung einer verkehrsbedingten Mautgebühr für das zweite Fahrzeug (25) durch
- Abzug eines Mautgebühren-Betrages von einem elektronischen Mautguthaben eines von der Fahrzeugeinrichtung des zweiten Fahrzeugs umfassten Mautguthaben-Datenspeichers (253 b) oder durch
- Hinzufügen eines Mautgebühren-Betrages zu einer elektronischen Mautschuld eines von der Fahrzeugeinrichtung des zweiten Fahrzeugs umfassten Mautschulden-Datenspeichers.

7. Verfahren nach Anspruch 5 **gekennzeichnet durch**
ein durch das Ergebnis der datentechnischen Verarbeitung von Daten der ersten Feststellung und der zweiten Feststellung bedingtes Senden einer Anweisung zur Erhebung einer verkehrsbedingten Mautgebühr von der Fahrzeugeinrichtung (250) des zweiten Fahrzeugs (25) über eine Mobilfunk-Verbindung zwischen der Fahrzeugeinrichtung (250) des zweiten Fahrzeugs (25) und einer zentralen Datenverarbeitungseinrichtung des Mautsystems an die zentralen Datenverarbeitungseinrichtung zur Erhebung der angewiesenen, auf das erste Fahrzeug (11, 12, 13, 14, 16) und/oder das zweite Fahrzeug (25) bezogenen, verkehrsbedingten Mautgebühr durch die zentralen Datenverarbeitungseinrichtung.

8. Verfahren nach einem Ansprüche 1 bis 4 **dadurch gekennzeichnet, dass**
dass die datentechnische Verarbeitung von einem Prozessor durchgeführt wird, der von einer zentralen Datenverarbeitungseinrichtung (51) des Mautsystems umfasst oder durch eine solche gebildet wird und datentechnisch mit wenigstens einer ersten funktechnischen Empfangseinrichtung zum Empfang der ersten Nachricht sowie einer zweiten Nachricht gekoppelt ist, die infolge wenigstens der von dem zweiten Fahrzeug (25) getroffenen zweiten Feststellung von dem zweiten Fahrzeug (25), Daten der zweiten Feststellung umfassend, erzeugt und funktechnisch versendet wurde.

9. Verfahren nach Anspruch 8 **dadurch gekennzeichnet, dass**
dass die erste Nachricht und die zweite Nachricht jeweils über eine Mobilfunk-Verbindung (256) an die zentrale Datenverarbeitungseinrichtung (51) gesendet werden,
eine durch das Ergebnis der datentechnischen Verarbeitung der ersten Nachrichten bedingte Anweisung zur Erhebung einer verkehrsbedingten Mautgebühr von der zentralen Datenverarbeitungseinrichtung (51) über eine Mobilfunk-Verbindung zwischen der zentralen Datenverarbeitungseinrichtung (51) und dem zweiten Fahrzeug (25) an das zweite Fahrzeug (25) gesendet wird, und die angewiesene verkehrsbedingte Mautgebühr durch eine Fahrzeugeinrichtung (250) des zweiten Fahrzeugs (25) erhoben wird.

10. Verfahren nach Anspruch 9, wobei
während des Zeitraums, der zwischen dem Senden der zweiten Nachricht von dem zweiten Fahrzeug (25) an die zentrale Datenverarbeitungseinrichtung (51) und dem Senden der Mauterhebungsanweisung oder einer Nachricht darüber, dass das Senden einer Mauterhebungsanweisung unterbleibt, von der zentralen Datenverarbeitungseinrichtung (51) an das zweite Fahrzeug (25) liegt, die Mobilfunk-Verbindung zwischen dem zweiten Fahrzeug (25) und der zentralen Datenverarbeitungseinrichtung (51) ununterbrochen aufrecht erhalten bleibt.

11. Verfahren nach einem der vorhergehenden Ansprüche **dadurch gekennzeichnet, dass** die datentechnische Verarbeitung umfasst:
- eine Sammlung von mehreren ersten Nachrichten mit zeitlichen Daten erster Feststellungen von mehreren ersten Fahrzeugen (11, 12, 13, 14, 16),
- die Zählung von ersten Nachrichten, deren zeitliche Daten innerhalb eines vorgegebenen Zeitrahmens liegen,
- die Bestimmung eines Parameters, der von der Anzahl der gezählten ersten Nachrichten abhängt sowie
- die Erkennung einer mauterheblichen Verkehrssituation anhand des Vergleiches des Parameters mit einem vorgegebenen Schwellwert, wenn der Vergleich ergibt, dass der Parameter den vorgegeben Schwellwert über- oder unterschreitet, wobei
das Erheben der verkehrsbedingten Mautgebühr nur bei Erkennung der mauterheblichen Verkehrssituation erfolgt.

12. Fahrzeugeinrichtung (250) zur Erhebung einer verkehrsbedingten Mautgebühr für wenigstens ein an einer mautbestimmenden Gruppe mehrerer Fahrzeuge beteiligtes Fahrzeug, wobei
die Fahrzeugeinrichtung (250) eine funktechnische Empfangseinrichtung (251) aufweist
**dadurch gekennzeichnet, dass**
die Fahrzeugeinrichtung (250) von einem zweiten Fahrzeug (25) umfasst und ausgebildet ist,
- selbsttätig eine Feststellung über das Vorliegen eines außerordentlichen Verkehrsereignisses zu treffen,
- wenigstens eine erste Nachricht von wenigstens einem ersten Fahrzeug (11, 12, 13, 14, 16) über die funktechnische Empfangseinrichtung (251) zu empfangen,
- Daten der ersten Nachricht und der Feststellung im Zuge einer datentechnischen Verarbeitung dieser Daten miteinander zu vergleichen,
- bei Ermittlung einer Ähnlichkeit der Daten innerhalb eines vorgegeben Rahmens eine Zuordnung des ersten Fahrzeugs (11, 12, 13, 14, 16) und des zweiten Fahrzeugs (25) zur mautbestimmenden Gruppe zu erkennen und
- infolgedessen
i) eine auf das zweite Fahrzeug (25) bezogene verkehrsbedingte Mautgebühr zu erheben und/ oder
ii) eine Anweisung zur Erhebung einer auf das erste Fahrzeug (11, 12, 13, 14, 16) und/ oder das zweite Fahrzeug (25) bezogenen verkehrsbedingten Mautgebühr über eine funktechnische Sendeeinrichtung an eine zentrale Datenverarbeitungseinrichtung zu senden.

13. Fahrzeugeinrichtung (250) nach Anspruch 12 **dadurch gekennzeichnet, dass**
die Fahrzeugeinrichtung (250) eine Sensoreinrichtung (252, 257, 258) umfasst, die wenigstens eine für wenigstens eine vorgegebene Verkehrssituation repräsentative Messgröße erfasst und
die Fahrzeugeinrichtung (250) dazu ausgebildet ist, die erfasste Messgröße mit einem Grenzwert für diese Messgröße zu vergleichen, um die Feststellung über das Vorliegen eines außerordentlichen Verkehrsereignisses anhand einer Über- oder Unterschreitung dieses Grenzwertes zu treffen und Daten dieser Feststellung zu erzeugen.

14. Zentrale Datenverarbeitungseinrichtung (51) zur Erhebung einer verkehrsbedingten Mautgebühr für wenigstens ein an einer mautbestimmenden Gruppe mehrerer Fahrzeuge beteiligtes Fahrzeug,
**dadurch gekennzeichnet, dass**
die zentrale Datenverarbeitungseinrichtung (51) ausgebildet ist,
- wenigstens eine verkehrsbedingt ausgelöste, funktechnisch versendete, erste Nachricht von wenigstens einem ersten Fahrzeug (11, 12, 13, 14, 16) zu empfangen,
- wenigstens eine verkehrsbedingt ausgelöste, funktechnisch versendete, zweite Nachricht von wenigstens einem zweiten Fahrzeug (25) zu empfangen, und
- die erste Nachricht und die zweite Nachricht zu verarbeiten,
um eine Anweisung zur Erhebung einer verkehrsbedingten Mautgebühr in Bezug auf das zweite Fahrzeug (25) zu erzeugen, wenn
ein im Zuge der datentechnischen Verarbeitung erfolgter Vergleich von Daten der ersten Nachricht und der zweiten Nachricht eine Ähnlichkeit von Daten der ersten Nachricht mit Daten der zweiten Nachricht innerhalb eines vorgegebenen Rahmens ergibt, wodurch
das erste Fahrzeug (11, 12, 13, 14, 16) und das zweite Fahrzeug (25) der mautbestimmenden Gruppe von Fahrzeugen zugeordnet sind.

15. Mautsystem **gekennzeichnet durch** mehrere, auf verschiedene Fahrzeuge (11, 12, 13, 14, 25, 16) verteilte Fahrzeugeinrichtungen (250) nach einem der Ansprüche 12 und 13 oder durch wenigstens eine zentrale Datenverarbeitungseinrichtung (51) nach Anspruch 14 und/ oder ausgebildet zur Durchführung eines Verfahrens nach einem der Ansprüche 1 bis 11.

## Claims

1. A method for charging a traffic-related toll for at least one vehicle involved in a toll-determining group of a plurality of vehicles,
**characterized by**
- receiving by radio at least one first message generated as a result of at least one first determination made by at least one first vehicle (11, 12, 13, 14, 16) about the existence of an extraordinary traffic event from a first vehicle (11, 12, 13, 14,16) and comprising data of the first determination, transmitted by radio,
- making a second determination about the existence of an extraordinary traffic event by a second vehicle (25) and
- the charging of a traffic-related toll for the first vehicle (11, 12, 13, 14, 16) and/or the second vehicle (25),
when a comparison of data of the first determination from the first message and of data of the second determination in the course of a data processing of this data by a processor (253, 51) results in a similarity of this data within a predetermined frame, which causes the first vehicle (11, 12, 13, 14, 16) and the second vehicle (25) to be assigned to the toll-determining group.

2. The method according to claim 1, **characterized in that**
the data processing by comparing temporal data of the first determination and the second determination with the result concludes that the temporal data are within a predetermined time frame.

3. The method according to one of the preceding claims, **characterized in that**
the data processing by comparing local and/or vehicle direction-related data of the first determination and the second determination with the result concludes that the local data are within a predetermined spatial area and/or the vehicle direction-related data are within a predetermined angular range.

4. The method according to one of the preceding claims, **characterized in that**
that the first vehicle (11, 12, 13, 14, 16) and the second vehicle (25) each have a vehicle mechanism (250) having a sensor mechanism (252, 257, 258), wherein the sensor mechanism (252, 257, 258) respectively detects at least one measured value of an indicator representative of an extraordinary traffic event, and the vehicle mechanism (250) compares the detected measured value with a limit value for this indicator in order to determine the extraordinary traffic event of an overshooting or undershooting of this limit value by the measured value and to generate data from this determination.

5. The method according to one of the preceding claims, **characterized in that**
the data processing of the first message and of the second determination is performed by a processor (253) which comprises a vehicle mechanism (250) of the second vehicle (25), and is data-coupled to a radio receiving mechanism (251) of the second vehicle (25) for receiving the first message.

6. The method according to claim 5, **characterized by**
charging a traffic-related toll for the second vehicle (25) caused by the result of the data processing of the data of the first determination and the second determination by - deducting a toll amount from an electronic toll credit of a toll credit data memory (253 b) comprised of the vehicle mechanism of the second vehicle or by
- adding a toll amount to an electronic toll debt of a toll debt data memory comprised of the vehicle mechanism of the second vehicle.

7. The method according to claim 5, **characterized by**
transmitting, caused by the result of the data processing of the first determination and the second determination, of an instruction for charging a traffic-related toll from the vehicle mechanism (250) of the second vehicle (25) via a mobile radio link between the vehicle mechanism (250) of the second vehicle (25) and a central data processing mechanism of the toll system to the central data processing mechanism for charging the instructed traffic-related toll related to the first vehicle (11, 12, 13, 14, 16) and/or the second vehicle (25) by the central data processing mechanism.

8. The method according to one of claims 1 to 4, **characterized in that**
that the data processing is performed by a processor which is comprised of a, or is formed by such a, central data processing mechanism (51) of the toll system and is data-coupled to at least one first radio receiving mechanism for receiving the first message and a second message, which has been generated and radio-transmitted by the second vehicle (25), comprising data of the second determination, as a result of at least the second detection made by the second vehicle (25).

9. The method according to claim 8, **characterized in that**
that the first message and the second message are each transmitted to the central data processing mechanism (51) via a mobile radio connection (256),
an instruction for the charging of a traffic-related toll, which is caused by the result of the data processing of the first messages, is transmitted by the central data processing mechanism (51) to the second vehicle (25) via a mobile radio link between the central data processing mechanism (51) and the second vehicle (25), and the instructed traffic-related toll is charged by a vehicle mechanism (250) of the second vehicle (25).

10. The method according to claim 9, wherein
during the period of time between the transmitting of the second message from the second vehicle (25) to the central data processing mechanism (51) and the transmitting of the toll-charging instruction or a message about it, that the transmitting of a toll-charging instruction which exists from the central data processing mechanism (51) to the second vehicle (25) ceases, the mobile radio connection between the second vehicle (25) and the central data processing mechanism (51) is maintained continuously uninterrupted.

11. The method according to one of the preceding claims, **characterized in that**
the data processing comprises:
- collecting several first messages with temporal data of first determinations of a plurality of first vehicles (11,12,13,14,16),
- counting first messages, the temporal data of which are within a predetermined time frame,
- determining a parameter which depends on the number of first messages counted and
- recognizing a toll-collecting traffic situation based on the comparison of the parameter with a predetermined threshold value when the comparison indicates that the parameter overshoots or undershoots the predetermined threshold value, wherein
the collection of the traffic-related toll is only performed when the toll-charging traffic situation is recognized.

12. A vehicle mechanism (250) for charging a traffic-related toll for at least one vehicle involved in a toll-determining group of a plurality of vehicles, wherein
the vehicle mechanism (250) has a radio receiving mechanism (251)
**characterized in that**
the vehicle mechanism (250) comprises a second vehicle (25) and is configured,
- to make a determination about the existence of an extraordinary traffic event,
- to receive at least a first message from at least one first vehicle (11, 12, 13, 14, 16) via the radio receiving mechanism (251),
- to compare with each other data of the first message and the determination in the course of data processing of these data,
- to recognize an assignment of the first vehicle (11, 12, 13, 14, 16) and the second vehicle (25) to the toll-determining group when a similarity of the data is ascertained within a predetermined frame, and
- as a result
i) to charge a traffic-related toll related to the second vehicle (25) and/or
ii) to transmit an instruction for charging of a traffic-related toll related to the first vehicle (11, 12, 13, 14, 16) and/or the second vehicle (25) to a central data processing mechanism via a radio transmission mechanism.

13. The vehicle mechanism (250) according to claim 12, **characterized in that**
the vehicle mechanism (250) comprises a sensor mechanism (252, 257, 258) which detects at least one indicator representative of at least one predetermined traffic situation and
the vehicle mechanism (250) is configured to compare the detected indicator with a limit value for this indicator in order to make the determination about the presence of an extraordinary traffic event on the basis of an overshooting or undershooting of this limit value and to generate data of this determination.

14. A central data processing mechanism (51) for charging a traffic-related toll for at least one vehicle involved in a toll-determining group of a plurality of vehicles,
**characterized in that**
the central data processing mechanism (51) is configured,
- to receive at least one first message from at least one first vehicle (11, 12, 13, 14, 16), triggered by traffic, and transmitted by radio,
- to receive at least one second message from at least one second vehicle (25), triggered by traffic, and transmitted by radio, and
- to process the first message and the second message
in order to generate an instruction for charging a traffic-related toll with respect to the second vehicle (25) when a comparison of data of the first message and the second message in the course of the data processing results in a similarity of data of the first message with data of the second message within a predetermined frame, whereby
the first vehicle (11, 12, 13, 14, 16) and the second vehicle (25) are assigned to the toll-determined group of vehicles.

15. A toll system **characterized by** a plurality of vehicle mechanisms (250) distributed to different vehicles (11, 12, 13, 14, 25, 16) according to one of claims 12 and 13 or by at least one central data processing mechanism (51) according to claim 14 and/or configured for performing a method according to any one of claims 1 to 11.

## Revendications

1. Procédé de perception d'un péage lié au trafic pour au moins un véhicule participant à un groupe de plusieurs véhicules, déterminant le péage,
**caractérisé par**
- la réception radioélectrique d'au moins une première information, qui suite à au moins une première constatation faite par au moins un premier véhicule (11, 12, 13, 14, 16) de la présence d'un événement extraordinaire lié au trafic est générée par un premier véhicule (11, 12, 13, 14, 16) et en englobant des données de la première constatation a été envoyée par radiotechnique,
- la détermination d'une deuxième constatation sur la présence d'un événement extraordinaire lié au trafic par un deuxième véhicule (25) et
- la perception d'un péage lié au trafic pour le premier véhicule (11, 12, 13, 14, 16) et/ ou le deuxième véhicule (25), s'il résulte d'une comparaison de données de la première constatation issue de la première information et de données de la deuxième constatation au cours d'un traitement technique desdites données par un processeur (253, 51) une analogie desdites données à l'intérieur d'un cadre prédéfini, qui conditionne que le premier véhicule (11,12,13,14, 16) et le deuxième véhicule (25) soient affectés au groupe déterminant le péage.

2. Procédé selon la revendication 1, **caractérisé en ce que**
le traitement technique de données se termine par comparaison de données temporelles de la première constatation et de la deuxième constatation, avec pour résultat que les données temporelles se situent à l'intérieur d'un cadre temporel prédéfini.

3. Procédé selon l'une quelconque des revendications précédentes, **caractérisé en ce que**
le traitement technique de données se termine par comparaison de données locales et/ ou relatives à la direction de déplacement de la première constatation et de la deuxième constatation, avec pour résultat que les données locales se situent à l'intérieur d'un territoire spatial prédéfini et/ ou que les données relatives à la direction de déplacement se situent à l'intérieur d'une plage angulaire prédéfinie.

4. Procédé selon l'une quelconque des revendications précédentes, **caractérisé en ce que**
le premier véhicule (11, 12, 13, 14, 16) et le deuxième véhicule (25) comportent chacun un dispositif de véhicule (250) avec un système de capteurs (252, 257, 258), le système de capteurs (252, 257, 258) détectant chacun au moins une valeur de mesure représentative pour un événement extraordinaire lié au trafic et le dispositif de véhicule (250) comparant la valeur de mesure détectée avec une valeur limite pour ladite valeur de mesure, pour constater l'événement extraordinaire lié au trafic d'un dépassement ou d'une non-atteinte de ladite valeur limite par la valeur mesurée et pour générer des données de ladite constatation.

5. Procédé selon l'une quelconque des revendications précédentes, **caractérisé en ce que**
le traitement technique des données de la première information et de la deuxième constatation est réalisé par un processeur (253) qui est compris dans un dispositif de véhicule (250) du deuxième véhicule (25) et qui est couplé par technique de données à un dispositif récepteur (251) radioélectrique du deuxième véhicule (25) pour réceptionner la première information.

6. Procédé selon la revendication 5, **caractérisé par**
une perception conditionnée par le résultat du traitement technique des données de la première constatation et de la deuxième constatation d'un péage lié au trafic pour le deuxième véhicule (25) par
- retrait d'un montant de péage d'un avoir électronique de péage d'une mémoire de données (253 b) d'avoirs de péage comprise dans le dispositif de véhicule du deuxième véhicule ou par
- ajout d'un montant de péage à un péage dû d'une mémoire de données de péages dus comprise dans le dispositif de véhicule du deuxième véhicule.

7. Procédé selon la revendication 5, **caractérisé par**
une émission conditionnée par le résultat du traitement technique des données de la première constatation et de la deuxième constatation d'une instruction pour la perception d'un péage lié au trafic par le dispositif de véhicule (250) du deuxième véhicule (25) via une communication par téléphonie mobile entre le dispositif de véhicule (250) du deuxième véhicule (25) et un système centralisé de traitement de données du système de péage au système centralisé de traitement de données pour la perception du péage lié au trafic annoncé, relatif au premier véhicule (11, 12, 13, 14, 16) et/ ou au deuxième véhicule (25) par le système centralisé de traitement de données.

8. Procédé selon l'une quelconque des revendications 1 à 4, **caractérisé en ce que**
le traitement technique de données est réalisé par un processeur qui est compris dans un système centralisé de traitement de données (51) du système de péage ou qui est formé par un tel et qui est couplé par technique de données avec au moins un premier dispositif récepteur radiotechnique pour la réception de la première information, ainsi que d'une deuxième information, qui suite à au moins la deuxième constatation faite par le deuxième véhicule (25) a été générée par le deuxième véhicule (25), en englobant des données de la deuxième constatation et envoyée par technique radioélectrique.

9. Procédé selon la revendication 8, **caractérisé en ce que**
la première information et la deuxième information sont envoyées chacune via une communication par téléphonie mobile (256) au système centralisé de traitement de données (51),
une instruction conditionnée par le résultat du traitement technique des données des premières informations pour la perception d'un péage lié au trafic est envoyée au deuxième véhicule (25) par le système centralisé de traitement de données (51) via une communication par téléphonie mobile entre le système centralisé de traitement de données (51) et le deuxième véhicule (25), et le péage annoncé lié au trafic est perçu par un dispositif de véhicule (250) du deuxième véhicule (25).

10. Procédé selon la revendication 9,
pendant une période qui se situe entre l'envoi de la deuxième information par le deuxième véhicule (25) au système centralisé de traitement de données (51) et l'envoi de l'instruction de perception du péage ou d'une information sur le fait que l'envoi d'une instruction de perception du péage n'a pas lieu, par le système centralisé de traitement de données (51) au deuxième véhicule (25), la communication par téléphonie mobile entre le deuxième véhicule (25) et le système centralisé de traitement de données (51) restant maintenue sans interruption.

11. Procédé selon l'une quelconque des revendications précédentes, **caractérisé en ce que** le traitement technique de données comprend :
- une collecte de plusieurs premières informations avec des données temporelles de premières constatations par plusieurs premiers véhicules (11, 12, 13, 14, 16),
- le comptage de premières informations, dont les données temporelles se situent dans un cadre temporel prédéfini,
- la détermination d'un paramètre qui dépend du nombre des premières informations comptées, ainsi que
- l'identification d'une situation de trafic déterminante en matière de péage à l'aide de la comparaison du paramètre avec une valeur seuil prédéfinie s'il résulte de la comparaison que le paramètre dépasse ou n'atteint pas la valeur seuil prédéfinie,
la perception du péage lié au trafic ne s'effectuant que lors de l'identification de la situation de trafic déterminante pour le péage.

12. Dispositif de véhicule (250) pour la perception d'un péage lié au trafic pour au moins un véhicule participant à un groupe de plusieurs véhicules déterminant le péage,
le dispositif de véhicule (250) comportant un dispositif récepteur (251) radiotechnique,
**caractérisé en ce que**
le dispositif de véhicule (250) est compris dans un deuxième véhicule (25) et conçu
- pour procéder automatiquement à une constatation concernant la présence d'un événement extraordinaire lié au trafic,
- pour réceptionner au moins une première information de la part d'au moins un premier véhicule (11, 12, 13, 14, 16) via le dispositif récepteur (251) radiotechnique,
- pour comparer entre elles des données de la première information et de la constatation, au cours d'un traitement technique desdites données,
- lors de la détermination d'une analogie des données à l'intérieur d'un cadre prédéfini, pour identifier une affectation du premier véhicule (11, 12, 13, 14, 16) et du deuxième véhicule (25) au groupe déterminant le péage et
- par conséquent,
i) pour percevoir un péage lié au trafic rapporté au deuxième véhicule (25) et/ ou
ii) pour envoyer une instruction pour la perception d'un péage lié au trafic rapporté au premier véhicule (11,12, 13, 14, 16) et/ ou au deuxième véhicule (25) via un système d'envoi radiotechnique à un système centralisé de traitement de données.

13. Dispositif de véhicule (250) selon la revendication 12, **caractérisé en ce que**
le dispositif de véhicule (250) comprend un système de capteurs (252, 257, 258) qui détecte au moins une grandeur de mesure pour au moins une situation de trafic prédéfinie et
le dispositif de véhicule (250) est conçu pour comparer la grandeur de mesure détectée avec une valeur limite pour ladite grandeur de mesure, pour procéder à la constatation concernant la présence d'un événement extraordinaire lié au trafic à l'aide d'un dépassement ou d'une non-atteinte de ladite valeur limite et pour générer des données de ladite constatation.

14. Système centralisé de traitement de données (51) pour la perception d'un péage lié au trafic pour au moins un véhicule participant à un groupe de véhicules déterminant le péage,
**caractérisé en ce que**
le système centralisé de traitement de données (51) est conçu pour
- réceptionner au moins une première information déclenchée en fonction du trafic, envoyée par technique radioélectrique de la part d'au moins un premier véhicule (11, 12, 13, 14, 16),
- réceptionner au moins une deuxième information déclenchée en fonction du trafic, envoyée par technique radioélectrique de la part d'au moins un deuxième véhicule (25), et
- pour traiter la première information et la deuxième information,
pour générer une instruction pour la perception d'un péage lié au trafic, rapporté au deuxième véhicule (25) s'il résulte d'une comparaison de données de la première information et de la deuxième information effectuée au cours du traitement technique de données une analogie de données de la première information avec des données de la deuxième information à l'intérieur d'un cadre prédéfini, suite à quoi
le premier véhicule (11, 12, 13, 14, 16) et le deuxième véhicule (25) sont affectés au groupe de véhicules déterminant le péage.

15. Système de péage **caractérisé par** plusieurs dispositifs de véhicule (250) selon l'une quelconque des revendications 12 et 13, répartis sur différents véhicules (11, 12, 13, 14, 25,16) ou par au moins un système centralisé de traitement de données (51) selon la revendication 14 et/ ou conçu pour réaliser un procédé selon l'une quelconque des revendications 1 à 11.
